(19) Europäisches Patentamt
European Patent Office
Office européen des brevets

(11) **EP 4 414 408 A1**

(12) **EUROPEAN PATENT APPLICATION**
published in accordance with Art. 153(4) EPC

(43) Date of publication:
**14.08.2024 Bulletin 2024/33**

(21) Application number: **22878567.1**

(22) Date of filing: **05.10.2022**

(51) International Patent Classification (IPC):
***C08G 64/06*** *(2006.01)* ***C08G 64/20*** *(2006.01)*
***B65D 1/00*** *(2006.01)*

(52) Cooperative Patent Classification (CPC):
**B65D 1/00; C08G 64/06; C08G 64/20**

(86) International application number:
**PCT/JP2022/037349**

(87) International publication number:
**WO 2023/058699 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.10.2021 JP 2021164866**

(71) Applicant: **Asahi Kasei Kabushiki Kaisha**
**Tokyo 1000006 (JP)**

(72) Inventor: **NAMBA, Nobutsugu**
**Tokyo 100-0006 (JP)**

(74) Representative: **Strehl Schübel-Hopf & Partner**
**Maximilianstrasse 54**
**80538 München (DE)**

(54) **AROMATIC POLYCARBONATE, AROMATIC POLYCARBONATE PRODUCTION METHOD, AND CONTAINER**

(57) Provided is an aromatic polycarbonate wherein indicators of change in elongational viscosity measured at an elongation rate of 0.005 $sec^{-1}$ for a specimen 127 mm long, 12.7 mm wide, and 0.8 mm thick under a condition of 280°C satisfy conditions (i) and (ii), and MFR at 300°C under a load of 1.2 kg is 1.5 to 4.5 (g/10 min):
<condition (i)>
an indicator of change in elongational viscosity of the following formula (1):

($log_{10}$ (Elongational viscosity [Pa·s] at 0.80 seconds) - $log_{10}$ (Elongational viscosity [Pa·s] at 0.30 seconds)) / ($log_{10}0.80$ - $log_{10}0.30$) formula (1)

in interval A (interval from 0.30 to 0.80 seconds after the start of elongation) is 0.10 to 0.30; and
<condition (ii)>
an indicator of change in elongational viscosity of the following formula (2):

($log_{10}$ (Elongational viscosity [Pa·s] at 8.0 seconds) - $log_{10}$ (Elongational viscosity [Pa·s] at 3.0 seconds)) / ($log_{10}8.0$ - $log_{10}3.0$) formula (2)

in interval B (interval from 3.0 to 8.0 seconds after the start of elongation) is 0.70 to 1.1.

EP 4 414 408 A1

[Figure 1]

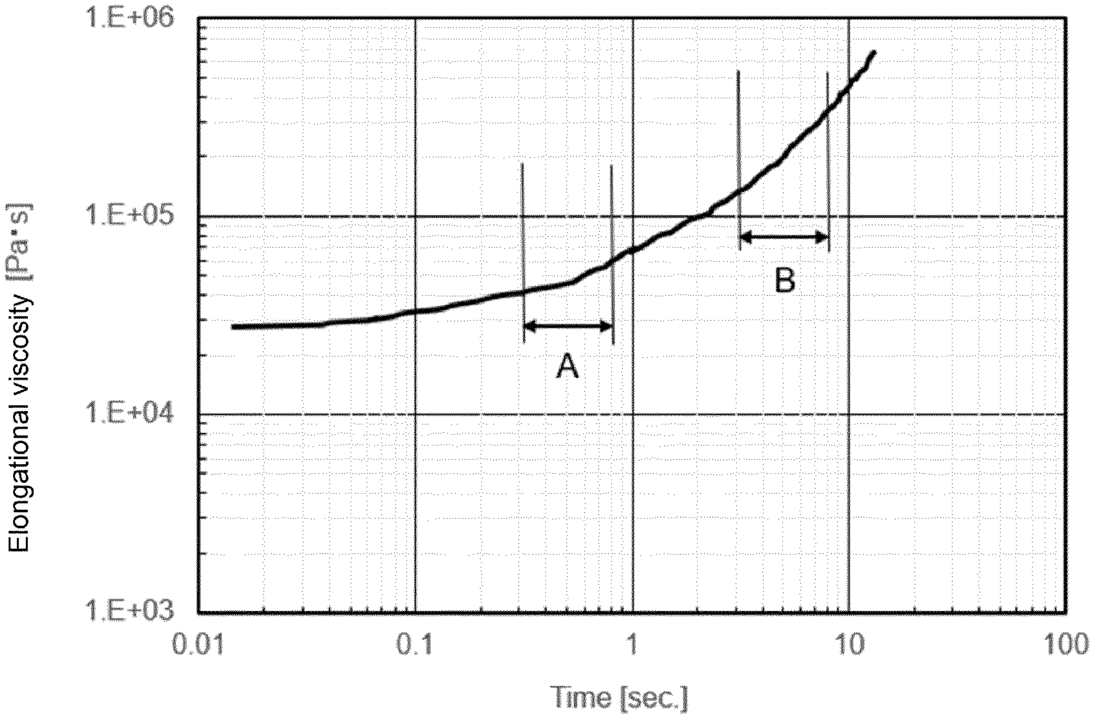
1.E+06
1.E+05
1.E+04
1.E+03
Elongational viscosity [Pa•s]
0.01
0.1
1
10
100
Time [sec.]
A
B

## Description

### Technical Field

The present invention relates to an aromatic polycarbonate, a method for manufacturing aromatic polycarbonate, and a container.

### Background Art

It has previously been recognized that aromatic polycarbonates for use of large-scale blow molding, extrusion molding, profile extrusion molding, or hollow sheet molding need to exhibit moderate melt strength, melt elasticity, and melt viscosity. As for the manufacturing of such aromatic polycarbonates, techniques of improving characteristics by usually using polyfunctional compounds such as trifunctional or tetrafunctional hydroxy compounds are disclosed (see, for example, Patent Literatures 1 to 4).

However, a problem of the aromatic polycarbonates disclosed therein is that all the aromatic polycarbonates are still susceptible to further improvement in characteristics.

A method for manufacturing an aromatic polycarbonate having a branched structure, as an object, by actively causing "Kolbe-Schmitt reaction though which an aromatic polycarbonate having a branched structure is obtained as a side reaction product" or "reaction via the formation of isoalkenylphenol" in a polymerization process in manufacturing the aromatic polycarbonate by a transesterification method has also been proposed (see, for example, Patent Literature 5).

However, a problem of such a method is that the manufactured aromatic polycarbonate has poor hue, numerous fisheyes, and low impact strength.

The present inventor discloses, as a technique of solving the problems of the conventional techniques mentioned above, a technique that relates to an aromatic polycarbonate in which a branched structure attributed to side reaction and a branched structure brought about by a polyfunctional compound are controlled to predetermined amounts and ranges (see, for example, Patent Literature 6) .

### Citation List

#### Patent Literature

Patent Literature 1: Japanese Patent Publication No. 44-17149
Patent Literature 2: Japanese Patent Laid-Open No. 51-129493
Patent Literature 3: Japanese Translation of PCT International Application Publication No. 2003-509551
Patent Literature 4: Japanese Patent Laid-Open No. 8-239466
Patent Literature 5: Japanese Patent Laid-Open No. 2004-2831
Patent Literature 6: International Publication No. WO 2012/005250

### Summary of Invention

#### Technical Problem

However, even the aromatic polycarbonate disclosed in Patent Literature 6 presents a problem such as insufficient impact resistance when a molded article is partially thin in large-scale blow molding or the like.

Accordingly, an object of the present invention is to provide an aromatic polycarbonate excellent in moldability.

#### Solution to Problem

As the result of conducting diligent studies in light of the problems of the conventional techniques mentioned above, the present inventors have consequently achieved the present invention by finding that the problems mentioned above can be solved by an aromatic polycarbonate that satisfies predetermined indicators of change in elongational viscosity.

Specifically, the present invention is as follows.

[1] An aromatic polycarbonate wherein

indicators of change in elongational viscosity measured at an elongation rate of 0.005 $sec^{-1}$ for a specimen 127 mm long, 12.7 mm wide, and 0.8 mm thick under a temperature condition of 280°C satisfy the following <condition (i)> and <condition (ii)>, and
MFR measured at a temperature of 300°C under a load of 1.2 kg is 1.5 to 4.5 (g/10 min):

<condition (i)>
a value of an indicator of change in elongational viscosity represented by the following formula (1):

($\log_{10}$ (Elongational viscosity [Pa·s] at 0.80 seconds) - $\log_{10}$ (Elongational viscosity [Pa·s] at 0.30 seconds)) / ($\log_{10}$0.80 - $\log_{10}$0.30) formula (1)

in interval A (interval from 0.30 seconds to 0.80 seconds after the start of elongation) is 0.10 to 0.30; and
<condition (ii)>
a value of an indicator of change in elongational viscosity represented by the following formula (2):

($\log_{10}$ (Elongational viscosity [Pa·s] at 8.0 seconds) - $\log_{10}$ (Elongational viscosity [Pa·s] at 3.0 seconds)) / ($\log_{10}$8.0 - $\log_{10}$3.0) formula (2)

in interval B (interval from 3.0 seconds to 8.0 seconds after the start of elongation) is 0.70 to 1.1.

[2] The aromatic polycarbonate according to [1], wherein the following <condition (iii)> and <condition (iv)> are further satisfied:

<condition (iii)>
a value of an indicator of increase in elongational viscosity represented by the following formula (3):

($\log_{10}$ (Elongational viscosity [Pa·s] at 8.0 seconds) - $\log_{10}$ (Elongational viscosity [Pa·s] at 0.30 seconds) formula (3)

in an interval from 0.30 seconds to 8.0 seconds after the start of elongation is 0.45 to 0.90; and
<condition (iv)>
a value of an indicator of an elongational viscosity represented by the following formula (4):

$\log_{10}$(Elongational viscosity [Pa·s] at 8.0 seconds)

formula (4)

at 8.0 seconds after the start of elongation is 4.90 to 5.40.

[3] The aromatic polycarbonate according to [1] or [2], wherein the value of the indicator of change in elongational viscosity represented by the formula (2) is 0.70 to 0.85.
[4] The aromatic polycarbonate according to [2] or [3], wherein the value of the indicator of increase in elongational viscosity represented by the formula (3) is 0.45 to 0.75.
[5] The aromatic polycarbonate according to any one of [2] to [4], wherein the value of the indicator of an elongational viscosity represented by the formula (4) is 4.90 to 5.05.
[6] The aromatic polycarbonate according to any one of [1] to [5], wherein the aromatic polycarbonate has a repeat unit represented by the following general formula (5) :

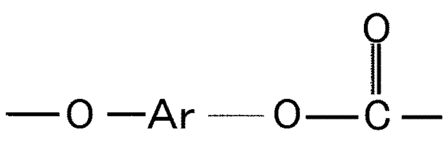
(5)

wherein Ar represents a divalent aromatic residue.

[7] The aromatic polycarbonate according to any one of [1] to [6], wherein the aromatic polycarbonate

has a repeat unit represented by the following general formula (5) in a main chain and a branched chain, and has one or more of any branched structure selected from the group consisting of branched structures represented by the following general formulas (6), (7), and (8) in the main chain and the branched chain, wherein a ratio of a total amount of substance of the branched structures to an amount of substance of the repeat unit represented by the following general formula (5) is 0.9% by mol to 5.0% by mol:

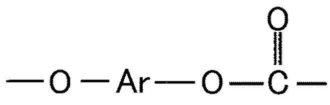
(5)

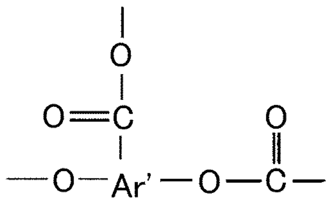
(6)

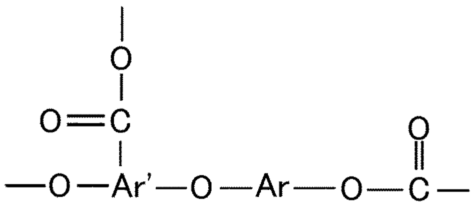
(7)

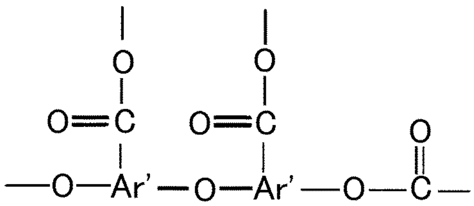
(8)

wherein Ar represents a divalent aromatic residue, and Ar' represents a trivalent aromatic residue.

[8] The aromatic polycarbonate according to any one of [1] to [7], wherein the aromatic polycarbonate

has a repeat unit represented by the following general formula (5) in a main chain and a branched chain, and has one or more of any branched structure selected from the group consisting of branched structures represented by the following general formulas (6), (7), and (8) in the main chain and the branched chain, wherein a ratio of a total amount of substance of the branched structures to an amount of substance of the repeat unit represented by the following general formula (5) is 0.9% by mol to 5.0% by mol, and the following <condition (iii)> and <condition (iv)> are further satisfied:

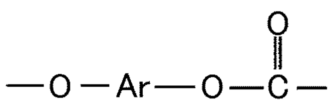
(5)

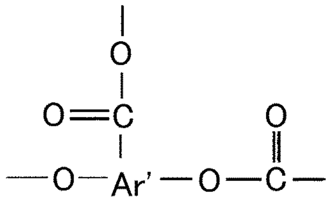

(6)

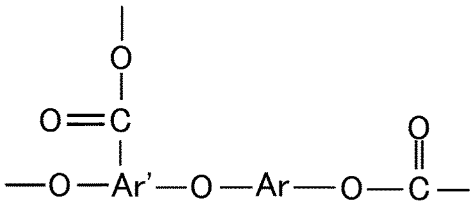

(7)

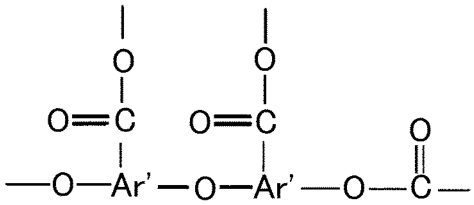

(8)

wherein Ar represents a divalent aromatic residue, and Ar' represents a trivalent aromatic residue,

<condition (iii)>
a value of an indicator of increase in elongational viscosity represented by the following formula (3):

$$(\log_{10}(\text{Elongational viscosity [Pa·s] at 8.0 seconds}) - \log_{10}(\text{Elongational viscosity [Pa·s] at 0.30 seconds}) \quad \text{formula (3)}$$

in an interval from 0.30 seconds to 8.0 seconds after the start of elongation is 0.45 to 0.90; and
<condition (iv)>
a value of an indicator of an elongational viscosity represented by the following formula (4):

$$\log_{10}(\text{Elongational viscosity [Pa·s] at 8.0 seconds}) \quad \text{formula (4)}$$

at 8.0 seconds after the start of elongation is 4.90 to 5.40.

[9] The aromatic polycarbonate according to [8], wherein the value of the indicator of an elongational viscosity represented by the formula (4) is 4.90 to 5.10.
[10] A method for manufacturing the aromatic polycarbonate according to any one of [1] to [9], comprising the steps of:

supplying a nitrogen-absorbed aromatic polycarbonate prepolymer to a guide-contact flow-down type polymerization apparatus constituting an aromatic polycarbonate manufacturing apparatus; and
allowing the prepolymer to flow down along an external surface of a guide having no heating source in itself to evaporate a low-boiling substance, wherein
in process ranges where a temperature of a polymerization raw material is 235°C or higher in a whole process of the method for manufacturing the aromatic polycarbonate, value K represented by the following formula (9):

$$K = \sum_{i=1}^{n} (Ti/220)^4 \times Hi \qquad (9)$$

wherein

i: a process range number given in an arbitrary order to a plurality of process ranges in the manufacturing method
Ti: an average temperature (°C) of the polymerization raw material in the i-th process range
Hi: an average residence time (hr) of the polymerization raw material in the i-th process range is in a range of 16.5 to 25.0.

[11] The method for manufacturing the aromatic polycarbonate according to [10], wherein

the evaporation of the low-boiling substance is performed using the guide-contact flow-down type polymerization apparatus, and
the guide-contact flow-down type polymerization apparatus satisfies the following <condition (1)> to <condition (9)>:

<condition (1)>
having: a liquid feed port; a liquid supply zone for supplying a liquid to a guide of an evaporation zone through a porous plate; the evaporation zone provided with a plurality of guides extending downward from the porous plate in a space surrounded by the porous plate, a side casing, and a bottom casing; a vacuum vent disposed in the evaporation zone; and a liquid discharge port disposed in a lowermost part of the bottom casing;
<condition (2)>
a flow path control component having a function by which a liquid to be supplied from the liquid feed port to the porous plate flows in a direction from a peripheral part of the porous plate toward a central part in the liquid supply zone is placed in the liquid supply zone;
<condition (3)>
internal cross-sectional area A ($m^2$) on a horizontal plane of the side casing of the evaporation zone satisfies the following formula (I):

$$0.7 \leq A \leq 300 \quad \text{formula (I)};$$

<condition (4)>
a ratio between the internal cross-sectional area A ($m^2$) and internal cross-sectional area B ($m^2$) on a horizontal plane of the liquid discharge port satisfies the following formula (II):

$$20 \leq A/B \leq 1000 \quad \text{formula (II)};$$

<condition (5)>
the bottom casing constituting the bottom of the evaporation zone is connected to the upper side casing at an angle of C degrees with respect to the inside thereof, wherein the angle of C (°) satisfies the following formula (III):

$$110 \leq C \leq 165 \quad \text{formula (III)};$$

<condition (6)>
length h (cm) of the guide satisfies the formula (IV) :

$$150 \leq h \leq 5000 \quad \text{formula (IV)};$$

<condition (7)>
total external surface area S ($m^2$) of all the plurality of guides satisfies the formula (V):

$$2 \leq S \leq 50000 \quad \text{formula (V);}$$

<condition (8)>
average number N of pores per $m^2$ of the porous plate (number/$m^2$) satisfies the formula (VI):

$$50 \leq N \leq 3000 \quad \text{formula (VI);}$$

and
<condition (9)>
a ratio between upper area T ($m^2$) of the porous plate including upper areas of the pores of the porous plate and total effective cross-sectional area Q ($m^2$) of the pores satisfies the following formula (VII):

$$50 \leq T/Q \leq 3000 \quad \text{formula (VII).}$$

[12] The method for manufacturing the aromatic polycarbonate according to [10] or [11], wherein an amount of a liquid used in the evaporation treatment of the low-boiling substance is 1 ton or more per hour.
[13] The method for manufacturing the aromatic polycarbonate according to [11] or [12], wherein angle E degrees (°) formed by an internal sidewall face of the liquid supply zone and the porous plate satisfies the following formula (VIII):

$$100 \leq E < 180 \quad \text{formula (VIII).}$$

[14] The method for manufacturing the aromatic polycarbonate according to any one of [11] to [13], wherein distance k (cm) between the guide closest to an internal wall face of the side casing of the evaporation zone and the internal wall face satisfies the following formula (IX):

$$5 \leq k \leq 50 \quad \text{formula (IX).}$$

[15] The method for manufacturing the aromatic polycarbonate according to any one of [11] to [14], wherein

the side casing of the evaporation zone is in a cylindrical shape with internal diameter D (cm) and length L (cm), the bottom casing connected to an underpart of the side casing is in a cone shape, and the liquid discharge port at the lowermost part of the bottom casing in a cone shape is in a cylindrical shape with internal diameter d (cm), wherein
D, L, and d satisfy the following formulas (X), (XI), (XII), and (XIII):

$$100 \leq D \leq 1800 \quad \text{formula (X)}$$

$$5 \leq D/d \leq 50 \quad \text{formula (XI)}$$

$$0.5 \leq L/D \leq 30 \quad \text{formula (XII)}$$

$$h - 20 \leq L \leq h + 300 \quad \text{formula (XIII)}$$

wherein in the formula (XIII), h represents the length of the guide.

[16] The method for manufacturing the aromatic polycarbonate according to any one of [11] to [15], wherein space volume V ($m^3$) where a liquid can exist in the liquid supply zone from the liquid feed port to an upper face of the porous plate, and upper area T ($m^2$) of the porous plate including upper areas of the pores of the porous plate satisfy the following formula (XIV):

$$0.02\ (m) \leq V/T \leq 0.5\ (m) \quad \text{formula (XIV).}$$

[17] The method for manufacturing the aromatic polycarbonate according to any one of [10] to [16], wherein

at least one of the guides is in a columnar form with external diameter r (cm), or in a pipe form that inhibits a liquid and/or a gaseous substance from entering the inside, wherein
the external diameter r satisfies the following formula (XV):

$$0.1 \leq r \leq 1 \quad \text{formula (XV).}$$

[18] The method for manufacturing the aromatic polycarbonate according to any one of [10] to [17], wherein

the guide-contact flow-down type polymerization apparatus has the plurality of guides, and
the plurality of guides are joined through a supporting material.

[19] The method for manufacturing the aromatic polycarbonate according to any one of [10] to [18], wherein

the plurality of guides are selected from the group consisting of
grid-like or net-like guides in which the individual guides are fixed through a transverse supporting material, steric guides in which the plurality of grid-like or net-like guides are anteroposteriorly arranged and fixed through a transverse supporting material, and jungle gym-like steric guides in which individual guides are anteroposteriorly and laterally fixed through a transverse supporting material.

[20] The method for manufacturing the aromatic polycarbonate according to any one of [11] to [19], wherein

the guide-contact flow-down type polymerization apparatus is further connected with at least one guide-contact flow-down type polymerization apparatus that satisfies the <condition (1)> to <condition (9)>, wherein
the two or more guide-contact flow-down type polymerization apparatuses are connected in series, in parallel, or both in series and in parallel.

[21] The method for manufacturing the aromatic polycarbonate according to [20], wherein

the guide-contact flow-down type polymerization apparatus is further connected with one guide-contact flow-down type polymerization apparatus that satisfies the <condition (1)> to <condition (9)>, wherein
total external surface area S1 ($m^2$) of the guides of the guide-contact flow-down type polymerization apparatus, and
total external surface area S2 ($m^2$) of the guides of the further connected guide-contact flow-down type polymerization apparatus
satisfy the following formula (XVI):

$$1 \leq S1/S2 \leq 20 \quad \text{(XVI).}$$

[22] The method for manufacturing the aromatic polycarbonate according to any one of [11] to [21], wherein

an inert gas absorption apparatus for allowing an inert gas to be absorbed to a melted aromatic polycarbonate prepolymer before supply to the guide-contact flow-down type polymerization apparatus is placed, wherein
the inert gas-absorbed melted prepolymer is supplied to the guide-contact flow-down type polymerization apparatus such that a pressure thereof within a melted prepolymer supply piping from the inert gas absorption apparatus to the guide-contact flow-down type polymerization apparatus is kept at 15 kPaA to 200 kPaA by a pressure regulating valve placed immediately before the entrance of the guide-contact flow-down type polymerization apparatus.

[23] The method for manufacturing the aromatic polycarbonate according to [21] or [22], wherein

in each of the guide-contact flow-down type polymerization apparatus and the further connected guide-contact flow-down type polymerization apparatus,
an inert gas absorption apparatus for allowing an inert gas to be absorbed to a melted aromatic polycarbonate prepolymer before supply to each of the guide-contact flow-down type polymerization apparatuses is placed, wherein
the inert gas-absorbed melted prepolymer is supplied to each of the guide-contact flow-down type polymerization apparatuses such that a pressure thereof within a melted prepolymer supply piping from the inert gas absorption apparatus to each of the guide-contact flow-down type polymerization apparatuses is kept at 15 kPaA to 200 kPaA by a pressure regulating valve placed immediately before the entrance of each of the guide-contact flow-down type polymerization apparatuses.

[24] A container which is a molded article of the aromatic polycarbonate according to any one of [1] to [9], the container having a housing part having a capacity of 3 to 10 gallons.
[25] The container according to [24], wherein
the housing part has a handle part formed integrally with the housing part.
[26] The container according to [24] or [25], wherein
the handle has a hollow space, and the hollow space communicates with an internal space of the housing part.

Advantageous Effects of Invention

The present invention can provide an aromatic polycarbonate excellent in moldability.

Brief Description of Drawings

[Figure 1] Figure 1 shows a schematic diagram of one example of the relationship between a predetermined time interval after the start of elongation and an elongational viscosity of an aromatic polycarbonate.
[Figure 2] Figure 2 shows a schematic configuration diagram of an inert gas absorption apparatus constituting an aromatic polycarbonate manufacturing apparatus.
[Figure 3] Figure 3 shows a schematic configuration diagram of a guide-contact flow-down type polymerization apparatus constituting an aromatic polycarbonate manufacturing apparatus.
[Figure 4] Figure 4 shows a schematic configuration diagram of upper parts of an inert gas absorption apparatus and a guide-contact flow-down type polymerization apparatus.
[Figure 5] Figure 5 shows an enlarged schematic configuration diagram of upper parts of an inert gas absorption apparatus and a guide-contact flow-down type polymerization apparatus.
[Figure 6] Figure 6 shows a schematic configuration diagram of one example of the aromatic polycarbonate manufacturing apparatus of the present embodiment.
[Figure 7] Figure 7 shows a schematic configuration diagram of another example of the aromatic polycarbonate manufacturing apparatus of the present embodiment.

Description of Embodiments

Hereinafter, the mode for carrying out the present invention (hereinafter, also referred to as the "present embodiment") will be described in detail.
The present invention is not limited by the present embodiment and can be carried out through various changes or modifications without departing from the gist of the present invention.

[Aromatic polycarbonate]

The aromatic polycarbonate of the present embodiment is an aromatic polycarbonate wherein indicators of change in elongational viscosity measured at an elongation rate of 0.005 $sec^{-1}$ for a specimen 127 mm long, 12.7 mm wide, and 0.8 mm thick under a temperature condition of 280°C satisfy <condition (i)> and <condition (ii)> given below, and a melt flow rate (hereinafter, referred to as MFR) measured at a temperature of 300°C under a load of 1.2 kg is 1.5

to 4.5 (g/10 min).

Figure 1 shows a schematic diagram of one example of the relationship between a predetermined time interval after the start of elongation and an elongational viscosity of the aromatic polycarbonate.

<Condition (i)>

A value of an indicator of change in elongational viscosity represented by the following formula (1):

$$(\log_{10} (\text{Elongational viscosity [Pa·s] at 0.80 seconds}) - \log_{10} (\text{Elongational viscosity [Pa·s] at 0.30 seconds})) / (\log_{10}0.80 - \log_{10}0.30) \quad \text{formula (1)}$$

in interval A (interval from 0.30 seconds to 0.80 seconds after the start of elongation) is 0.10 to 0.30.

The indicator of change in elongational viscosity represented by the formula (1) is 0.10 to 0.30, preferably 0.15 to 0.29, more preferably 0.18 to 0.28, further preferably 0.19 to 0.28, from the viewpoint of maintaining excellent moldability. The value of the indicator of change in elongational viscosity is 0.10 or more, whereby the occurrence of drawdown can be prevented. The value is 0.30 or less, whereby, particularly, in blow molding, uneven thickness can be suppressed, and break can be prevented from occurring during molding.

<Condition (ii)>

A value of an indicator of change in elongational viscosity represented by the following formula (2):

$$(\log_{10} (\text{Elongational viscosity [Pa·s] at 8.0 seconds}) - \log_{10}(\text{Elongational viscosity [Pa·s] at 3.0 seconds})) / (\log_{10}8.0 - \log_{10}3.0)$$

in interval B (interval from 3.0 seconds to 8.0 seconds after the start of elongation) is 0.70 to 1.10.

The value of the indicator of change in elongational viscosity represented by the formula (2) is 0.70 to 1.10, preferably 0.75 to 1.05, more preferably 0.70 to 1.00, further preferably 0.70 to 0.95, still more preferably 0.70 to 0.85 from the viewpoint of maintaining excellent moldability. The value of the indicator of change in elongational viscosity is 0.70 or more, whereby, particularly, in blow molding, uneven thickness can be suppressed, and break can be prevented from occurring during molding. The value is 1.10 or less, whereby a molded article can be prevented from being impossible to form due to solidification. The value is 1.00 or less, whereby the occurrence of fisheyes is suppressed, and a resin having favorable hue is obtained. Although a resin that satisfies the range of the formula (1) for favorable moldability has been found to cause fisheye and hue problems, a resin that achieves excellent moldability while the prevention of fisheyes and favorable hue which contradict such moldability are attained can be obtained when the formula (2) falls within a predetermined range.

The aromatic polycarbonate of the present embodiment produces the following effects: the aromatic polycarbonate is easily stretchable and excellent in moldability in a low elongated state as shown in the condition (i) because the indicator of change in elongational viscosity is 0.1 to 0.3 which means a low elongational viscosity in the interval from 0.30 seconds to 0.80 seconds after the start of elongation; and the aromatic polycarbonate is not too stretchable, is unlikely to have uneven thickness, and enhances the strength of a molded product in a highly elongated state as shown in the condition (ii) because the indicator of change in elongational viscosity is 0.70 to 1.10 which means a high elongational viscosity in the interval from 3.0 to 8.0 seconds after the start of elongation.

The aromatic polycarbonate of the present embodiment has better moldability by further satisfying the following <condition (iii)> and <condition (iv)>.

<Condition (iii)>

A value of an indicator of increase in elongational viscosity represented by the following formula (3):

$$\log_{10}(\text{Elongational viscosity [Pa·s] at 8.0 seconds}) - \log_{10}(\text{Elongational viscosity [Pa·s] at 0.30 seconds})$$

in an interval from 0.30 seconds to 8.0 seconds after the start of elongation is 0.45 to 0.90.

The value of the indicator of increase in elongational viscosity represented by the formula (3) is preferably 0.45 to 0.90, more preferably 0.45 to 0.83, further preferably 0.45 to 0.80, still more preferably 0.45 to 0.78, still further preferably 0.45 to 0.75, from the viewpoint of maintaining excellent moldability. The value of the indicator of increase in elongational viscosity is 0.45 or more, whereby uniform elongation can be performed, and, particularly, in blow molding,

uneven thickness can be suppressed. The value is 0.90 or less, whereby partial rapid elongation can be prevented, break can be prevented from occurring during molding, and a molded article can be prevented from being impossible to form due to solidification. The value is 0.80 or less, whereby the occurrence of fisheyes is suppressed, and a resin having favorable hue is obtained.

<Condition (iv)>

An indicator of an elongational viscosity represented by the following formula (4):

$$\log_{10}(\text{Elongational viscosity [Pa·s] at 8.0 seconds}) \quad \text{formula (4)}$$

at 8.0 seconds after the start of elongation is 4.90 to 5.40.

The value represented by the formula (4) is preferably 4.80 to 5.40, more preferably 4.90 to 5.10, further preferably 5.00 to 5.07, still more preferably 4.90 to 5.05, from the viewpoint of maintaining excellent moldability

The value of the formula (4) is 4.90 or more, whereby a weak portion can avoid intensive stretching, and, particularly, in blow molding, uneven thickness can be suppressed. The value is 5.40 or less, whereby partial rapid elongation is prevented; thus, break can be prevented from occurring during molding, and a molded article can be prevented from being impossible to form due to solidification. The value is 5.40 or less, whereby the occurrence of fisheyes is suppressed, and a resin having favorable hue is obtained.

The values of the formulas (1) to (4) are calculated using the value of an elongational viscosity measured at an elongation rate of 0.005 $sec^{-1}$ for a specimen 127 mm long, 12.7 mm wide, and 0.8 mm thick under a temperature condition of 280°C.

More specifically, the values of the formulas (1) to (4) are calculated using a measurement value obtained by molding aromatic polycarbonate pellets dried at 120°C for 5 hours in a hot-air dryer into a specimen 127 mm long, 12.7 mm wide, and 0.8 mm thick by an injection molding machine having a cylinder temperature of 300°C and a mold temperature of 90°C, and measuring its elongational viscosity using a rotary viscoelastic measurement rheometer (manufactured by TA Instruments Japan Inc., ARES-G2) under the following <measurement conditions>.

<Measurement conditions>

Measurement mode: elongational viscosity
Measurement jig: EVF (Extensional Viscosity Fixture)
Measurement temperature: 280°C
Residence time 1: 60 sec. (Wait For Temperature On
Residence time 2: 120 sec. (After Pre Strech)
Elongation rate: 0.05 $sec^{-1}$
Load cell: 2 kg
Ambient state: nitrogen gas stream

The aromatic polycarbonate of the present embodiment is obtained by controlling the amounts of branched structures formed in a manufacturing process, and thereby introducing the branched structures into the polymer such that the <condition (i)> to <condition (iv)> are satisfied.

The aromatic polycarbonate of the present embodiment preferably has a repeat unit represented by the following general formula (5):

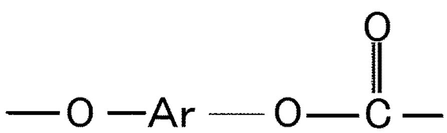
(5)

In the formula (5), Ar represents a divalent aromatic residue.

Preferably, the aromatic polycarbonate of the present embodiment has a repeat unit represented by the following

general formula (5) in a main chain and a branched chain, and has one or more of any branched structure selected from the group consisting of branched structures represented by the following general formulas (6), (7), and (8) in the main chain and the branched chain, wherein

a ratio of a total amount of substance of the branched structures to an amount of substance of the repeat unit represented by the following general formula (5) is 0.9% by mol to 5.0% by mol:

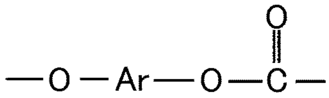 (5)

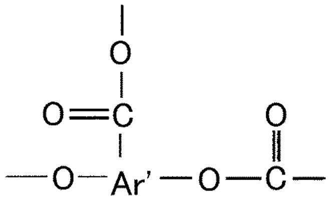 (6)

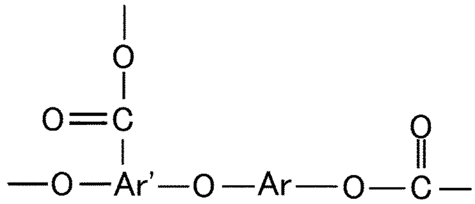 (7)

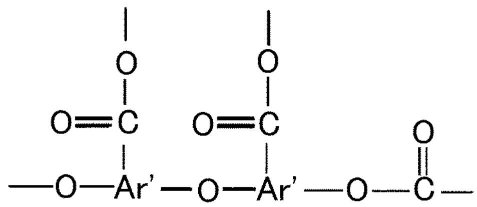 (8)

In the formulas (5), (6), (7) and (8), Ar represents a divalent aromatic residue, and Ar' represents a trivalent aromatic residue.

The ratio of the total amount of substance of the branched structures represented by the general formulas (6), (7), and (8) to the amount of substance of the repeat unit represented by the general formula (5) is preferably 0.90% by mol to 5.0% by mol, more preferably 0.95% by mol to 4.0% by mol, further preferably 1.0% by mol to 3.0% by mol, still more preferably 0.95% by mol to 2.5% by mol, still further preferably 0.95% by mol to 1.5% by mol, from the viewpoint of maintaining the impact strength of the aromatic polycarbonate of the present embodiment. The ratio of the total amount of substance of the branched structures is 1.5% by mol or less, whereby the occurrence of fisheyes is suppressed, and a resin having favorable hue is obtained.

The ratio of the total amount of substance of the branched structures represented by the general formulas (6), (7), and (8) to the amount of substance of the repeat unit represented by the general formula (5) can be measured by LC (liquid chromatography) and specifically, can be measured by a method described in Examples mentioned later.

The ratio of the total amount of substance of the branched structures represented by the general formulas (6), (7), and (8) to the amount of substance of the repeat unit represented by the general formula (5) can be controlled to the numeric range described above by adjusting polymerization conditions for the aromatic polycarbonate of the present embodiment.

The aromatic polycarbonate of the present embodiment can satisfy the <condition (i)> to <condition (iv)> by creating a high-temperature state in a manufacturing process of the aromatic polycarbonate described below, and introducing the branched structures into the polymer.

Specifically, the method for manufacturing the aromatic polycarbonate of the present embodiment is configured to comprise the steps of: supplying a nitrogen-absorbed aromatic polycarbonate prepolymer to a guide-contact flow-down type polymerization apparatus constituting an aromatic polycarbonate manufacturing apparatus; and allowing the prepolymer to flow down along an external surface of a guide having no heating source in itself to evaporate a low-boiling substance, wherein

in process ranges where a temperature of a polymerization raw material is 235°C or higher in a whole process of the method for manufacturing the aromatic polycarbonate, value K represented by the following formula (9) is in the range of 16.5 to 25.0.

$$K = \sum_{i=1}^{n} (Ti / 220)^4 \times Hi \qquad (9)$$

i: a process range number given in an arbitrary order to a plurality of process ranges in the manufacturing method
Ti: an average temperature (°C) of the polymerization raw material in the i-th process range
Hi: an average residence time (hr) of the polymerization raw material in the i-th process range

The value K represented by the general formula (9) is preferably 16.5 to 25.0, more preferably 17.5 to 24.0, further preferably 18.0 to 24.0, still more preferably 19.5 to 23.5, from the viewpoint of maintaining excellent moldability of the aromatic polycarbonate of the present embodiment. The value K is 16.5 or more, whereby, particularly, in blow molding, the occurrence of drawdown can be suppressed, uneven thickness can be prevented, and break can be prevented from occurring during molding. The value K is 25.0 or less, whereby practically sufficient impact strength is obtained in a molded product of the aromatic polycarbonate of the present embodiment.

Hue and the number of fisheyes are better as the value K is smaller, and are deteriorated as the value K is larger. When the value K exceeds 25.0, both the factors are remarkably deteriorated and the value of hue and the number of fisheyes are remarkably elevated.

[Material constituting aromatic polycarbonate]

Hereinafter, materials constituting the aromatic polycarbonate of the present embodiment are an aromatic dihydroxy compound and diaryl carbonate.

(Aromatic dihydroxy compound)

The aromatic dihydroxy compound is a compound represented by HO-Ar-OH. Ar is a divalent aromatic group, for example, phenylene, naphthylene, biphenylene, pyridylene, or a divalent aromatic group represented by $-Ar^1-Y-Ar^2-$.

In this context, $Ar^1$ and $Ar^2$ each independently represent a divalent carbocyclic or heterocyclic aromatic group having 5 to 70 carbon atoms, and Y represents a divalent alkylene group having 1 to 30 carbon atoms.

One or more hydrogen atoms in the divalent aromatic group $Ar^1$ or $Ar^2$ may be replaced with other substituents that do not adversely affect the reaction, for example, a halogen atom, an alkyl group having 1 to 10 carbon atoms, an alkoxy group having 1 to 10 carbon atoms, a phenyl group, a phenoxy group, a vinyl group, a cyano group, an ester group, an amide group, or a nitro group. Examples of the heterocyclic aromatic group include aromatic groups having one or more ring-forming nitrogen atoms, oxygen atoms, or sulfur atoms.

Examples of the divalent aromatic group $Ar^1$ or $Ar^2$ include groups such as substituted or unsubstituted phenylene, substituted or unsubstituted biphenylene, and substituted or unsubstituted pyridylene. In this context, the substituent is as mentioned above.

The divalent alkylene group Y is, for example, an organic group represented by any of the following formulas:

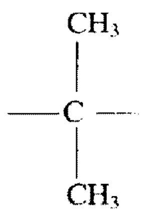
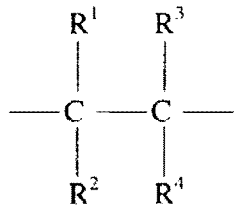
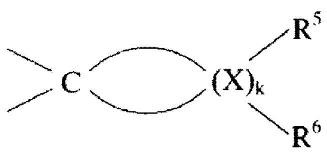

wherein $R^1$, $R^2$, $R^3$, and $R^4$ each independently represent hydrogen, an alkyl group having 1 to 10 carbon atoms, an alkoxy group having 1 to 10 carbon atoms, a cycloalkyl group having 5 to 10 ring-constituting carbon atoms, a carbocyclic aromatic group having 5 to 10 ring-constituting carbon atoms, or a carbocyclic aralkyl group having 6 to 10 carbon atoms,

k represents an integer of 3 to 11, $R^5$ and $R^6$ are individually selected as to each X and each independently represent

hydrogen or an alkyl group having 1 to 6 carbon atoms, X represents carbon, and one or more hydrogen atoms in $R^1$, $R^2$, $R^3$, $R^4$, $R^5$, or $R^6$ may be replaced with other substituents, for example, a halogen atom, an alkyl group having 1 to 10 carbon atoms, an alkoxy group having 1 to 10 carbon atoms, a phenyl group, a phenoxy group, a vinyl group, a cyano group, an ester group, an amide group, or a nitro group, without adversely affecting the reaction.

Examples of such a divalent aromatic group Ar represented by $-Ar^1-Y-Ar^2-$ include those represented by the following formulas:

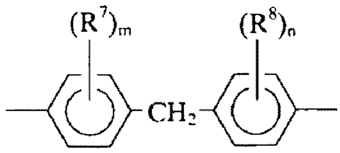
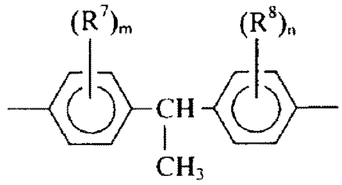
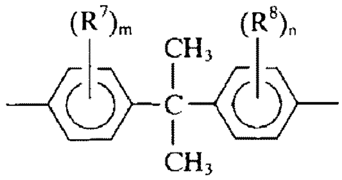
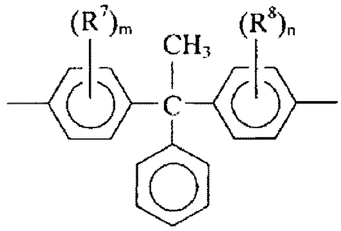
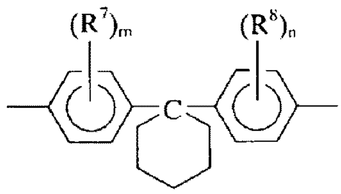
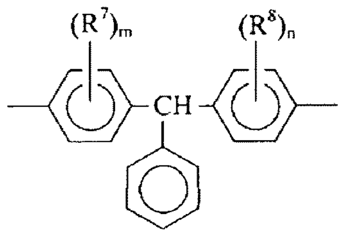
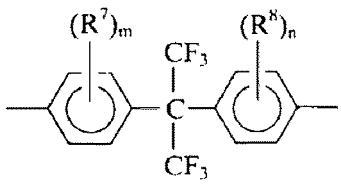
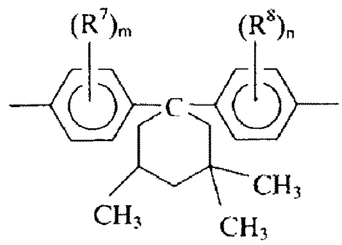
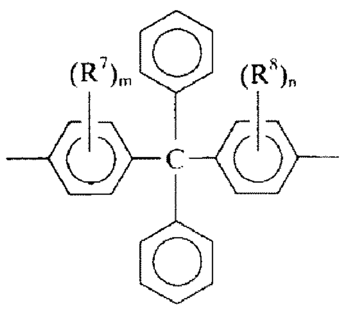
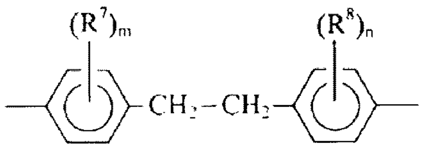

wherein $R^7$ and $R^8$ are each independently hydrogen atom, a halogen atom, an alkyl group having 1 to 10 carbon atoms, an alkoxy group having 1 to 10 carbon atoms, a cycloalkyl group having 5 to 10 ring-constituting carbon atoms, or a phenyl group, each of m and n is an integer of 1 to 4, when m is 2 to 4, the $R^7$ moieties may be the same as or different from each other, and when n is 2 to 4, the $R^8$ moieties may be the same as or different from each other.

The divalent aromatic group Ar may be represented by the following formula:

$$-Ar^1-Z-Ar^2-$$

wherein $Ar^1$ and $Ar^2$ are as mentioned above, Z represents a single bond or a divalent group such as -O-, -CO-, -S-, $-SO_2-$, -SO-, -COO-, or $-CON(R^1)-$, and $R^1$ is as mentioned above.

Examples of such a divalent aromatic group Ar represented by $-Ar^1-Z-Ar^2-$ include those represented by the following formulas:

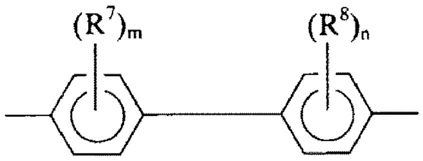
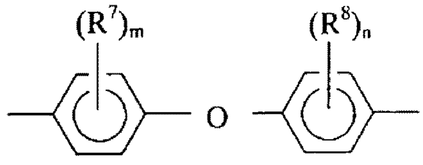
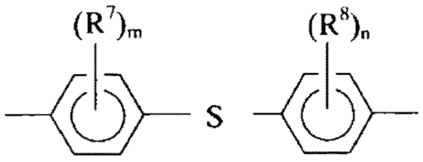
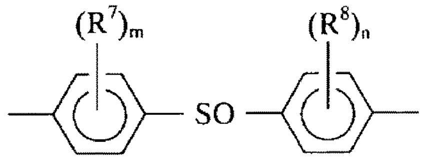
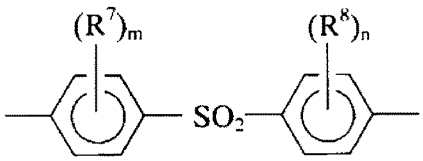
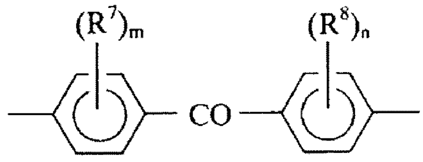
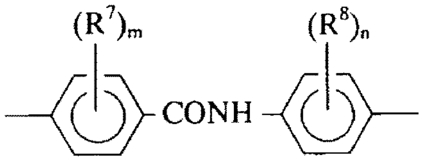
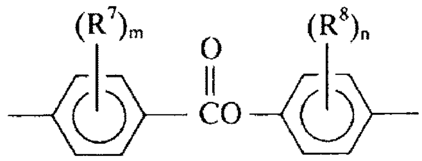
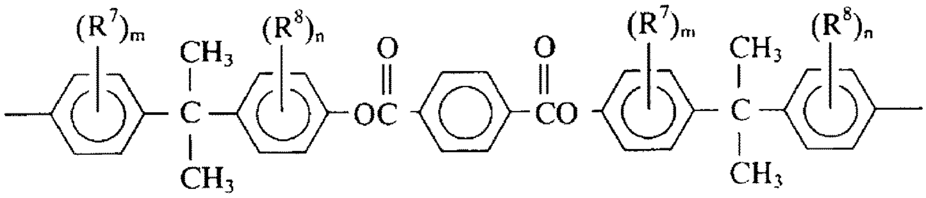

wherein $R^7$, $R^8$, m, and n are as mentioned above.

Examples of the divalent aromatic group Ar include substituted or unsubstituted phenylene, substituted or unsubstituted naphthylene, and substituted or unsubstituted pyridylene.

In the formulas (6) to (8), Ar' represents a trivalent aromatic group. Examples of the trivalent aromatic group include aromatic groups in which one hydrogen atom in the divalent aromatic group mentioned above is a bond.

The aromatic polycarbonate of the present embodiment may have an aromatic terminal group (A") derived from the aromatic dihydroxy compound or the diaryl carbonate at the ends of the main chain, the branched chain, and the branched structures shown in the formulas (5) to (8). Examples of such an aromatic terminal group include monovalent aromatic groups having 5 to 20 carbon atoms.

The aromatic terminal group Ar" is a monovalent carbocyclic or heterocyclic aromatic group, and one or more hydrogen atoms in this Ar" may be replaced with other substituents that do not adversely affect the reaction, for example, a halogen atom, an alkyl group having 1 to 10 carbon atoms, an alkoxy group having 1 to 10 carbon atoms, a phenyl group, a phenoxy group, a vinyl group, a cyano group, an ester group, an amide group, or a nitro group.

When a plurality of Ar" moieties are present, the Ar" moieties may be the same or different.

Examples of the monovalent aromatic group Ar" include a phenyl group, a naphthyl group, a biphenyl group, and a pyridyl group. These groups may each be substituted by one or more substituents mentioned above.

Preferred examples of Ar" include those represented by the following formulas:

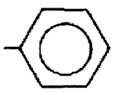
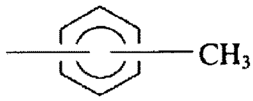
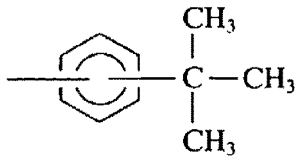
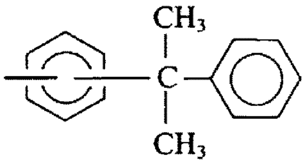
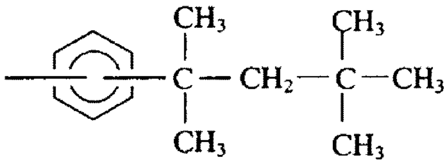

(Diaryl carbonate)

Examples of diaryl carbonate include substituted or unsubstituted diphenyl carbonates represented by the following formula:

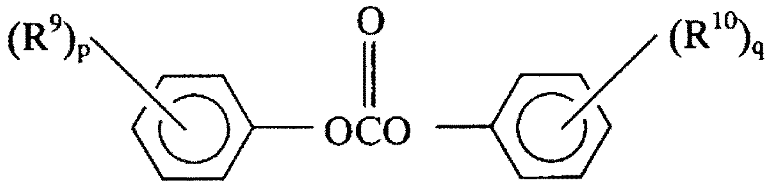

wherein $R^9$ and $R^{10}$ each independently represent a hydrogen atom, an alkyl group having 1 to 10 carbon atoms, an alkoxy group having 1 to 10 carbon atoms, a cycloalkyl group having 5 to 10 ring-constituting carbon atoms, or a phenyl group. Each of p and q is an integer of 1 to 5, when p is 2 or larger, the $R^9$ moieties may be different from each other, and when q is 2 or larger, the $R^{10}$ moieties may be different from each other.

[Physical properties of aromatic polycarbonate]

The MFR (melt flow rate) of the aromatic polycarbonate of the present embodiment measured at a temperature of 300°C under a load of 1.2 kg is 1.5 to 4.5 g/10 min, preferably 1.5 to 3.5 g/10 min, more preferably 2.0 to 3.0 g/10 min, from the viewpoint of moldability. The MFR can be measured by a method described in Examples mentioned later.

The aromatic polycarbonate of the present embodiment preferably contains few impurities. When the impurities are an alkali metal and/or an alkaline earth metal, the content of a metal element thereof is preferably 0.001 to 1 ppm. The content is more preferably 0.005 to 0.5 ppm, further preferably 0.01 to 0.1 ppm.

When the content of such a metal element is 1 ppm or less, preferably 0.5 ppm or less, more preferably 0.1 ppm or less, the physical properties of the aromatic polycarbonate as a product are not influenced.

The content mentioned above of the alkali metal and/or the alkaline earth metal can be achieved by manufacturing using the aromatic polycarbonate manufacturing apparatus of the present embodiment mentioned later. The content mentioned above of the alkali metal and/or the alkaline earth metal can be measured by IPC (inductively coupled plasma) analysis.

The halogen content of the aromatic polycarbonate of the present embodiment is preferably 10 ppb or less, more preferably 5 ppb or less, further preferably 1 ppb or less. Such a halogen content can be achieved by manufacturing using the aromatic polycarbonate manufacturing apparatus of the present embodiment with a predetermined raw material, as mentioned later. The halogen content can be measured by IPC (inductively coupled plasma) analysis.

[Method for manufacturing aromatic polycarbonate]

The method for manufacturing the aromatic polycarbonate of the present embodiment comprises the steps of:

supplying a nitrogen-absorbed aromatic polycarbonate prepolymer to a guide-contact flow-down type polymerization apparatus constituting an aromatic polycarbonate manufacturing apparatus (hereinafter, also referred to as the aromatic polycarbonate manufacturing apparatus of the present embodiment); and allowing the prepolymer to flow down along an external surface of a guide having no heating source in itself to evaporate a low-boiling substance. The low-boiling substance has a lower boiling point than that of the aromatic polycarbonate of interest and is produced as a by-product during a manufacturing process.

In process ranges where a temperature of a polymerization raw material is 235°C or higher in a whole process of the method for manufacturing the aromatic polycarbonate, K represented by the following formula (9) is preferably in the range of 16.5 to 25.0 from the viewpoint of obtaining an aromatic polycarbonate that satisfies <condition (i)> to <condition (iv)> mentioned above.

$$K = \sum_{i=1}^{n} (Ti / 220)^4 \times Hi \qquad (9)$$

i: a process range number given in an arbitrary order to a plurality of process ranges in the manufacturing method
Ti: an average temperature (°C) of the polymerization raw material in the i-th process range
Hi: an average residence time (hr) of the polymerization raw material in the i-th process range

The "polymerization raw material" conceptually encompasses a raw material of the aromatic polycarbonate, or the aromatic polycarbonate, and the "whole process of the method for manufacturing the aromatic polycarbonate" conceptually encompasses a process of forming the aromatic polycarbonate from the raw material in the method for manufacturing the aromatic polycarbonate.

The "process range" means each region such as a guide-contact flow-down type polymerization apparatus, a piping, and the like mentioned later.

i is a process range number given in an arbitrary order to a plurality of process ranges in the manufacturing method, and the separation of the process ranges is not particularly limited.

Ti is a temperature (°C) of the polymerization raw material in the i-th process range and means, for example, an average value of such temperatures, though the temperature is slightly decreased or increased in terms of process control and may vary.

Hi is a residence time (hr) of the polymerization raw material in the i-th process range and is calculated from the amount of the polymerization raw material supplied to each piping or polymerization apparatus, the size of the piping or the internal content of the polymerization apparatus, the viscosity of the polymerization raw material, and the like.

The value K is preferably in the range of 18.0 to 24.0, more preferably in the range of 20.0 to 23.0.

The pressure of the prepolymer to be supplied to the guide-contact flow-down type polymerization apparatus constituting the aromatic polycarbonate manufacturing apparatus is preferably in the range of 15 kPaA to 200 kPaA, more preferably 20 kPaA to 150 kPaA, further preferably 20 to 100 kPaA.

In the aromatic polycarbonate manufacturing apparatus of the present embodiment mentioned later, it is preferred for keeping the pressure of an inert gas-absorbed melted prepolymer at a predetermined pressure within a piping from an inert gas absorption apparatus to the guide-contact flow-down type polymerization apparatus that a predetermined pressure regulating valve should be placed immediately before the entrance of the guide-contact flow-down type polymerization apparatus when the pressure of the melted prepolymer is lower than 15 kPaA.

The inside of the guide-contact flow-down type polymerization apparatus has relatively high vacuum, and the melted prepolymer at or near a liquid feed port to the guide-contact flow-down type polymerization apparatus tends to become a low-pressure state by aspiration. Hence, an inert gas absorbed in the inert gas absorption apparatus may be separated from the melted prepolymer and aggregated. Accordingly, for preventing the separation and aggregation of such an inert gas, the pressure of the prepolymer is preferably in the numeric range described above.

Specifically, in a piping from a gear pump beneath the inert gas absorption apparatus to the guide-contact flow-down type polymerization apparatus, a relatively high pressure (from ordinary pressure to 15 kPa or higher) is maintained up to near or at a region immediately before the guide-contact flow-down type polymerization apparatus due to pressure loss of the piping, for example. Accordingly, the pressure is preferably kept at 15 kPa or higher only immediately before entry to the guide-contact flow-down type polymerization apparatus.

If the prepolymer is supplied to the guide-contact flow-down type polymerization apparatus such that the pressure of the prepolymer immediately before the entrance of the guide-contact flow-down type polymerization apparatus is a pressure lower than 15 kPaA, the pressure of the melted prepolymer within the upper part of a porous plate is unstable so that the inert gas (e.g., nitrogen) temporarily absorbed to the melted prepolymer is separated or aggregated, resulting in unstable homogeneity of the melted prepolymer. This inhibits a uniform and continuous foaming phenomenon

of the melted prepolymer within the guide-contact flow-down type polymerization apparatus. Thus, a stable product cannot be manufactured, or reduction in color, fisheye, or foreign matter such as a gel might occur easily.

If the pressure of the prepolymer cannot be kept at 15 kPa or higher, it is preferred that a pressure regulating valve or the like should be placed.

On the other hand, if the pressure exceeds 200 kPaA, the effect is not changed. Thus, a higher pressure is not practical because such a pressure places an excessive burden on a discharge gear pump or a piping of the inert gas absorption apparatus and requires improving pressure resistance.

Accordingly, the pressure at which the prepolymer is supplied to the guide-contact flow-down type polymerization apparatus is preferably in the numeric range mentioned above.

(Manufacturing apparatus for use in method for manufacturing aromatic polycarbonate)

A specific configuration of the aromatic polycarbonate manufacturing apparatus of the present embodiment for use in the method for manufacturing the aromatic polycarbonate of the present embodiment will be described below with reference to the drawings.

Figure 6 shows a schematic configuration diagram of one example of the aromatic polycarbonate manufacturing apparatus of the present embodiment.

In the aromatic polycarbonate manufacturing apparatus, polymerization raw materials and a catalyst are added to mixing tank 31 and mixed, subsequently transferred to dissolved mixture reservoirs 33A and 33B through transfer pump 32, and further transferred therefrom through transfer pumps 34A and 34B to first polymerization vessel 35 where prepolymerization is performed.

Prepolymerization is further performed in second polymerization vessel 37 via supply pump 36 which is a gear pump for discharge to obtain an aromatic polycarbonate prepolymer.

The aromatic polycarbonate prepolymer is transferred to first inert gas absorption apparatus 39 via supply pump 38, and after adjustment of the solubility of an inert gas by pressure regulating valve 41, further transferred to first guide-contact flow-down type polymerization apparatus 42 where the prepolymer is polymerized. Here, a low-molecular-weight component phenol which is a low-boiling substance is discharged from a vent.

Next, the resultant is transferred to second inert gas absorption apparatus 44 via supply pump 43, further allowed to transfer therefrom using supply pumps 46A and 46B. The solubility of an inert gas is adjusted by pressure regulating valves 47A and 47B, and the resultant is transferred to second guide-contact flow-down type polymerization apparatuses 48A and 48B connected thereto where the prepolymer is polymerized. Here, phenol is discharged from a vent.

The resultant is further transferred through supply pumps 49A and 49B, and an additive is added to post-stage devices 50A and 50B to obtain the aromatic polycarbonate of interest.

The pressure regulating valves 41, 47A, and 47B which adjust the solubility of an inert gas are not limited by their forms. The pressure regulating valves may be valves disposed in predetermined pipings or may be other devices capable of controlling a predetermined pressure.

In the method for manufacturing the aromatic polycarbonate of the present embodiment, the evaporation of the low-boiling substance is performed using a guide-contact flow-down type polymerization apparatus, and the guide-contact flow-down type polymerization apparatus preferably satisfies <condition (1)> to <condition (9)> mentioned later.

Figure 2 shows a schematic configuration diagram of the inert gas absorption apparatuses 39 and 44, and

Figure 3 shows a schematic configuration diagram of the guide-contact flow-down type polymerization apparatuses 42, 48A, and 48B.

Each inert gas absorption apparatus and each guide-contact flow-down type apparatus differ in that their internal spaces have inert gas absorption zone which performs the absorption of an inert gas and evaporation zone which performs the evaporation of a low-boiling substance, respectively, though having a basic apparatus structure in common.

Figures 4 and 5 each shown a schematic diagram of upper parts of the inert gas absorption apparatus and the guide-contact type flow-down polymerization apparatus.

For the aromatic polycarbonate manufacturing apparatus of the present embodiment, it is preferred that the guide-contact flow-down type polymerization apparatus should satisfy the following <condition (1)> to <condition (9)>.

<Condition (1)>

Having liquid feed port 1, liquid supply zone 3 for supplying a liquid to guide 4 of evaporation zone 5 through porous plate 2, the evaporation zone 5 provided with a plurality of guides 4 extending downward from the porous plate 2 in a space surrounded by the porous plate 2, side casing 10, and bottom casing 11, vacuum vent 6 disposed in the evaporation zone 5, and liquid discharge port 7 disposed in a lowermost part of the bottom casing.

<Condition (2)>

Flow path control component 20 having a function by which a liquid to be supplied from the liquid feed port 1 to the porous plate 2 flows in a direction from a peripheral part of the porous plate 2 toward a central part in the liquid supply zone 3 is placed in the liquid supply zone 3.

<Condition (3)>

Internal cross-sectional area A ($m^2$) on a horizontal plane (in Figure 3, a plane taken along the a-a' line) of the side casing 10 of the evaporation zone 5 satisfies the following formula (I):

$$0.7 \leq A \leq 300 \quad \text{formula (I).}$$

<Condition (4)>

A ratio between the internal cross-sectional area A ($m^2$) and internal cross-sectional area B ($m^2$) on a horizontal plane (in Figure 3, a b-b' plane) of the liquid discharge port 7 satisfies the following formula (II) :

$$20 \leq A/B \leq 1000 \quad \text{formula (II).}$$

The formula (II) is satisfied, whereby a melted product of an evaporatively concentrated liquid or polymer or a manufactured polymer can be discharged with an elevated melt viscosity without reducing the quality of the liquid or the polymer.

<Condition (5)>

It is preferred that the bottom casing 11 constituting the bottom of the evaporation zone 5 should be connected to the upper side casing 10 at an angle of C degrees with respect to the inside thereof, wherein the angle of C (°) satisfies the following formula (III):

$$110 \leq C \leq 165 \quad \text{formula (III).}$$

For reducing the cost of equipment, C as close as possible to 90° is preferred. Since a melted product of a concentrated liquid or polymer is moved with an elevated melt viscosity to the discharge port 7 without reducing the quality of the concentrated liquid or the polymer dropping from the lower end of the guide 4, it is preferred that C should satisfy the formula (III).

<Condition (6)>

Length h (cm) of the guide 4 satisfies the following formula (IV):

$$150 \leq h \leq 5000 \quad \text{formula (IV).}$$

The length h of the guide 4 is 150 cm or more, whereby concentration and polymerization can progress at a practically sufficient rate and quality. h is 5000 cm or less, whereby difference in liquid viscosity between an upper part and a lower part of the guide 4 is not too large, and variation in degree of concentration and variation in degree of polymerization can be prevented.

<Condition (7)>

Total external surface area S ($m^2$) of the plurality of guides 4 satisfies the following formula (V):

$$2 \leq S \leq 50000 \quad \text{formula (V).}$$

S ($m^2$) is 2 or more, whereby an amount of a liquid subjected to evaporation treatment and a production amount of a manufactured polymer which are 1 ton or more per hour can be achieved.
S ($m^2$) is 50000 or less, whereby the cost of equipment is reduced while this production amount is achieved, and variation in physical properties can be eliminated.

<Condition (8)>

Average number N of pores per $m^2$ of the porous plate (number/$m^2$) satisfies the following formula (VI):

$$50 \leq N \leq 3000 \quad \text{formula (VI)}$$

The average number N of pores (number/$m^2$) of the porous plate is a numeric value obtained by dividing the total number of pores by area (including upper areas of the pores) T ($m^2$) of an upper face of the porous plate 2.
It is preferred that the pores of the porous plate 2 should be almost uniformly arranged in the porous plate 2. Distance k (cm) between a marginal part of the porous plate 2 and an internal wall face of the evaporation zone 5 is usually preferably longer than a distance between adjacent pores. Therefore, the number of pores per unit area at the marginal part is preferably smaller than that at the central part. In the present embodiment, average number N of pores is used in this context. The range of N is more preferably $70 \leq N \leq 2000$, further preferably $100 \leq N \leq 1000$.

<Condition (9)>

A ratio between upper area T ($m^2$) of the porous plate including upper areas of the pores of the porous plate 2 and total effective cross-sectional area Q ($m^2$) of the pores of the porous plate 2 satisfies the following formula (VII):

$$50 \leq T/Q \leq 3000 \quad \text{formula (VII).}$$

T/Q described above is more preferably 100 to 2,500, further preferably 250 to 1,500.
The "effective cross-sectional area" of a pore of the porous plate refers to the area of the narrowest part at the cross section of the pore through which a liquid passes. When the guide 4 penetrates this pore, the area is obtained by subtracting the cross-sectional area of the guide 4 from the cross-sectional area of the pore.
Q ($m^2$) represents the total effective cross-sectional area of the pores.
The formulas (VI) and (VII) are important for continuously and stably performing the evaporation treatment of a large amount of a liquid, particularly, a highly viscous liquid, for a long period.
Use of the aromatic polycarbonate manufacturing apparatus of the present embodiment that satisfies the configuration mentioned above can stably manufacture a high-quality and high-performance concentrated liquid or polymer with no stain, i.e., a liquid subjected to evaporation treatment, in an amount of 1 ton or more per hour for a long period of several thousands of hours or longer, for example, 5,000 hours or longer.
The aromatic polycarbonate manufacturing apparatus of the present embodiment has such excellent effects presumably because combined effects brought about by the conditions combined appear, in addition to various reasons mentioned above.
For example, guides having a high surface area that satisfy the formulas (IV) and (V) are very effective for efficient internal stirring and surface renewal of a large amount of a liquid, a prepolymer, or a polymer supplied at a relatively low temperature, can efficiently perform the evaporation of a low-boiling substance, and are useful in obtaining an amount as large as 1 ton or more per hour of a high-quality concentrated liquid or polymer. In addition, angle C that satisfies the formula (III) can shorten a time required for a large amount of a high-quality concentrated liquid or polymer dropping from the guides 4 to be discharged from the liquid discharge port 7, and can reduce a heat history.
The performance of the guide-contact flow-down type polymerization apparatus at an industrial scale can be established for the first time by operation for a long time using large-scale manufacturing equipment. In this respect, the cost of manufacturing equipment is an important factor to be taken into consideration.
The guide-contact flow-down type polymerization apparatus constituting the aromatic polycarbonate manufacturing apparatus of the present embodiment can reduce the cost of equipment against performance as compared with conventional evaporation apparatuses or polymerization vessels.
Specific conditions or ranges required for a dimension, an angle, and the like in the guide-contact flow-down type polymerization apparatus constituting the aromatic polycarbonate manufacturing apparatus of the present embodiment are as described above and are further preferably the following ranges.

The range of the internal cross-sectional area A ($m^2$) on a horizontal plane of the side casing 10 of the evaporation zone 5 shown in the formula (I) is more preferably $0.8 \leq A \leq 250$, further preferably $1 \leq A \leq 200$.

The range of the ratio between the internal cross-sectional area A ($m^2$) and the internal cross-sectional area B ($m^2$) on a horizontal plane of the liquid discharge port 7 shown in the formula (II) is more preferably $25 \leq A/B \leq 900$, further preferably $30 \leq A/B \leq 800$.

The range of the angle of C (°) formed by the bottom casing 11 constituting the bottom of the evaporation zone 5 with respect to the inside of the upper side casing 10, shown in the formula (III) is more preferably $120 \leq C \leq 165$, further preferably $135 \leq C \leq 165$. In the case of sequentially elevating the degree of concentration or the degree of polymerization using a plurality of guides-contact flow-down type polymerization apparatuses, $C1 \leq C2 \leq C3 \leq ...$ is preferred when their corresponding angles are defined as C1, C2, C3, ...

Necessary length h (cm) of the guide 4 shown in the formula (IV) differs depending on difference in factors such as the amount, viscosity, and temperature of a liquid to be treated, the amount and boiling point of a low-boiling substance, the pressure and temperature of the evaporation zone, and a necessary degree of concentration or degree of polymerization, and the range thereof is more preferably $200 \leq h \leq 3000$, further preferably $400 < h \leq 2500$.

Necessary total external surface area S ($m^2$) of all the guides shown in the formula (V) also differs depending on difference in the same factors as above, and the range thereof is more preferably $10 \leq S \leq 40000$, further preferably $15 \leq S \leq 30000$.

In the present specification, the total external surface area of all the guides means the entire surface area of guides with which a liquid flows down in contact, and in the case of, for example, guides made of pipes, means external surface areas and excludes the surface areas of internal faces of the pipes where no liquid flows down.

As shown in Figures 2 to 4, the liquid feed port 1 is preferably disposed at an upper part of the liquid supply zone 3.

The liquid feed port 1 may be located at one site or a plurality of sites. It is preferred that the liquid feed port 1 should be arranged such that a liquid is supplied as uniformly as possible to the porous plate 2 in the liquid supply zone 3. In the case of one site, the liquid supply zone 3 is preferably disposed at an upper central part.

Flow path control component 20 having a function by which a liquid to be supplied from the liquid feed port 1 to the porous plate 2 flows mainly in a direction from a peripheral part of the porous plate 2 toward a central part in the liquid supply zone 3 is preferably placed in the liquid supply zone 3. The flow path control component 20 is effective for directing the flow of a liquid from the peripheral part of the porous plate 2 toward the central part and thereby preventing the liquid from residing for a long period in a space between a pore part (e.g., 21) of the porous plate 2 and internal sidewall face 22 of the liquid supply zone. The liquid allowed to flow from the peripheral part of the porous plate 2 toward the central part is typically supplied from pores of the porous plate present therebetween to the guides 4.

The flow path control component 20 may have any shape as long as its effects can be exerted. The transverse-sectional outline thereof is preferably similar to the transverse-sectional outline of the porous plate 2. In this context, the transverse section of the flow path control component 20 refers to a location that exhibits the largest area when the flow path control component 20 is cut at its face in a lateral direction.

The interval between the flow path control component 20 and the internal sidewall face 22 of the liquid supply zone 3 differs in preferred range depending on the amount, viscosity, etc. of a liquid to be treated. When the viscosity of a liquid to be handled is relatively high in the guide-contact flow-down type polymerization apparatus or the inert gas absorption apparatus constituting the aromatic polycarbonate manufacturing apparatus of the present embodiment, the range is usually preferably 1 cm to 50 cm, more preferably 2 cm to 30 cm, further preferably 3 cm to 20 cm.

As shown in Figures 4 and 5, there is a predetermined interval between upper internal wall face 23 of the liquid supply zone 3 and the flow path control component 20, and this interval can be arbitrarily selected and preferably minimizes a liquid residence time within the liquid supply zone 3. From such a viewpoint, this interval is preferably 1 cm to 200 cm, more preferably 2 cm to 170 cm, further preferably 3 cm to 150 cm.

As for the interval between the upper internal wall face 23 of the liquid supply zone 3 and the flow path control component 20, the flow path control component 20 may attain almost the same interval from the liquid feed port 1 to the internal sidewall face 22 of the liquid supply zone 3, or the flow path control component 20 may attain the interval that is gradually narrowed or gradually widened.

The interval between the flow path control component 20 and the porous plate 2 is usually 1 cm to 50 cm, preferably 2 cm to 30 cm, more preferably 3 cm to 20 cm.

The interval between the porous plate 2 and the flow path control component 20 may be almost the same interval from the internal sidewall face 22 of the liquid supply zone 3 to the central part of the porous plate, or the interval may be gradually narrowed or gradually widened. Flow path control component 20 that attains almost the same interval or the interval that is gradually narrowed is preferred.

The flow path control component 20 hinders the directing of a liquid supplied from the liquid feed port 1 directly to the pores of the porous plate 2 and therefore functions as a certain kind of baffle. When the porous plate 2 has a wide area, it is preferred that a portion of the supplied liquid should make a shortcut to near the central part of the porous plate 2 without passing through the peripheral part of the porous plate 2. For this reasons, in a preferred form, one or

more through-holes are disposed near a central part of the flow path control component 20 or at other appropriate parts.

For creating no "dead space" in the liquid supply zone 3, it is further preferred that an angle formed by the internal sidewall face 22 of the liquid supply zone and the porous plate 2, i.e., E degrees (°), should satisfy the following formula (VIII):

$$100 \leq E < 180 \quad \text{formula (VIII)}.$$

In this context, when the internal sidewall face 22 of the liquid supply zone 3 is planar, an angle formed by the internal sidewall face 22 and the porous plate 2 on a cut plane on a face that is perpendicular to the plane and perpendicular to an upper face of the porous plate 2 is defined as E.

When the internal sidewall face 22 is a concave curved face, an angle formed by a tangent and an upper face of the porous plate 2 at a point where a curve on a cut plane on a face that is perpendicular to the concave face and perpendicular to the upper face of the porous plate 2 starts to rise is defined as E.

Specifically, a form is preferred in which the horizontal face of the porous plate 2 and the internal sidewall face 22 are smoothly connected by forming junction R. This can prevent the polymer from residing and can prevent the occurrence of stain and fisheyes.

The range of E degrees is more preferably $120 \leq E < 180$, further preferably $145 \leq E < 180$.

It is also preferred to device a way to create no "dead space" near a junction between the upper internal wall face 23 and the internal sidewall face 22 of the liquid supply zone 3. When an angle formed by both the faces is larger than 90° or is 90° or close thereto, it is preferred to prepare a face near the junction into a concave face such that no liquid resides therein.

In the aromatic polycarbonate manufacturing apparatus of the present embodiment, it is preferred that distance k (cm) between the guide 4 closest to an internal wall face of the side casing 10 of the evaporation zone 5 and the internal wall face should satisfy the following formula (IX):

$$5 \leq k \leq 50 \quad \text{formula (IX)}.$$

When a liquid is attached to an internal wall face of the side casing 10 of the evaporation zone 5, evaporative concentration occurs on the internal wall face so that the concentrated liquid flows down on the internal wall face. However, in the side casing, the liquid attached to the internal wall face is more highly concentrated than a liquid that flows down on the guide 4 and usually has an elevated viscosity, because an external wall face is usually heated with a water vapor or a heat medium using a jacket or the like or heated with an electric heater or the like for the heat retention and/or heating of the evaporation zone 5. Such a liquid having an elevated viscosity flows down on a wall face for a longer time (residence time) and further has a higher viscosity.

In addition, heat denaturation also occurs easily due to constant heating from the external wall face. This tendency is very high, particularly, when a highly viscous liquid such as a prepolymer or a polymer is handled for use in a polymerization vessel or a polymer purification and/or recovery apparatus. In such a case, a polymer, etc. attached to the internal wall face of the evaporation zone 5 tends to be stained, increased in molecular weight, or gelled, and contamination by such a denatured product is not preferred for the polymer as a product. Thus, longer distance k (cm) between the guide 4 closest to the internal wall face and the internal wall face is preferred. In the case of an industrial apparatus, shorter distance K is preferred in consideration of manufacturing cost or for obtaining high evaporation power in an apparatus as small as possible.

In the aromatic polycarbonate manufacturing apparatus of the present embodiment, the range of k (cm) as short as possible (the formula (IX)) without adversely affecting a product is preferred.

The range of k (cm) is more preferably $10 \leq k \leq 40$, still more preferably $12 \leq k \leq 30$.

In the aromatic polycarbonate manufacturing apparatus of the present embodiment, the internal cross-sectional shape on a horizontal plane of the side casing 10 of the evaporation zone 5 in the guide-contact flow-down type polymerization apparatus may be any shape such as a polygonal, oval, or round shape.

The evaporation zone 5 is usually operated under reduced pressure and may therefore be any zone that resists such an environment, and a round shape or a shape similar thereto is preferred. Thus, the side casing 10 of the evaporation zone 5 is preferably in a cylindrical shape. In this case, it is preferred that bottom casing 11 in a cone shape should be placed on an underpart of the side casing 10 in a cylindrical shape, and liquid discharge port 7 in a cylindrical shape should be disposed on a lowermost part of the bottom casing 11.

In the guide-contact flow-down type polymerization apparatus of the aromatic polycarbonate manufacturing apparatus of the present embodiment, the side casing 10 and the bottom casing 11 of the evaporation zone 5 may be in a cylindrical shape and in a cone shape, respectively, as described above, and the liquid discharge port 7 of a

concentrated liquid or polymer may be in a cylindrical shape. In such a case, when an internal diameter of the cylindrical shape of the side casing 10 is defined as D (cm), the length thereof is defined as L (cm), and an internal diameter of the liquid discharge port 7 is defined as d (cm), it is preferred that D, L, and d should satisfy the following formulas (X), (XI), (XII), and (XIII):

$$100 \leq D \leq 1800 \quad \text{formula (X)}$$

$$5 \leq D/d \leq 50 \quad \text{formula (XI)}$$

$$0.5 \leq L/D \leq 30 \quad \text{formula (XII)}$$

$$h - 20 \leq L \leq h + 300 \quad \text{formula (XIII)}$$

wherein h represents the length (cm) of the guide 4 shown in the <condition (6)>.

In the guide-contact flow-down type polymerization apparatus, the range of D (cm) is more preferably 150 ≤ D ≤ 1500, further preferably 200 ≤ D ≤ 1200.

The range of Did is more preferably 6 ≤ Did ≤ 45, further preferably 7 ≤ D/d ≤ 40.

The range of LID is more preferably 0.6 ≤ LID ≤ 25, further preferably 0.7 ≤ L/D ≤ 20.

The range of L (cm) is more preferably h - 10 ≤ L ≤ h + 250, further preferably, h ≤ L ≤ h + 200.

For D, d, and L, it is preferred that balance between the amount of a prepolymer that can be attached to a wire and the size (D) of the polymerization vessel and balance of the size of the extraction port d in the lower part of the polymerization vessel should fall within the ranges described above.

The number of wires = polymerization vessel size (D) depends on the amount of a prepolymer supplied. For extracting a polymer that has dropped (which has a higher viscosity than that of the supplied prepolymer because polymerization progresses), the piping diameter (d) appropriate for the viscosity is necessary.

On the other hand, liquids or melted products are continuously supplied to the guides from above. Therefore, the relationships of the formulas mentioned above are satisfied, whereby liquids having almost the same viscosity or melted products with a higher degree of polymerization having almost the same melt viscosity continuously drop to the bottom casing from the lower ends of the guides. Specifically, liquids having almost the same viscosity or polymers having almost the same degree of polymerization which have been formed while flowing down on the guides accumulate in a lower part of the bottom casing so that concentrated liquids having no variation in degree of evaporation or polymers having no variation in molecular weight are continuously manufactured. This is one of excellent features of the guide-contact flow-down type polymerization apparatus constituting the aromatic polycarbonate manufacturing apparatus of the present embodiment.

The concentrated liquids or the polymers accumulating in the lower part of the bottom casing 11 are continuously extracted by discharge pump 8 through the liquid discharge port 7, and the polymers are usually continuously pelletized through an extruder or the like. In this case, an additive or the like may be added to the extruder.

In the aromatic polycarbonate manufacturing apparatus of the present embodiment, it is preferred that space volume V ($m^3$) where a liquid can exist in the liquid supply zone 3 from the liquid feed port 1 (junction between the liquid feed port 1 and an upper internal wall of the liquid supply zone 3) to an upper face of the porous plate 2, and upper area T ($m^2$) of the porous plate 2 including upper areas of the pores should satisfy the following formula (XIV):

$$0.02\ (m) \leq V/T \leq 0.5\ (m) \quad \text{formula (XIV).}$$

The space volume V ($m^3$) is a substantial liquid volume in the liquid supply zone 3 during continuous operation of the guide-contact flow-down type polymerization apparatus and excludes the volume of the flow path control component 20.

The amount of a liquid retained in the liquid supply zone 3 is V ($m^3$). A smaller amount of this V reduces a residence time in the liquid supply zone 3 and is free from an adverse effect ascribable to heat denaturation. When the amount of a liquid subjected to evaporation treatment is 1 ton/hr or more and for stably obtaining a concentrated liquid and/or polymer having a predetermined degree of concentration or degree of polymerization for a long period, it is preferred to supply a liquid as evenly as possible to the pores of the porous plate 2. For this reason, the value of V/T is preferably in the range of the formula (XIV). The range of the value of V/T is more preferably 0.05 (m) ≤ V/T ≤ 0.4 (m),

further preferably 0.1 (m) ≤ V/T ≤ 0.3 (m).

In the guide-contact flow-down type polymerization apparatus of the aromatic polycarbonate manufacturing apparatus of the present embodiment, it is preferred that the space volume V ($m^3$) where a liquid can exist in the liquid supply zone 3, and space volume Y ($m^3$) of the evaporation zone 5 should satisfy the following formula:

$$10 \leq Y/V \leq 500.$$

For stably and efficiently performing the evaporation treatment of a large amount of a liquid per unit time for a long time without causing reduction in physical properties by heat denaturation, the value of Y/V is preferably in this range. The range of the value of Y/V is more preferably 15 ≤ Y/V ≤ 400, further preferably 20 ≤ Y/V ≤ 300.

The space volume Y ($m^3$) of the evaporation zone 5 is a space volume from a lower face of the porous plate 2 to the liquid discharge port 7 and includes volumes occupied by the guides.

In the guide-contact flow-down type polymerization apparatus constituting the aromatic polycarbonate manufacturing apparatus of the present embodiment, when one guide 4 is in a columnar form with external diameter r (cm), or in a pipe form that inhibits a liquid, a gaseous substance, or a melted prepolymer from entering the inside, it is preferred that the external diameter r (cm) should satisfy the following formula (XV):

$$0.1 \leq r \leq 1 \quad \text{formula (XV).}$$

The guides 4 allow evaporative concentration or polymerization reaction to progress while a liquid or a melted prepolymer flows down thereon. The guides 4 also have a function of retaining the liquid or the melted prepolymer for a certain time. This retention time is related to an evaporation time or a polymerization reaction time. The liquid viscosity or the melt viscosity thereof is elevated with the progression of evaporation or polymerization. Therefore, the retention time and the amount of the liquid or the melted prepolymer retained are increased. The amount of the liquid or the melted prepolymer retained by each guide 4 differs depending on the external surface area of the guide 4, i.e., the external diameter thereof in the case of a columnar form or a pipe form, even if the melt viscosity is the same.

The guides 4 placed in the guide-contact flow-down type polymerization apparatus need to be strong enough to support the masses of the guides 4 themselves as well as the mass of the retained liquid, melted prepolymer, or polymer. In this context, the thicknesses of the guides 4 are important. In the case of a columnar form or a pipe form, it is preferred to satisfy the formula (XV).

When the external diameter r (cm) of the guide 4 is 0.1 or more, stable operation for a long time is possible in terms of strength. r (cm) is 1 or less, whereby the guides themselves can be prevented from becoming very heavy, and inconvenience such as the thickness of the porous plate 2 that must be very large for retaining the guides in the guide-contact flow-down type polymerization apparatus, for example, can be circumvented. Besides, the number of parts having too large an amount of a liquid, a melted prepolymer, or a polymer retained can be prevented from being increased, and inconvenience such as large variation in degree of concentration or in molecular weight can be circumvented.

In this context, the range of the external diameter r (cm) of the guide 4 is more preferably 0.15 ≤ r ≤ 0.8, further preferably 0.2 ≤ r ≤ 0.6.

The positional relationship between the guides 4 and the porous plate 2 and the positional relationship between the guides 4 and the pores of the porous plate 2 are not particularly limited as long as a liquid, a raw material-melted prepolymer, or a polymer flows down in contact with the guides 4.

The guides 4 and the porous plate 2 may be in contact with each other or may be in no contact with each other.

It is preferred that the guides 4 should be placed so as to correspond to the pores of the porous plate 2, though the positional relationship is not limited thereto. This is because design can be made such that a liquid, a raw material-melted prepolymer, or a polymer dropping from the porous plate 2 comes into contact with the guides 4 at appropriate positions, without being limited by the form in which the guides 4 are placed so as to correspond to the pores of the porous plate 2.

Preferred examples of the form in which the guides 4 are placed so as to correspond to the pores of the porous plate 2 include (1) a way in which the upper ends of the guides 4 are fixed to an underpart or the like of the flow path control component 20 so that the center of each of the guides 4 corresponds to the center of each of the pores in a state where the guides 4 penetrate central parts or their neighborhoods of the pores of the porous plate 2, (2) a way in which the upper ends of the guides 4 are fixed to marginal parts at upper ends of the pores of the porous plate 2 so that the guides 4 are disposed in a state where the guides 4 penetrate the pores of the porous plate 2, and (3) a way in which upper ends of the guides 4 are fixed to a lower face of the porous plate 2.

Example of the method for allowing a liquid, a raw material-melted prepolymer, or a polymer to flow down along the guides 4 through the porous plate 2 include a method of allowing the liquid, the raw material-melted prepolymer, or

the polymer to flow down by a liquid head or a self-weight, and a method of extruding the liquid, the raw material-melted prepolymer, or the polymer from the porous plate 2 by pressurization using a pump or the like. The method is preferably a method of supplying a predetermined amount of the liquid, the raw material-melted prepolymer, or the polymer to the liquid supply zone 3 under pressurization using a supply pump, and the liquid, the raw material-melted prepolymer, or the polymer directed to the guides 4 through the porous plate 2 flow down along the guides by a self-weight.

In the aromatic polycarbonate manufacturing apparatus of the present embodiment, a preferred material of such guides 4 is selected from among, for example, stainless steel, carbon steel, metals such as Hastelloy, nickel, titanium, chromium, aluminum, and other alloys, and a highly heat-resistant polymer material. Stainless steel is particularly preferred.

The surfaces of the guides 4 may be variously treated, if necessary, by, for example, plating, lining, passivation treatment, acid washing, washing with a solvent, phenol, or the like.

The aromatic polycarbonate manufacturing apparatus of the present embodiment can stably (in the case of polymer manufacturing, without variation in molecular weight, etc.) manufacture a high-quality and high-performance concentrated liquid or polymer that is not stained, has favorable hue, and is excellent in mechanical physical properties for a long period at an industrial scale at a fast evaporation rate or a fast polymerization rate, probably for the following reasons.

Specifically, in the guide-contact flow-down type polymerization apparatus constituting the aromatic polycarbonate manufacturing apparatus of the present embodiment, a raw material liquid is directed from the liquid feed port 1 via the liquid supply zone 3 and the porous plate 2 to the guides 4 and concentrated while flowing down along the guides 4, or the degree of polymerization is elevated during this flow-down. In this case, a liquid or a melted prepolymer is subjected to effective internal stirring and surface renewal while flowing down along the guides 4, and a low-boiling substance is effectively extracted. Therefore, concentration or polymerization progresses at a fast rate. Since the viscosity thereof is elevated with the progression of concentration or polymerization, tack strength to the guides 4 is increased, and the amount of a liquid or a melted product adhering to the guides 4 is increased downhill along the guides 4. This means that the residence time on the guides 4, i.e., the evaporation time or the polymerization reaction time, of the liquid or the melted prepolymer is increased. Furthermore, the liquid or the melted prepolymer flowing down by a self-weight while supported by the guides 4 has a very wide surface area per mass, and its surface renewal is efficiently performed. This can readily achieve increase in molecular weight in the latter half of evaporative concentration or polymerization in a highly viscous region, which is absolutely impossible for conventionally known evaporation apparatuses or mechanical stirring type polymerization vessels. This is one of the excellent features of the aromatic polycarbonate manufacturing apparatus of the present embodiment.

In the guide-contact flow-down type polymerization apparatus constituting the aromatic polycarbonate manufacturing apparatus of the present embodiment, the amounts of liquids or melted products adhering to the guides 4 are increased in the latter half of evaporation or polymerization. Because of a mere tack retaining power appropriate for the viscosity thereof, almost the same amount of liquids or melted products having almost the same viscosity are supported by the respective guides 4 at the same height of the plurality of guides 4. On the other hand, since liquids or melted products are continuously supplied to the guides 4 from above, liquids having almost the same viscosity or melted products with a higher degree of polymerization having almost the same melt viscosity continuously drop to the bottom casing 11 from the lower ends of the guides 4. Specifically, liquids having almost the same viscosity or polymers having almost the same degree of polymerization which have been formed while flowing down on the guides 4 accumulate in a lower part of the bottom casing 11 so that concentrated liquids having no variation in degree of evaporation or polymers having no variation in molecular weight are continuously manufactured. This is one of the excellent features of the aromatic polycarbonate manufacturing apparatus of the present embodiment. The concentrated liquids or the polymers accumulating in the lower part of the bottom casing 11 are continuously extracted by discharge pump 8 through the liquid discharge port 7, and the polymers are usually continuously pelletized through an extruder or the like. In this case, an additive or the like may be added to the extruder.

The porous plate 2 constituting the guide-contact flow-down type polymerization apparatus is usually selected from a flat plate, a corrugated plate, a plate having a thick central part, and the like. The transverse-sectional shape of the porous plate 2 is usually selected from shapes such as round, elongated, triangular, and polygonal shapes.

The transverse sections of the pores of the porous plate are usually selected from shapes such as round, elongated, triangular, slit, polygonal, and star shapes.

The cross-sectional area of each pore is in the range of usually 0.01 to 100 $cm^2$, preferably 0.05 to 10 $cm^2$, more preferably 0.1 to 5 $cm^2$. The interval between the pores is usually 1 to 500 mm, preferably 10 to 100 mm, in terms of the distance between the centers of the pores. The pores of the porous plate 2 may be through-holes of the porous plate 2 or may be pores derived from tubes mounted to the porous plate 2. The pores may be in a tapered shape.

In the guide-contact flow-down type polymerization apparatus, it is preferred for the porous plate 2 and its pores that the formula (VI) and the formula (VII) should be satisfied, as mentioned above.

The guides 4 constituting the guide-contact flow-down type polymerization apparatus have no heating source

(e.g., heat medium or electric heater) inside the guides themselves and are preferably constituted by a material having a very large ratio of a length in the direction perpendicular to the cross section to an average cross-sectional outer perimeter in the horizontal direction. The ratio of (length in the direction perpendicular to the cross section / average cross-sectional outer perimeter in the horizontal direction) is usually in the range of 10 to 1,000,000, preferably in the range of 50 to 100,000.

The cross-sectional shapes in the horizontal direction of the guides 4 are usually selected from shapes such as round, elongated, triangular, rectangular, polygonal, and star shapes. The cross-sectional shapes of the guides 4 may be the same or different in the length direction. The guides 4 may be in a hollow shape. Since the guides 4 constituting the aromatic polycarbonate manufacturing apparatus of the present embodiment have no heating source in themselves, a large feature thereof is no fear of heat denaturation of a liquid on the surfaces of the guides 4.

The guides 4 may each be made of a single substance such as wire, a thin rod, or a thin pipe that inhibits a liquid or a melted prepolymer from entering the inside, or may be made of a combination of a plurality of substances by a method such as intertwining thereof. Alternatively, net-like guides or punching plate-like guides may be used.

The guides 4 may have a smooth surface or surface asperities, or their surfaces may partially have a protrusion or the like. The guides 4 are preferably in a columnar form such as wire or thin rod form, in the thin pipe form described above, net-like guides, or punching plate-like guides.

A particularly preferred form of the guide-contact flow-down type polymerization apparatus constituting the aromatic polycarbonate manufacturing apparatus of the present embodiment capable of manufacturing a high-quality concentrated liquid or polymer at an industrial scale (production amount, long-term stable manufacturing, etc.) is configured to have a plurality of guides, and the plurality of guides 4 are joined through a supporting material. Examples thereof include configurations in which a plurality of respective guides 4 in a wire or thin rod form or in the thin pipe form are joined at appropriate vertical intervals using a transverse supporting material from upper to lower parts of the guides 4.

Specific examples of the guides include: grid-like or net-like guides in which a plurality of guides 4 in a wire or thin rod form or in the thin pipe form are fixed at appropriate vertical intervals, for example, 1 cm to 200 cm intervals, using a transverse supporting material from upper to lower parts of the guides 4; steric guides in which a plurality of grid-like or net-like guides are anteroposteriorly arranged and joined at appropriate vertical intervals, for example, 1-cm to 200-cm intervals, using a transverse supporting material; and jungle gym-like steric guides in which a plurality of guides 4 in a wire or thin rod form or in the thin pipe form are anteroposteriorly and laterally fixed at appropriate vertical intervals, for example, 1-cm to 200-cm intervals, using a transverse supporting material.

The transverse supporting material is not only useful for keeping the intervals between the guides almost the same, but useful in enhancing the strength of guides that are in a planar or curved shape as a whole or guides that are steric as a whole. Such a supporting material may be made of the same material or a different material as or from that of the guides.

When the liquid contains a substance having a lower boiling point than that of this liquid, the guide-contact flow-down type polymerization apparatus constituting the aromatic polycarbonate manufacturing apparatus of the present embodiment is an apparatus having a function of evaporating the lower-boiling substance from the liquid.

The liquid may have ordinary temperature and is usually supplied in a heated state from the liquid feed port 1 to the guide-contact flow-down type polymerization apparatus. A jacket or the like is usually preferably placed on an external wall face of this guide-contact flow-down type polymerization apparatus. The heating and heat retention of the liquid supply zone 3, the flow path control component 20, or the porous plate 2 or the heat retention of the evaporation zone 5 or the porous plate 2 are performed by heating with a water vapor, a heat medium, or the like through this jacket, if necessary.

The guide-contact flow-down type polymerization apparatus constituting the aromatic polycarbonate manufacturing apparatus of the present embodiment is not only used as an apparatus for mere concentration of liquids, but can be used as an evaporation apparatus targeting relatively highly viscous liquids, such as a polymerization apparatus for a condensation polymer, a purification apparatus for thermoplastic polymers containing low-boiling substances such as monomers, oligomers, or by-products, or a separation and recovery apparatus of thermoplastic polymers from their solutions.

Thus, a monomer for manufacturing a condensation polymer, a mixture of two or more monomers, a prepolymer of a condensation polymer, or a melted liquid of a condensation polymer, the melted liquid containing a by-product which is a low-boiling substance formed through polycondensation reaction, is used as the liquid to be supplied from the liquid supply zone 3, whereby the guide-contact flow-down type polymerization apparatus constituting the aromatic polycarbonate manufacturing apparatus of the present embodiment can improve the degree of polymerization of the prepolymer of a condensation polymer and/or the polymer by evaporatively removing the low-boiling substance from the melted liquid.

Preferred examples of the condensation polymer include: polycarbonates such as aliphatic polycarbonate, aromatic polycarbonate, and various co-polycarbonates; and polyester polycarbonates.

Use of the aromatic polycarbonate manufacturing apparatus having the guide-contact flow-down type polymerization apparatus mentioned above can stably manufacture a high-purity and high-performance condensation polymer

with no stain, gelled substance, or solid foreign matter and without variation in molecular weight for a long time.

The guide-contact flow-down type polymerization apparatus constituting the aromatic polycarbonate manufacturing apparatus of the present embodiment is suitable for evaporatively removing a low-boiling substance from a relatively highly viscous liquid.

For example, in the case of using the guide-contact flow-down type polymerization apparatus as a polymerization vessel for condensation polymers, this polymerization vessel is free from the inevitable disadvantage of conventionally known polymerization vessels that a portion of a liquid resides while heated for a long time at some location, whereby the residing liquid causes denaturation such as staining, gelling, cross-linking, excessive increase in molecular weight, solidification, burning, or carbonization, and such a denatured product gradually or intensively contaminates a polymer. The guide-contact flow-down type polymerization apparatus constituting the aromatic polycarbonate manufacturing apparatus of the present embodiment has excellent effects that are not found in conventional polymerization vessels, in addition to the absence of such a disadvantage.

Specifically, the temperature of reaction in manufacturing aromatic polycarbonate by polymerizing a melted prepolymer obtained from, for example, an aromatic dihydroxy compound and diaryl carbonate, usually needs to be in the range of 200 to 350°C. Particularly, in the latter half of polymerization, the viscosity thereof is quickly elevated, and an aromatic monohydroxy compound, which is by-products, formed through equilibrium reaction from the resulting ultrahigh-viscosity substance must be extracted. Therefore, in the case of using a conventional polymerization vessel, for example, a horizontal biaxial stirring type reactor for an ultrahigh-viscosity polymer, the reaction must be performed at a high temperature of 300°C or higher and further under high vacuum of 133 Pa or less for a long time. In addition, a high-molecular-weight form for a sheet, etc. is difficult to manufacture.

However, in the guide-contact flow-down type polymerization apparatus constituting the aromatic polycarbonate manufacturing apparatus of the present embodiment, efficient surface renewal with internal stirring is performed. Therefore, the polymerization reaction can progress at a relatively low temperature. Thus, the reaction temperature is preferably 100 to 290°C, further preferably 150 to 270°C. A feature of the aromatic polycarbonate manufacturing apparatus of the present embodiment is that polymerization can sufficiently progress at a lower temperature than that of conventional polymerization vessels based on a mechanical stirring scheme. This constitutes one of the factors by which high-quality aromatic polycarbonate with no stain and no reduction in physical properties can be manufactured.

Furthermore, conventionally known polymerization vessels have the disadvantage that air or the like leaks into a seal part of a stirrer under high vacuum, causing contamination by foreign matter, for example. By contrast, in the guide-contact flow-down type polymerization apparatus constituting the aromatic polycarbonate manufacturing apparatus of the present embodiment, the chance of leak of air or the like thereinto or contamination by foreign matter is very small because of the absence of mechanical stirring and the absence of a seal part of a stirrer. Thus, high-purity and high-performance aromatic polycarbonate can be manufactured.

In the case of manufacturing a condensation polymer using the aromatic polycarbonate manufacturing apparatus of the present embodiment, a reaction rate can be enhanced by removing a low-boiling substance formed as a by-product through equilibrium reaction with the progression of polymerization reaction to the outside of the reaction system. Thus, for example, a method of introducing an inert gas that does not adversely affect the reaction, such as a nitrogen, argon, helium, carbon dioxide, or lower hydrocarbon gas, to the guide-contact flow-down type polymerization apparatus, and removing the low-boiling substance by entrainment into such a gas, or a method of performing the polymerization reaction under reduced pressure is preferably used. Alternatively, a combined method of these methods is also preferably used. In these cases as well, an inert gas does not have to be introduced in a large amount to the guide-contact flow-down type polymerization apparatus, and can be introduced to the extent that the inside is retained in an inert gas atmosphere.

In the case of manufacturing a condensation polymer using the aromatic polycarbonate manufacturing apparatus of the present embodiment, the reaction pressure of the guide-contact flow-down type polymerization apparatus differs depending on the type of a by-product low-boiling substance, the type and molecular weight of a polymer to be manufactured, a polymerization temperature, etc. In the case of manufacturing an aromatic polycarbonate from a melted prepolymer obtained using, for example, bisphenol A and diphenyl carbonate, the reaction pressure is preferably in the range of 400 to 3,000 PaA when the number-average molecular weight of the aromatic polycarbonate to be manufactured is in the range of 5,000 or smaller, and is preferably in the range of 50 to 500 PaA when the number-average molecular weight is 5,000 to 10,000. A reaction pressure of preferably 300 PaA or lower, particularly preferably in the range of 20 to 250 PaA, is preferably used when the number-average molecular weight is 10,000 or larger.

In the case of manufacturing a condensation polymer using the guide-contact flow-down type polymerization apparatus constituting the aromatic polycarbonate manufacturing apparatus of the present embodiment as a polymerization vessel, the polymer having the degree of polymerization of interest may be manufactured using only one guide-contact flow-down type polymerization apparatus, or a scheme in which two or more guide-contact flow-down type polymerization apparatuses are connected so as to sequentially elevate the degree of polymerization may be adopted according to the degree of polymerization of a melted monomer serving as a raw material or a melted prepolymer, the

production amount of the polymer, etc.

In such a case, it is preferred that two or more guide-contact flow-down type polymerization apparatuses should be connected in series, in parallel, or both in series and in parallel.

In this case, the respective guide-contact flow-down type polymerization apparatuses can independently adopt guides and reaction conditions suitable for the degree of polymerization of a prepolymer or a polymer to be manufactured.

For example, in a scheme in which a first guide-contact flow-down type polymerization apparatus, a second guide-contact flow-down type polymerization apparatus, a third guide-contact flow-down type polymerization apparatus, a fourth guide-contact flow-down type polymerization apparatus ... are used, and the degree of polymerization is elevated in this order, $S1 \geq S2 \geq S3 \geq S4 \geq ...$ can be established when the total external surface area of all the guides in each polymerization apparatus is defined as S1, S2, S3, S4 ...

The polymerization temperature may be the same temperature among the respective polymerization apparatuses or may be sequentially elevated.

The polymerization pressure may be sequentially lowered in the respective polymerization apparatuses.

In this context, for example, in the case of using two polymerization apparatuses, a first guide-contact flow-down type polymerization apparatus and a second guide-contact flow-down type polymerization apparatus, and elevating the degree of polymerization in this order, it is preferred to use guides in which total external surface area S1 ($m^2$) of all the guides of the first polymerization apparatus, and total external surface area S2 ($m^2$) of all the guides of the second polymerization apparatus should satisfy the following formula (XVI).

$$1 \leq S1/S2 \leq 20 \quad \text{formula (XVI).}$$

The value of S1/S2 is 1 or more, whereby variation in molecular weight can be suppressed, and stable manufacturing is possible for a long period. Thus, the desired production amount can be obtained.

S1/S2 is 20 or less, whereby the flow rate of a melted prepolymer flowing down on the guides in the second polymerization apparatus can be controlled. As a result, the residence time of the melted prepolymer can be sufficiently secured, and a polymer having a necessary molecular weight can be obtained. The range is more preferably $1.5 \leq S1/S2 \leq 15$.

In the aromatic polycarbonate manufacturing apparatus of the present embodiment, an inert gas absorption apparatus for allowing an inert gas to be absorbed to a melted prepolymer of a condensation polymer before supply to the polymerization apparatus is preferably further placed.

In the case of using a plurality of guide-contact flow-down type polymerization apparatuses connected, an inert gas absorption apparatus for allowing an inert gas to be absorbed to a melted prepolymer of a condensation polymer before supply to each of the guide-contact flow-down type polymerization apparatuses is preferably placed in each of the polymerization apparatuses. The inert gas absorption apparatus thus placed can further enhance the advantageous effects of the present invention.

Hereinafter, the case of using a pair of one guide-contact flow-down type polymerization apparatus and one inert gas absorption apparatus will be described.

A melted prepolymer is introduced to the inert gas absorption apparatus before being supplied to the guide-contact flow-down type polymerization apparatus. In the inert gas absorption apparatus, the melted prepolymer is treated with an inert gas so that the inert gas is absorbed to the melted prepolymer and thereby absorbed in a specific amount of 0.0001 to 1 NL (wherein NL (normal litter) represents a volume measured under conditions of standard temperature and pressure) per kg of the melted prepolymer to the melted prepolymer. Subsequently, the melted prepolymer with this specific amount of the inert gas absorbed is supplied to the guide-contact flow-down type polymerization apparatus and polymerized.

The phrase "melted prepolymer is treated with an inert gas" means that the inert gas is absorbed to the melted prepolymer under conditions where the melted prepolymer is difficult to polymerize.

The amount of the inert gas absorbed to the melted prepolymer is in the range of preferably 0.0001 to 1 NL, more preferably 0.001 to 0.8 NL, further preferably 0.005 to 0.6 NL, per kg of the melted prepolymer.

If the amount of the inert gas absorbed is smaller than 0.0001 NL per kg of the melted prepolymer, a polymerization rate-elevating effect achieved by using the inert gas-absorbed prepolymer and a stable aromatic polycarbonate manufacturing effect achieved by using the inert gas-absorbed prepolymer are small. In the present invention, the amount of the inert gas absorbed does not have to be larger than 1 NL per kg of the melted prepolymer.

The advantageous effects of the present invention can be further enhanced by polymerizing the melted prepolymer with the inert gas absorbed in an amount in the numeric range described above in the guide-contact flow-down type polymerization apparatus constituting the aromatic polycarbonate manufacturing apparatus of the present embodiment.

The amount of the inert gas absorbed to the melted polymer can be easily measured, usually, by directly

measuring the amount of the inert gas supplied.

When the inert gas is absorbed to the melted prepolymer while circulated in the inert gas absorption apparatus, the amount of the inert gas absorbed can be determined from difference between the amount of the inert gas supplied and the amount of the inert gas discharged. The amount of the inert gas absorbed can also be measured from the amount of a pressure decreased in the inert gas absorption apparatus resulting from the supply of the melted prepolymer in a predetermined amount to the inert gas absorption apparatus charged with the inert gas having a predetermined pressure, and the absorption of the inert gas to the melted prepolymer. Alternatively, the amount of the inert gas absorbed may be measured by a batch scheme which involves supplying a predetermined amount of the melted prepolymer in a batch manner to the absorption apparatus, and then measuring the amount of the inert gas absorbed, or a continuous scheme which involves continuously supplying the melted prepolymer to the absorption apparatus, and measuring the amount of the inert gas absorbed while continuously extracting the melted prepolymer.

In the present embodiment, the inert gas absorption apparatus is used for allowing an inert gas to be absorbed by treating a melted prepolymer with the inert gas at a predetermined pressure under conditions where the melted prepolymer is difficult to polymerize.

The phrase "allowing an inert gas to be absorbed to a melted prepolymer" or "inert gas is absorbed to a melted prepolymer" means that the inert gas is dispersed and/or dissolved in the melted prepolymer.

The dispersion means a state where the inert gas is mixed as air bubbles into the melted prepolymer to form a gas-liquid mixed phase. The dissolution means a state where the inert gas blends in the melted prepolymer to form a homogeneous liquid phase.

The inert gas is particularly preferably dissolved in the melted prepolymer, not merely dispersed in the melted prepolymer.

For efficiently dissolving the inert gas in the melted prepolymer, it is preferred to enhance contact efficiency by increasing a gas-liquid interface area or to carry out under pressurization of the inert gas.

The inert gas absorption apparatus constituting the aromatic polycarbonate manufacturing apparatus of the present embodiment is not particularly limited by its model as long as the apparatus can allow an inert gas to be absorbed to a melted prepolymer. Examples thereof include known apparatuses such as packed tower type absorption apparatuses, plate tower type absorption apparatuses, spray tower type absorption apparatuses, fluidized packed tower type absorption apparatuses, liquid film cross-flow absorption type absorption apparatuses, high-speed spiral-flow absorption apparatuses, and absorption apparatuses using mechanical power, described in Kagaku Souchi Sekkei (Chemical Apparatus Design in English) - operation series No. 2, revised, gas absorption, p. 49-54 (March 15, 1981, issued by Kagaku Kogyo Co., Ltd.), and absorption apparatuses allowing the melted prepolymer to drop along the guides in an inert gas atmosphere.

Alternatively, the absorption apparatus may be configured to allow the inert gas to be directly supplied into a piping through which the melted prepolymer is supplied to the guide-contact flow-down type polymerization apparatus. The spray tower type absorption apparatus or an absorption apparatus that allows the inert gas to be absorbed while allowing the melted prepolymer to drop along the guides is particularly preferably used as the inert gas absorption apparatus.

An apparatus in the same form as that of the guide-contact flow-down type polymerization apparatus is particularly preferable as the inert gas absorption apparatus.

Since the inert gas absorption apparatus is operated under conditions that allow polymerization to rarely progress, an excellent feature of the apparatus in the same form as that of the guide-contact flow-down type polymerization apparatus, albeit totally functionally different from the polymerization apparatus, is that very efficient inert gas absorption in a short time is possible owing to a very large surface area per mass of the melted prepolymer during flow-down on the guides, and very favorable surface renewal and internal stirring of the melted prepolymer in corporation.

Unlike the guide-contact flow-down type polymerization apparatus, the inert gas absorption apparatus is substantially free from change in viscosity of the melted prepolymer between upper and lower parts of the guides and therefore has the ability to highly treat the melted prepolymer per unit time. Thus, the inert gas absorption apparatus is generally smaller than the guide-contact flow-down type polymerization apparatus even if these apparatuses are in the same form.

A preferred manufacturing for the aromatic polycarbonate according to the present embodiment will be described.

When the number-average molecular weight of the melted prepolymer before and after inert gas absorption is defined as $M_1$ and $M_2$, respectively, change in molecular weight between before and after inert gas absorption ($M_2$ - $M_1$) is substantially preferably 2,000 or less, more preferably 1,000 or less, still more preferably 500 or less.

The temperature at which the inert gas is absorbed to the melted prepolymer is not particularly limited as long as the prepolymer is in a melted state. The temperature is in the range of usually 150 to 350°C, preferably 180 to 300°C, more preferably 230 to 270°C.

Pressure Pg (PaA) at which the inert gas is absorbed to the melted prepolymer is preferably equal to or higher

than the pressure used for manufacturing the melted prepolymer.

Specifically, the inert gas is preferably absorbed under a pressure condition equal to or higher than the reaction pressure used in manufacturing the melted aromatic polycarbonate prepolymer by reacting an aromatic dihydroxy compound with diaryl carbonate.

The pressure Pg (PaA) is higher than pressure Pp (PaA) of the subsequent polymerization reaction in the guide-contact flow-down type polymerization apparatus and preferably satisfies a relationship of the following formula with $M_1$ (number-average molecular weight of the melted prepolymer before inert gas absorption):

$$\text{formula: } Pg > 4 \times 10^{12} \times M_1^{-2.6871}$$

If the Pg (PaA) does not satisfy the relationship of the formula, a polymerization rate-elevating effect achieved by using the inert gas-absorbed prepolymer and a stable aromatic polycarbonate manufacturing effect achieved by using the inert gas-absorbed prepolymer are small.

The pressure for inert gas absorption is particularly preferably ordinary pressure or pressurization from the viewpoint that the absorption rate of the inert gas to the melted prepolymer is enhanced, and consequently, the absorption apparatus can be small.

The upper limit of the pressure for inert gas absorption is not particularly limited, and the inert gas absorption is performed at a pressure of usually $2 \times 10^7$ PaA or lower, preferably $1 \times 10^7$ PaA or lower, more preferably $5 \times 10^6$ PaA or lower.

The method for allowing an inert gas to be absorbed to a melted prepolymer in the inert gas absorption apparatus may be a method of allowing a large portion of the inert gas supplied to the inert gas absorption apparatus to absorbed into the melted prepolymer, or may be a method of allowing a portion of the supplied inert gas to be absorbed into the melted prepolymer.

Examples of the former method include a method of using a spray tower type absorption apparatus or an apparatus that allows the inert gas to be absorbed while allowing the melted prepolymer to drop along the guides, supplying the inert gas in an amount almost equal to the amount of the inert gas absorbed into the melted prepolymer, and allowing the inert gas to be absorbed to the melted prepolymer while keeping the pressure of the inert gas absorption apparatus almost constant, and a method using an inert gas absorption apparatus that directly supplies the inert gas into a piping through which the melted prepolymer is supplied to the polymerization apparatus.

Examples of the latter method include a method of using, as the inert gas absorption apparatus, a spray tower type absorption apparatus or an apparatus that allows the inert gas to be absorbed while allowing the melted prepolymer to drop along the guides, circulating the inert gas in more than the amount of the inert gas absorbed into the melted prepolymer in the inert gas absorption apparatus, and discharging an excess of the inert gas from the inert gas absorption apparatus.

The former method is particularly preferred from the viewpoint of a smaller amount of the inert gas used.

Such inert gas absorption can be performed by any of a continuous method of continuously supplying the melted prepolymer to the inert gas absorption apparatus so that the inert gas is absorbed to the melted prepolymer, and continuously extracting the inert gas-absorbed melted prepolymer, and a batch method of charging the inert gas absorption apparatus with the melted prepolymer in a batch manner so that the inert gas is absorbed thereto.

The inert gas is a generic name for gases that do not cause chemical reaction with the melted prepolymer and are stable under polymerization conditions. Examples of the inert gas include nitrogen, argon, helium, carbon dioxide, organic compounds that are in a gas form at a temperature at which the prepolymer keeps its melted state, and lower hydrocarbon gases having 1 to 8 carbon atoms. Nitrogen is particularly preferred.

In the guide-contact flow-down type polymerization apparatus mentioned above in the method for manufacturing the aromatic polycarbonate of the present embodiment, it is preferred for keeping the pressure of the inert gas-absorbed melted prepolymer at a predetermined pressure within a melted prepolymer supply piping from the inert gas absorption apparatus to the guide-contact flow-down type polymerization apparatus that a predetermined pressure regulating valve should be placed, if necessary, immediately before the entrance of the guide-contact flow-down type polymerization apparatus and thereby control the pressure of the melted prepolymer.

The inside of the guide-contact flow-down type polymerization apparatus has relatively high vacuum, and the melted prepolymer at or near a supply port to the guide-contact flow-down type polymerization apparatus tends to become a low-pressure state by aspiration into the guide-contact flow-down type polymerization apparatus. Hence, the inert gas absorbed in the inert gas absorption apparatus may be separated from the melted prepolymer or aggregated. Hence, for preventing these events, it is preferred to supply the melted prepolymer to the guide-contact flow-down type polymerization apparatus while maintaining a pressure equal to or higher than the pressure at which the inert gas is absorbed to the melted prepolymer in the inert gas absorption apparatus.

Specifically, the pressure of the melted prepolymer to be supplied is preferably in the range of 15 kPaA to 200

kPaA, more preferably 20 kPaA to 150 kPaA, further preferably 20 to 100 kPaA.

In the case of having a guide-contact flow-down type polymerization apparatus, and a guide-contact flow-down type polymerization apparatus further connected therewith, an inert gas absorption apparatus for allowing an inert gas to be absorbed to a melted aromatic branched polycarbonate prepolymer before supply to each of the guide-contact flow-down type polymerization apparatuses is placed. In such a case, it is preferred that the inert gas-absorbed melted prepolymer should be supplied such that a pressure thereof within a melted prepolymer supply piping from the inert gas absorption apparatus to each of the guide-contact flow-down type polymerization apparatuses is kept at 15 kPaA to 200 kPaA by a pressure regulating valve placed immediately before the entrance of each of the guide-contact flow-down type polymerization apparatuses. The pressure is more preferably 20 kPaA to 150 kPaA, further preferably 20 to 100 kPaA.

If the pressure of the melted prepolymer is lower than 15 kPaA or if the pressure is lower than the pressure at which the inert gas is absorbed to the melted prepolymer, the pressure of the melted prepolymer within the piping is unstable so that the inert gas (e.g., nitrogen) temporarily absorbed to the melted prepolymer is separated or aggregated, resulting in unstable homogeneity of the melted prepolymer. This inhibits a uniform and continuous foaming phenomenon of the melted prepolymer within the guide-contact flow-down type polymerization apparatus. Thus, a stable product cannot be manufactured, or reduction in color, fisheye, or foreign matter such as a gel occurs easily.

On the other hand, if the pressure exceeds 200 kPaA, no effect is changed. Such a pressure is not practical because such a pressure places an excessive burden on a discharge gear pump or a piping of the inert gas absorption apparatus and requires improving pressure resistance. Therefore, the upper limit value is preferably 200 kPaA.

The aromatic polycarbonate manufacturing apparatus of the present embodiment may be any apparatus that satisfies various conditions mentioned above and has mechanical strength appropriate therefor, and may be provided with an apparatus or equipment having any of other functions necessary for continuous operation.

The aromatic polycarbonate manufacturing apparatus of the present embodiment may have a plurality of aforementioned guide-contact flow-down type polymerization apparatuses or inert gas absorption apparatuses joined or may be provided with an apparatus or equipment having any of other functions except for evaporation.

(Material for use in method for manufacturing aromatic polycarbonate)

Hereinafter, an aromatic dihydroxy compound and diaryl carbonate will be described which are materials for use in the method for manufacturing aromatic polycarbonate of the present embodiment.

<Aromatic dihydroxy compound>

The aromatic dihydroxy compound for use in manufacturing aromatic polycarbonate is a compound represented by the following formula:

HO-Ar-OH

wherein Ar represents a divalent aromatic group.

The divalent aromatic group Ar is defined as mentioned above.

One of the aromatic dihydroxy compounds for use in the method for manufacturing aromatic polycarbonate of the present embodiment may be used singly, or two or more thereof may be used.

Preferred examples of the aromatic dihydroxy compound include bisphenol A. A trivalent aromatic trihydroxy compound may be used in combination therewith for introducing a branched structure.

The bisphenol A is particularly preferably a high-purity product for polycarbonate having a chlorine content of 1 ppb or less.

<Diaryl carbonate>

The diaryl carbonate for use in the method for manufacturing aromatic polycarbonate of the present embodiment is represented by the following formula:

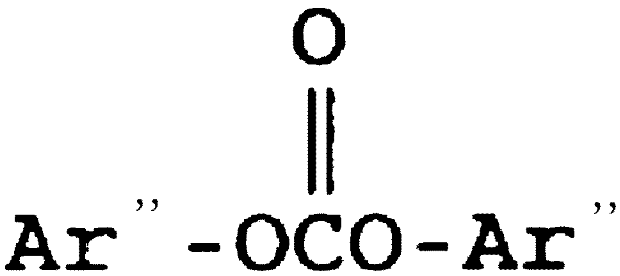

In the formula, each Ar" represents a monovalent aromatic group having 5 to 20 carbon atoms.

One or more hydrogen atoms in this Ar” may be replaced with other substituents that do not adversely affect the reaction, for example, a halogen atom, an alkyl group having 1 to 10 carbon atoms, an alkoxy group having 1 to 10 carbon atoms, a phenyl group, a phenoxy group, a vinyl group, a cyano group, an ester group, an amide group, or a nitro group.

The Ar” moieties may be the same or different.

Examples of the monovalent aromatic group Ar" include a phenyl group, a naphthyl group, a biphenyl group, and a pyridyl group. These groups may each be substituted by one or more substituents mentioned above.

Such diaryl carbonate is preferably symmetric diaryl carbonate such as unsubstituted diphenyl carbonate or lower alkyl-substituted diphenyl carbonate (e.g., ditolyl carbonate and di-t-butylphenyl carbonate), particularly preferably diphenyl carbonate which is diaryl carbonate having the simplest structure. Only one of these diaryl carbonates may be used singly, or two or more thereof may be used in combination.

The diphenyl carbonate serving as a raw material for manufacturing the aromatic polycarbonate is particularly preferably diphenyl carbonate obtained by manufacturing ethylene carbonate through the reaction of ethylene oxide with $CO_2$, purifying the ethylene carbonate, which is then reacted with methanol to manufacture dimethyl carbonate, and purifying the dimethyl carbonate, which is then reacted with purified phenol by reactive distillation to manufacture diphenyl carbonate, followed by purification. This diphenyl carbonate is an ultrahigh-purity product free from an alkali metal, an alkaline earth metal, and chlorine.

<Melted prepolymer>

The melted prepolymer for use in manufacturing aromatic polycarbonate of the present embodiment is manufactured from the aromatic dihydroxy compound and the diaryl carbonate described above. The ratio (feed ratio) between these compounds used differs depending on the types of the aromatic dihydroxy compound and the diaryl carbonate used, a polymerization temperature, and other polymerization conditions. The diaryl carbonate is used at a ratio of usually 0.9 to 2.5 mol, preferably 0.95 to 2.0 mol, more preferably 0.98 to 1.5 mol, per mol of the aromatic dihydroxy compound.

The prepolymer in a melted state (melted prepolymer) manufactured from the aromatic dihydroxy compound and the diaryl carbonate means a melted product that is manufactured from the aromatic dihydroxy compound and the diaryl carbonate, is in the course of polymerization, and has a lower degree of polymerization than that of aromatic polycarbonate having the degree of polymerization of interest, and may be an oligomer.

The average degree of polymerization of the melted prepolymer of the aromatic polycarbonate of the present embodiment is not particularly limited and is usually approximately 2 to 2,000, though differing depending on its chemical structure.

Such a melted prepolymer for use as a polymerization raw material can be manufactured by any known method.

<Catalyst>

The reaction for manufacturing aromatic polycarbonate from the aromatic dihydroxy compound and the diaryl carbonate can be carried out without the addition of a catalyst and is performed, if necessary, in the presence of a catalyst in order to enhance a polymerization rate.

The catalyst is not particularly limited as long as the catalyst can be used in this field.

Examples of the catalyst include alkali metal and alkaline earth metal hydroxides such as lithium hydroxide, sodium hydroxide, potassium hydroxide, and calcium hydroxide; alkali metal salts, alkaline earth metal salts, and quaternary ammonium salts of boron and aluminum hydroxides such as lithium aluminum hydride, sodium borohydride, and tetramethylammonium borohydride; alkali metal and alkaline earth metal hydrides such as lithium hydride, sodium hydride, and calcium hydride; alkali metal and alkaline earth metal alkoxides such as lithium methoxide, sodium ethoxide, and calcium methoxide; alkali metal and alkaline earth metal aryloxides such as lithium phenoxide, sodium phenoxide,

magnesium phenoxide, LiO-Ar-OLi, and NaO-Ar-Ona (wherein Ar is an aryl group); organic acid salts of alkali metals and alkaline earth metals such as lithium acetate, calcium acetate, and sodium benzoate; zinc compounds such as zinc oxide, zinc acetate, and zinc phenoxide; boron oxide, boric acid, sodium borate, trimethyl borate, tributyl borate, and triphenyl borate; tin compounds such as tin oxide, dialkyl tin oxide, dialkyl tin carboxylate, tin acetate, tin compounds bonded to an alkoxy group or an aryloxy group (e.g., ethyl tin tributoxide), and organic tin compounds; lead compounds such as lead oxide, lead acetate, lead carbonate, basic carbonate, and alkoxides or aryloxides of lead and organic lead; and quaternary ammonium salts and quaternary phosphonium salts.

In the case of using a catalyst, only one of these catalysts may be used singly, or two or more thereof may be used in combination. The amount of such a catalyst used is in the range of usually $10^{-10}$ to 1% by mass, preferably $10^{-9}$ to $10^{-1}$% by mass, further preferably $10^{-8}$ to $10^{-2}$% by mass, based on the raw material aromatic dihydroxy compound.

The polymerization catalyst used remains in the product aromatic polycarbonate when the aromatic polycarbonate is manufactured by a melt transesterification method. Most of these polymerization catalysts usually adversely affect the physical properties of the polymer. Thus, it is preferred to minimize the amount of the catalyst used. Since the guide-contact flow-down type polymerization apparatus constituting the aromatic polycarbonate manufacturing apparatus of the present embodiment can efficiently perform polymerization, the amount of the catalyst used can be decreased. This is also one of the advantages of the aromatic polycarbonate manufacturing apparatus of the present embodiment that can manufacture high-quality aromatic polycarbonate.

The material of the guide-contact flow-down type polymerization apparatus or the piping constituting the aromatic polycarbonate manufacturing apparatus of the present embodiment is not particularly limited and is usually selected from a stainless steel material, a carbon steel material, metal materials such as Hastelloy, nickel, titanium, chromium, and other alloys, and a highly heat-resistant polymer material. The surface made of such a material may be variously treated, if necessary, by plating, lining, passivation treatment, acid washing, phenol washing, or the like. For example, stainless steel, nickel, or glass lining is preferred, and stainless steel is particularly preferred. Discharge pump 8 for a melted prepolymer or aromatic polycarbonate is usually preferably a gear pump that can quantitatively discharge a highly viscous substance. The material of such a gear pump may be stainless steel or may be any of other special metals.

The aromatic polycarbonate of the present embodiment has a repeat unit represented by the following formula:

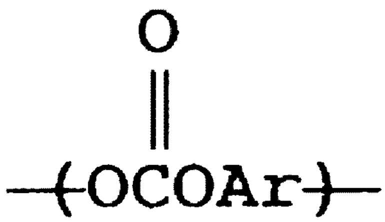

The Ar has the same configuration as that mentioned above.

The aromatic polycarbonate is particularly preferably aromatic polycarbonate containing 85 mol% or more of a repeat unit represented by the following formula in all repeat units:

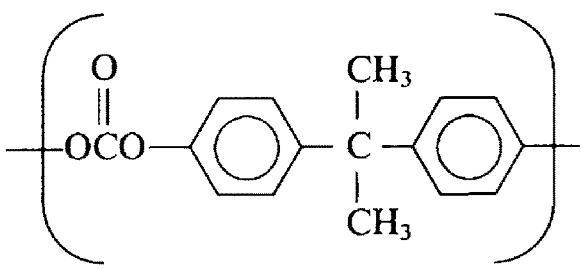

The terminal groups of the aromatic polycarbonate of the present embodiment usually consist of a hydroxy group and an aryl carbonate group represented by the following formula:

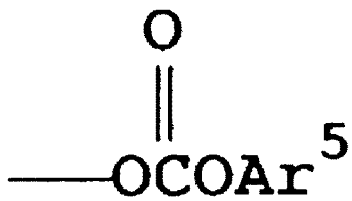

In the formula, $Ar^5$ is as defined in Ar" mentioned above.

The ratio between the hydroxy group and the aryl carbonate group is not particularly limited and is usually in the range of 95:5 to 5:95, preferably in the range of 90:10 to 10:90, further preferably in the range of 80:20 to 20:80. Aromatic polycarbonate in which the proportion of a phenyl carbonate group that occupies the terminal groups is 85% by mol or more is particularly preferred.

The method for manufacturing the aromatic polycarbonate of the present embodiment mentioned above can stably manufacture aromatic polycarbonate without variation in molecular weight for a long time.

The aromatic polycarbonate manufacturing apparatus of the present embodiment may be any apparatus that satisfies various conditions mentioned above and has mechanical strength appropriate therefor, and may be provided with an apparatus or equipment having any of other functions necessary for continuous aromatic polycarbonate manufacturing operation.

The aromatic polycarbonate manufacturing apparatus of the present embodiment may have a plurality of aforementioned guide-contact flow-down type polymerization apparatuses joined or may be provided with an apparatus or equipment having any of other functions except for polymerization.

In the aromatic polycarbonate manufacturing apparatus of the present embodiment, a known catalyst deactivator described in, for example, International Publication No. WO 2005/121213 may be used in manufacturing aromatic polycarbonate.

The amount of the catalyst deactivator used is preferably a ratio of 0.5 to 50 mol, more preferably a ratio of 0.5 to 10 mol, further preferably a ratio of 0.8 to 5 mol, per mol of the transesterification catalyst. The catalyst deactivator can be added to, for example, an extruder that is connected downstream of the guide-contact flow-down type polymerization apparatus.

In a process of manufacturing aromatic polycarbonate using the aromatic polycarbonate manufacturing apparatus of the present embodiment, various additives may be added. For example, in Figures 6 and 7, aromatic polycarbonate obtained in the second guide-contact flow-down type polymerization apparatuses 48A and 48B is sent in a melted state from the second guide-contact flow-down type polymerization apparatuses 48A and 48B to their respective post-stage devices 50A and 50B, and various additives may be added thereto.

The post-stage devices 50A and 50B are not particularly limited as long as the post-stage devices are conventional devices that receive melted aromatic polycarbonate. Examples thereof include extruders, pelletizers, sifters, dryers, silos, and packaging machines.

For example, melted aromatic polycarbonate is supplied to an extruder where the melted aromatic polycarbonate is then mixed with other resins such as ABS or PET, additives such as a thermal stabilizer, an antioxidant, a light stabilizer, an ultraviolet absorber, a mold release agent, and a flame retardant, and arbitrary other additives such as an organic or inorganic pigment or dye, a metal deactivator, an antistatic agent, a lubricant, and a nucleating agent.

One of these other resins and arbitrary additives may be used singly, or two or more thereof may be used in combination.

The aromatic polycarbonate manufactured according to the present embodiment may further contain an aliphatic dihydroxy compound (diol), for example, ethylene glycol, 1,4-butanediol, 1,4-cyclohexanedimethanol, and 1,10-decanediol; a dicarboxylic acid, for example, succinic acid, isophthalic acid, 2,6-naphthalenedicarboxylic acid, adipic acid, cyclohexanedicarboxylic acid, and terephthalic acid; and an oxy acid, for example, lactic acid, p-hydroxybenzoic acid and 6-hydroxy-2-naphthoic acid.

As is evident from the above description, use of the aromatic polycarbonate manufacturing apparatus of the present embodiment can continuously manufacture aromatic polycarbonate.

The aromatic polycarbonate obtained by the method for manufacturing the aromatic polycarbonate of the present embodiment can undergo a predetermined molding step to obtain a molded product.

The molding step can be a known molding step, and the aromatic polycarbonate can be molded using, for example, an injection molding machine, an extrusion molding machine, a profile extrusion machine, a blow molding machine, a sheet molding machine, or a hollow sheet molding machine to obtain a molded product.

[Uses]

The molded product of the aromatic polycarbonate of the present embodiment can be applied to various uses.
Preferred examples of the use include containers having a housing part having a capacity of 3 to 10 gallons. The housing part may have a handle part formed integrally with the housing part. A hollow space may be formed in the handle, and the hollow space may be configured to communicate with an internal space of the housing part.

Examples

Hereinafter, the present invention will be specifically described with reference to specific Example and Comparative Examples. However, the present invention is not limited by these Example and Comparative Examples by any means.
Raw materials of aromatic polycarbonate to be manufactured in each of the following Example and Comparative Examples will be given below.

[Raw material]

((1) Aromatic dihydroxy compound)

BPA-1: bisphenol A manufactured by NIPPON STEEL Chemical & Material Co., Ltd.

((2) Diaryl carbonate)

DPC-1: diphenyl carbonate manufactured by the method described in International Publication No. WO 2006/006585
Methods for measuring the physical properties and characteristics of aromatic polycarbonate to be manufactured in each of the following Example and Comparative Examples will be given below.

[Physical properties and characteristics]

((1) Number-average molecular weight (Mn))

A prepolymer or pellets were to be measured. The measurement was performed at a temperature of 40°C using gel permeation chromatography (HLC-8320GPC manufactured by Tosoh Corp., two columns of TSK-GEL Super Multipore HZ-M, RI detector) and using tetrahydrofuran as an eluent.
The number-average molecular weight of the prepolymer or the pellets was determined using a polystyrene-based molecular weight calibration curve from standard monodisperse polystyrene (EasiVial manufactured by Varian Medical Systems, Inc.) according to the following formula:

$$M_{PC} = 0.3591 M_{PS}^{1.0388}$$

wherein $M_{PC}$ represents the number-average molecular weight of aromatic polycarbonate, and $M_{PS}$ represents the number-average molecular weight of polystyrene.

((2) Measurement of degree of yellowness; hue)

Aromatic polycarbonate pellets were dried at 120°C for 5 hours in a hot-air dryer and continuously molded into specimens 50 mm long × 90 mm wide × 3.0 mm thick by an injection molding machine having a cylinder temperature of 300°C and a mold temperature of 90°C to obtain specimens.
The obtained specimens were measured by the transmission method at a view angle of 10° using a spectrophotometric colorimeter (Vista manufactured by Hunter Associates Laboratory, Inc.) and a D65 light source, and the degree of yellowness was indicated by a b* value (CIE No. 15 (ASTM E308) specification).

((3) Measurement of MFR)

The MFR of aromatic polycarbonate pellets dried at 120°C for 5 hours in a hot-air dryer was measured under conditions of 300°C and a 1.2 kg load using a melt flow test apparatus (Mflow manufactured by Zwick Roell GmbH)

(unit: g/10 min) (ISO1133 specification).

((4) Ratio (% by mol) of amount of substance of branched structure)

55 mg of the aromatic polycarbonate was dissolved in 2 mL of tetrahydrofuran. Then, 0.5 mL of a solution of 5 N potassium hydroxide in methanol was added thereto, and the mixture was stirred at 25°C for 2 hours for complete hydrolysis.

Then, 0.3 mL of concentrated hydrochloric acid was added thereto, and the ratio (% by mol) the amount of substance of branched structures represented by the general formulas (6), (7), and (8) based on the amount of substance of a repeat unit represented by the general formula (5) in the aromatic polycarbonate was measured by reverse-phase liquid chromatography (LC-1100 manufactured by Agilent Technologies Inc.).

In the reverse-phase liquid chromatography, measurement was performed at a column oven temperature of 40°C under a gradient condition of methanol/0.1% aqueous phosphoric acid solution ratio starting at 20/80 up to 100/0 using Inertsil ODS-3 column (registered trademark; manufactured by GL Sciences Inc.) and a mixed eluent consisting of methanol and a 0.1% aqueous phosphoric acid solution as an eluent.

Detection was performed using a UV detector having a wavelength of 300 nm, and quantification was performed from the absorption coefficient of a standard substance.

((5) The number of fisheyes)

Aromatic polycarbonate pellets dried at 120°C for 5 hours in a hot-air dryer were molded into a 40 μm thick and 15 cm wide film using a film examination apparatus (FSA100 manufactured by Optical Control Systems GmbH) having a barrel temperature of 320°C, a T-die temperature of 320°C, and a roll temperature of 120°C while the number of fisheyes of 200 μm or larger in size present in an area of 5 $m^2$ was examined with a CCD camera.

((6) Moldability of water bottle)

Aromatic polycarbonate pellets dried at 120°C for 5 hours in a hot-air dryer were molded into a 5 gallon water bottle (diameter: approximately 25 cm, height: approximately 50 cm; having a structure that sagged inward in a portion of a central portion of the water bottle, was hollow in the inside of approximately 5 cm in diameter and approximately 10 cm in length, and had a handle (handgrip) communicating with the inside of the water bottle) by injection blow molding using an injection blow molding machine (ASB-650EXHS manufactured by Nissei ASB Machine Co., Ltd.) having a barrel temperature of 295°C and mold temperatures of 60°C at a core and 30°C at a cavity, and evaluated for the presence or absence of uneven thickness of the water bottle.

<Uneven thickness; whole water bottle>

The uneven thickness of the whole water bottle was evaluated by measuring thicknesses at 32 equally spaced locations along the horizontal direction (on the circumferences) of unembossed portions (portions of 12 cm and 25 cm from the bottom; the handle part in the central portion was excluded) of the water bottle body, and evaluating values of (maximum thickness / minimum thickness) on the respective circumferences according to the following criteria.

A: Maximum thickness / minimum thickness was 1.0 to less than 1.7
B: Maximum thickness / minimum thickness was 1.7 to less than 2.5
C: Maximum thickness / minimum thickness was 2.5 to less than 4.0
D: Maximum thickness / minimum thickness was 4.0 or more or the bottle had break

<Uneven thickness; handle part>

The uneven thickness of the handle part was evaluated by mainly evaluating the uneven thickness of the base portion of the handle visually and through contact according to the following criteria.

A: The uneven thickness was rarely seen
B: A slightly thin or thick portion was seen
C: An evidently thin or thick portion was seen
D: Too thin to maintain strength, having break, or no handle shape was made.

((7) Impact resistance)

The water bottle molded in the section (6) was filled with water, and the resulting water bottle was dropped in four directions, upper, lower, obliqued upper, and obliqued lower directions, from a height of 1.5 m and evaluated for the presence or absence of a crack according to the criteria given below.

The drop in the upper direction means that the water bottle was dropped with its mouth up.

The drop in the lower direction means that the water bottle was dropped with its mouth down.

The drop in the obliqued upper direction means that the water bottle was dropped with its mouth up in a state inclined by 45 degrees.

The drop in the obliqued lower direction means that the water bottle was dropped with its mouth down in a state inclined by 45 degrees.

<Evaluation criteria>

A: Not cracked
B: Cracked
C: Impossible to evaluate because the bottle was unable to form.

[Example 1]

Aromatic polycarbonate was manufactured as described below using an aromatic polycarbonate manufacturing apparatus having the configuration shown in Figure 6.

In the aromatic polycarbonate manufacturing apparatus, polymerization raw materials and a catalyst were added to mixing tank 31 and mixed.

Next, the mixture was transferred to dissolved mixture reservoirs 33A and 33B through transfer pump 32, and further transferred therefrom through transfer pumps 34A and 34B to first polymerization vessel 35 where prepolymerization was performed.

The resultant was further subjected to prepolymerization in second polymerization vessel 37 via gear pump 36 for discharge to obtain an aromatic polycarbonate prepolymer.

The aromatic polycarbonate prepolymer was transferred to first inert gas absorption apparatus 39 via supply pump 38, and an inert gas-absorbed prepolymer was optionally transferred via supply pump 40, and after adjustment of the supply pressure thereof to a guide-contact flow-down type polymerization apparatus given below by pressure regulating valve 41, transferred and supplied to first guide-contact flow-down type polymerization apparatus 42 where the prepolymer was polymerized. Here, a low-molecular-weight component phenol was discharged from a vent.

Examples of the pressure regulating valve 41 include valve-like configurations. The pressure regulating valve 41 is not limited by its configuration as long as the solubility of an inert gas can be adjusted. The same holds true for pressure regulating valves 47A and 47B given below.

Next, the aromatic polycarbonate prepolymer was transferred to second inert gas absorption apparatus 44 via supply pump 43 and further transferred therefrom using supply pumps 46A and 46B via three-way polymer valve 45. The supply pressure of an inert gas-absorbed prepolymer to a guide-contact flow-down type polymerization apparatus given below was optionally adjusted by pressure regulating valves 47A and 47B, and the resultant was further transferred to second guide-contact flow-down type polymerization apparatuses 48A and 48B connected thereto where the prepolymer was polymerized. Here, phenol was discharged from a vent.

The resultant was further transferred through supply pumps 49A and 49B, and an additive was added to post-stage devices 50A and 50B to obtain the aromatic polycarbonate of interest.

Figure 2 shows a schematic configuration diagram of the first and second inert gas absorption apparatuses 39 and 44.

The inert gas absorption apparatuses 39 and 44 are substantially similar in apparatus configuration to guide-contact flow-down type polymerization apparatuses 42, 48A, and 48B mentioned later, so that the same reference signs are used to designate such similar sites.

As for the first inert gas absorption apparatus 39, in inert gas absorption zone 15 which is an internal space, the upper part of side casing 10 is in a cylindrical shape, and bottom casing 11 which is a tapered lower part constituting the side casing 10 has an inverted cone shape. In Figure 2, L = 500 cm, h = 400 cm, D = 200 cm, d = 20 cm, and C = 150°.

The external diameter of each guide 4 disposed in the inert gas absorption zone 15 which is an internal space is r = 0.3 cm. The total external surface area of the guides 4 is S = 60 $m^2$. The pore diameter of porous plate disposed at the upper part of the inert gas absorption zone 15 which is an internal space is approximately 0.2 cm.

The second inert gas absorption apparatus 44 has almost the same shape as that of the first inert gas absorption apparatus 39 except that the pore diameter of the porous plate is approximately 0.6 cm.

Figure 3 shows a schematic diagram of the guide-contact flow-down type polymerization apparatuses.

This guide-contact flow-down type polymerization apparatus has flow path control component 20 in a disc form having a thickness of approximately 2 cm, and guides 4 in a columnar form or a pipe form, as shown in Figure 4.

Figure 4 shows a schematic configuration diagram of the upper parts of the guides 4 of the guide-contact flow-down type polymerization apparatus.

In the guide-contact flow-down type polymerization apparatus, the flow path control component 20 is suspension-fixed from the upper part such that the interval from upper internal wall face 23 of liquid supply zone 3 is approximately 8 cm.

The interval between the internal sidewall face 22 of the liquid supply zone 3 and the flow path control component 20 is approximately 9 cm, and the interval between the porous plate 2 and the flow path control component 20 is approximately 8 cm.

The marginal part of this flow path control component 20 in a disc form is tailored such that the perpendicular cross section is a semicircle having a radius of approximately 1 cm, and devised such that no liquid resides in the marginal part.

The cross section of the junction between the internal sidewall face 22 of the liquid supply zone and the porous plate 2 is tailored such that the inside as shown in Figure 5 is in a concave form, and angle E of the rising part thereof is approximately 170 degrees (°).

The whole material of this guide-contact flow-down type polymerization apparatus is stainless steel.

Discharge pump 8 is preferably a gear pump for a highly viscous concentrated liquid and is a usual liquid sending pump for a concentrated liquid whose viscosity is not that high.

The guide-contact flow-down type polymerization vessel 42 has side casing 10 in a cylindrical shape and bottom casing 11 in a cone shape. In Figure 3, L = 950 cm, and h = 850 cm.

The internal diameter of the side casing in evaporation zone 5 which is an internal space is D = 400 cm, and the internal diameter of liquid discharge port 7 of the bottom casing 11 in a cone shape is d = 20 cm. C is 150 degrees (°).

The total external surface area of all the guides 4 is S = 750 $m^2$.

The internal cross-sectional area on a horizontal plane of the side casing 10 in the evaporation zone 5 which is an internal space is A = 12.56 $m^2$.

The ratio between the internal cross-sectional area A and internal cross-sectional area B ($m^2$) on a horizontal plane of the liquid discharge port 7 is A/B = 400.

D/d is 20.

The ratio between length L (cm) of the side casing of the evaporation zone 5 and the internal diameter D (cm) is L/D = 2.375.

The external diameter of each guide 4 is r = 0.3 cm.

The average number of pores per $m^2$ of the porous plate 2 (number/$m^2$) is N = approximately 500. The pore diameter of the porous plate 2 is approximately 0.2 cm.

The ratio between upper area T of the porous plate 2 including the upper areas of the pores of the porous plate 2, and total effective cross-sectional area q of the pores is T/Q = approximately 1300.

Interval k between the guide 4 closest to the internal wall face of the evaporation zone 5 and the internal wall face is approximately 14 cm.

The ratio between space volume V (approximately 2.03 $m^3$) where the liquid can exist in the liquid supply zone 3 from liquid feed port 1 (junction between the feed port and the upper internal wall of the liquid supply zone) to the upper face of the porous plate 2, and upper area T (approximately 12.56 $m^2$) of the porous plate 2 including the upper areas of the pores of the porous plate 2, i.e., the value of V/T, is approximately 0.162 (m) .

Space volume Y of the evaporation zone 5 is approximately 135 $m^3$.

The ratio between the space volume V where a liquid can exist in the liquid supply zone 3 from the liquid feed port 1 to the upper face of the porous plate 2, and the space volume Y of the evaporation zone, i.e., the value of Y/V, is approximately 67.

In Example 1, the respective values of the aromatic polycarbonate manufacturing apparatus satisfied all of the formula (I) to the formula (XV) mentioned above.

A low-boiling substance-containing liquid supplied from the liquid feed port 1 to the liquid supply zone 3 in Figure 3 passes through between the upper face of the flow path control component 20 and the upper internal wall face 23 of the liquid supply zone 3 and between the internal sidewall face 22 of the liquid supply zone 3 and the flow path control component 20 in Figure 4, and are uniformly distributed to the guides 4 from the pores (21, etc.) of the porous plate 2 while flowing mainly in a direction from the peripheral part of the porous plate 2 toward the central part.

The guide-contact flow-down type polymerization apparatus is provided at its lower part with inert gas supply port 9 and provided at its upper part with vacuum vent 6 (which is usually connected to a gas aggregating machine and a pressure reduction apparatus) serving as a low-boiling substance evaporant extraction port.

A jacket or a heating tube for a heat medium is placed outside the guide-contact flow-down type polymerization apparatus such that a predetermined temperature can be retained with a heat medium.

The second guide-contact flow-down type polymerization apparatuses 48A and 48B have flow path control component 20 in a disc form having a thickness of approximately 2 cm, and guides 4 in the structure shown in Figure 4.

The flow path control component 20 in a disc form is suspension-fixed from the upper part such that the interval from upper internal wall face 23 of liquid supply zone is approximately 8 cm.

The interval between the internal sidewall face 22 of the liquid supply zone and the flow path control component 20 is approximately 9 cm, and the interval between the porous plate 2 and the flow path control component 20 is approximately 8 cm.

The marginal part of this flow path control component 20 in a disc form is tailored such that the perpendicular cross section is a semicircle having a radius of approximately 1 cm, and devised such that no liquid resides in the marginal part.

The cross section of the junction between the internal sidewall face 22 of the liquid supply zone and the porous plate 2 is tailored such that the inside as shown in Figure 5 is in a concave form, and angle E of the rising part thereof is approximately 170 degrees (°).

The whole material of the guide-contact flow-down type polymerization apparatuses is stainless steel.

Discharge pump 8 is disposed at the lower parts of the second guide-contact flow-down type polymerization apparatuses 48A and 48B, and is preferably a gear pump for a highly viscous concentrated liquid and is preferably a usual liquid sending pump for a concentrated liquid whose viscosity is not that high.

The second guide-contact flow-down type polymerization apparatuses have side casing 10 in a cylindrical shape and bottom casing 11 in a cone shape.

The second guide-contact flow-down type polymerization apparatuses have L of 1,000 cm and h of 900 cm in Figure 3.

The internal diameter of the side casing 10 in evaporation zone 5 is D = 500 cm, and the internal diameter of liquid discharge port 7 of the bottom casing 11 in a cone shape is d = 40 cm. C is 155 degrees.

The total external surface area of all the guides 4 is S = 250 $m^2$.

The internal cross-sectional area on a horizontal plane of the side casing 10 in the evaporation zone 5 which is an internal space is A = 19.625 $m^2$.

The ratio between the internal cross-sectional area A and internal cross-sectional area B ($m^2$) on a horizontal plane of the liquid discharge port 7 is A/B = 156.25.

D/d is 12.5.

The ratio between length L (cm) of the side casing 10 of the evaporation zone 5 and the internal diameter D (cm) is L/D = 2.

The external diameter of each guide 4 is r = 0.3 cm.

The average number of pores per $m^2$ of the porous plate 2 (number/$m^2$) is N = approximately 140. The pore diameter of the porous plate 2 is approximately 0.4 cm.

The ratio between upper area T of the porous plate 2 including the upper areas of the pores of the porous plate 2, and total effective cross-sectional area Q of the pores is T/Q = approximately 470.

Interval k between the guide 4 closest to the internal wall face of the evaporation zone 5 and the internal wall face is approximately 15 cm.

The ratio between space volume V (approximately 3.17 $m^3$) where the liquid can exist in the liquid supply zone 3 from liquid feed port 1 (junction between the feed port and the upper internal wall of the liquid supply zone) to the upper face of the porous plate 2, and upper area T (approximately 19.63 $m^2$) of the porous plate including the upper areas of the pores, i.e., the value of V/T, is approximately 0.161 (m).

Space volume Y of the evaporation zone 5 is approximately 222.8 $m^3$, and the ratio between the space volume V where a liquid can exist in the liquid supply zone 3 from the liquid feed port 1 to the upper face of the porous plate 2, and the space volume Y of the evaporation zone 5, i.e., the value of Y/V, is approximately 70.

In Example 1, the second guide-contact flow-down type polymerization apparatuses 48A and 48B in the aromatic polycarbonate manufacturing apparatus satisfied all of the formula (I) to the formula (XV) mentioned above.

The second guide-contact flow-down type polymerization apparatuses 48A and 48B have the same structure of the supply zone 3 as that of the first guide-contact flow-down type polymerization apparatus 42.

The ratio between total external surface area S1 ($m^2$) of the guides 4 in the first guide-contact flow-down type polymerization apparatus 42 and total external surface area S2 ($m^2$) of the guides 4 in one second guide-contact flow-down type polymerization apparatus is S1/S2 = 750/250 = 3.

The whole materials of the inert gas absorption apparatuses and the first and second guide-contact flow-down type polymerization apparatuses mentioned above are stainless steel except for the discharge pump 8.

Aromatic polycarbonate was manufactured using an aromatic polycarbonate manufacturing apparatus in which, as shown in Figure 6, two inert gas absorption apparatuses (first inert gas absorption apparatus 39 and second inert

gas absorption apparatus 44) and two guide-contact flow-down type polymerization apparatuses (first guide-contact flow-down type polymerization apparatus 42 and second guide-contact flow-down type polymerization apparatuses 48A and 48B) were arranged in series for the connection of polymerization equipment in the order of the first inert gas absorption apparatus 39, the first guide-contact flow-down type polymerization apparatus 42, the second inert gas absorption apparatus 44, and the second guide-contact flow-down type polymerization apparatuses (these two apparatuses were arranged in parallel).

The mixing tank 31 (internal capacity: 120 $m^3$) was charged with 40 tons of melted diphenyl carbonate (DPC-1) of 160°C.

Subsequently, potassium hydroxide as a catalyst was added at 120 ppb by mass in terms of the amount of potassium per 45 tons of bisphenol A (BPA-1), and bisphenol A was added thereto over 1.8 hours while the temperature of the mixed liquid within the mixing tank was kept at 100°C or higher.

The amount of the bisphenol A added was 44.6 tons.

Subsequently, 3.95 tons of diphenyl carbonate were further added thereto such that the molar ratio of the diphenyl carbonate to the bisphenol A was 1.05. The amount of the diphenyl carbonate added was weighed using a Coriolis mass flowmeter, and the amount of the bisphenol A added was weighed using a measuring hopper provided with a load cell meter.

At the point in time when the temperature of the mixed liquid reached 180°C, the mixed liquid was transferred to the dissolved mixture reservoir (internal capacity: 120 $m^3$) 33A over 1 hour.

The reaction mixture retained for 4 to 6 hours in the dissolved mixture reservoir 33A was filtered at a flow rate of 9 ton/hr through two polymer filters differing in pore diameter (not shown; pore diameter: 5 $\mu$m on the upstream side and 2.5 $\mu$m on the downstream side) arranged in series between the dissolved mixture reservoir 33A and the stirring vessel type first polymerization vessel 35.

The reaction mixture thus filtered was heated in a preheater (not shown) and supplied to the stirring vessel type first polymerization vessel 35. The liquid temperature at the exit of the preheater was 230°C.

At the point in time when the reaction mixture in the dissolved mixture reservoir 33A was decreased to a level lower than a predetermined value, the source of supply of the reaction mixture to the stirring vessel type first polymerization vessel 35 was switched from the dissolved mixture reservoir 33A to the dissolved mixture reservoir 33B. The supply of the reaction mixture to the stirring vessel type first polymerization vessel 35 was continuously performed by repeating the operation of alternately switching the source of supply between the dissolved mixture reservoirs 33A and 33B every 6.2 hours.

In both the dissolved mixture reservoirs 33A and 33B, an internal coil and jacket were placed, and 180°C was retained.

Stirring was performed under reduced pressure in the stirring vessel type first polymerization vessel 35 and the stirring vessel type second polymerization vessel 37 where the reaction mixture was polymerized while generated phenol was removed to obtain a prepolymer.

In this respect, the stirring vessel type first polymerization vessel 35 had a temperature of 230°C and a pressure of 13.3 kPaA, and the stirring vessel type second polymerization vessel 36 had a temperature of 270°C and a pressure of 2.66 kPaA.

The obtained melted aromatic polycarbonate prepolymer (number-average molecular weight Mn: 3,100) was continuously supplied to the supply zone 3 from the liquid feed port 1 of the first inert gas absorption apparatus 39 through the supply pump 38.

The prepolymer continuously supplied to the inert gas absorption zone 15 which was an internal space through the porous plate 2 serving as a distributor plate of the first inert gas absorption apparatus 39 absorbed an inert gas while flowing down along the guides 4.

The pressure of the inert gas absorption zone 15 which was an internal space of the first inert gas absorption apparatus 39 was kept at 180 kPaA by supplying nitrogen gas from the inert gas supply port 9.

The melted prepolymer (which contained 0.04 NL of nitrogen per kg of the melted prepolymer) that dropped from the lower parts of the guides 4 to a tapered lower part 11 of the casing of the first inert gas absorption apparatus 39 was continuously discharged through the discharge pump 8 (in Figure 6, which corresponds to reference number 40) such that the amount was almost constant at the bottom of the apparatus. Since the pressure of the melted prepolymer entering the pressure regulating valve 41 located in the liquid feed port 1 of the first guide-contact flow-down type polymerization apparatus 42 was 32 kPaA under a fully open condition of the pressure regulating valve, the melted prepolymer was continuously supplied, with the pressure regulating valve fully opened, to the liquid supply zone 3 through the liquid feed port 1 of the first guide-contact flow-down type polymerization apparatus 42.

The pressure of the evaporation zone 5 which was an internal space of the first guide-contact flow-down type polymerization apparatus 42 was kept at 500 PaA through the vacuum vent 6.

The melted aromatic polycarbonate prepolymer with an elevated degree of polymerization (number-average molecular weight Mn: 5,800) that dropped from the lower parts of the guides 4 to a tapered lower part 11 of the casing

of the guide-contact flow-down type polymerization apparatus 42 was continuously extracted at a constant flow rate from the liquid discharge port 7 through the discharge pump 8 (in Figure 6, which corresponds to reference number 43) such that the amount was almost constant at the bottom. Subsequently, the extracted prepolymer was continuously supplied to the liquid supply zone 3 of the second inert gas absorption apparatus 44.

The melted prepolymer was continuously supplied to the inert gas absorption zone 15 which was an internal space through the porous plate 2 serving as a distributor plate of the second inert gas absorption apparatus 44.

The melted prepolymer absorbed an inert gas while flowing down along the guides 4.

The pressure of the inert gas absorption zone 15 which was an internal space of the second inert gas absorption apparatus 44 was kept at 75 kPaA by supplying nitrogen gas from the inert gas supply port 9.

The melted prepolymer (which contained 0.05 NL of nitrogen per kg of the melted prepolymer) that dropped from the lower parts of the guides 4 to the bottom casing 11 which was a tapered lower part of the casing of the second inert gas absorption apparatus was divided into two portions (at a ratio of 50:50) by the three-way polymer valve 45 and continuously discharged in a constant amount through the discharge pumps 8 (in Figure 6, which correspond to reference numbers 46A and 46B) such that the amount was almost constant at the bottom. The pressure of the melted prepolymer entering the pressure regulating valves (47A and 47B) located in the liquid feed ports 1 of the second guide-contact flow-down type polymerization apparatuses 48A and 48B was 135 kPA with the pressure regulating valves fully opened, and the melted prepolymer was continuously supplied to the respective supply zones 3.

The melted prepolymer continuously supplied to the evaporation zone 5 which was an internal space through the porous plate 2 serving as a distributor plate in each of the second guide-contact flow-down type polymerization apparatuses 48A and 48B underwent polymerization reaction while flowing down along the guides 4.

The pressure of the evaporation zone 5 which was an internal space of each of the second guide-contact flow-down type polymerization apparatuses 48A and 48B was kept at 50 PaA through the vacuum vent 6.

The aromatic polycarbonate that dropped from the lower parts of the guides 4 to the bottom casing 11 which was a tapered lower part of the casing of each of the second guide-contact flow-down type polymerization apparatuses was continuously extracted as a strand from the post-stage device (50A or 50B) through the discharge pump 8 (in Figure 6, which corresponds to 49A or 49B) such that the amount was almost constant at the bottom. The strand was cooled and then cut to obtain aromatic polycarbonate pellets.

The production amount in each of the polymerization apparatuses was 2.5 ton/hr (a total of 5.0 ton/hr).

No additive was added.

Pellets for measurements were collected 150 hours after the start of manufacturing.

Each measurement or test was conducted using the aromatic polycarbonate obtained from the post-stage device 50A.

Each measurement or test was not carried out as to the post-stage device 50B because the manufacturing conditions were the same as those for the aromatic polycarbonate obtained in the post-stage device 50A.

Tables 1 and 3 show the manufacturing conditions and the measurement results.

[Example 2]

Aromatic polycarbonate pellets were obtained in the same manner as in Example 1 described above except that the pressure of the melted prepolymer was changed as described in Table 1 below by operating the pressure regulating valves (41, 47A, and 47B).

Tables 1 and 3 show the manufacturing conditions and the measurement results.

[Example 3]

A third guide-contact flow-down type polymerization apparatus (48B0) was connected in series with the second guide-contact flow-down type polymerization apparatus 48B as shown in Figure 7. The third guide-contact flow-down type polymerization apparatus 48B0 had the same configuration as that of the second guide-contact flow-down type polymerization apparatus 48B, and no inert gas absorption apparatus was placed between the second guide-contact flow-down type polymerization apparatus 48B and the third guide-contact flow-down type polymerization apparatus 48B0. A valve (47B0) was used under a fully open condition, and the amount of the reaction mixture supplied to the stirring vessel type first polymerization vessel 35 was changed as described in Table 1. The other conditions were carried out in the same manner as in [Example 1] described above to obtain aromatic polycarbonate pellets. Each measurement or test was not carried out as to the second guide-contact flow-down type polymerization apparatus (48A) because the manufactured aromatic polycarbonate had MFR = 10 and differed from the aromatic polycarbonate of the present invention.

The production amount in each of the polymerization apparatuses was 4.0 ton/hr (a total of 8.0 ton/hr).

Tables 1 and 3 show the manufacturing conditions and the measurement results.

[Examples 4 to 6] and [Comparative Examples 1 to 4]

The molar ratio of DPC-1 to BPA-1, the amount of the catalyst added, the amount of the reaction mixture supplied to the stirring vessel type first polymerization vessel 35, and the reaction temperature were changed as described in Tables 1 and 2. The other conditions were carried out in the same manner as in [Example 1] described above to obtain aromatic polycarbonate pellets.
Tables 1 to 4 show the manufacturing conditions and the measurement results.

[Comparative Example 5]

The following polycarbonate resin was used.
Novarex M7027BF (manufactured by Mitsubishi Engineering-Plastics Corp.)
Its hue was not measured because this resin was colored blue.
Table 5 below shows the measurement results.

[Comparative Example 6]

The following polycarbonate resin was used.
Panlite K-1300Y (manufactured by Teijin Ltd.)
Its hue was not measured because this resin was colored blue.
Table 5 below shows the measurement results.

[Table 1]

| | Example 1 | Example 2 | Example 3 | Example 4 | Example 5 | Example 6 |
|---|---|---|---|---|---|---|
| Molar ratio of DPC-1 to BPA-1 | 1.05 | 1.05 | 1.05 | 1.10 | 1.05 | 1.02 |
| Amount of catalyst added (amount of potassium based on DPC) [wtppb] | 120 | 120 | 120 | 120 | 120 | 140 |
| Amount of reaction mixture supplied to stirring vessel type first polymerization vessel 35 [ton/h] | 8.8 | 8.8 | 14.0 | 8.8 | 8.8 | 8.2 |
| Switchinq time of dissolved mixture reservoirs 33A and 33B [h] | 6.2 | 6.2 | 3.9 | 6.2 | 6.2 | 5.8 |
| Reaction temperature of stirring vessel type first polymerization vessel [°C] | 230 | 230 | 230 | 230 | 230 | 230 |
| Pressure in stirring vessel type first polymerization vessel [kPaA] | 13.3 | 13.3 | 13.3 | 13.3 | 13.3 | 13.3 |
| Reaction temperature of stirring vessel type second polymerization vessel [°C] | 275 | 275 | 275 | 275 | 275 | 278 |
| Pressure in stirring vessel type second polymerization vessel [kPaA] | 2.66 | 2.66 | 2.66 | 2.66 | 2.66 | 2.66 |
| Pressure of melted prepolymer to be supplied to pressure regulating valve 41 [kPaA] | 38 | 200 | 31 | 35 | 38 | 38 |
| Mn of prepolymer supplied to first guide-contact flow-down type polymerization apparatus | 3,100 | 3,100 | 2,700 | 3,000 | 3,100 | 3,400 |
| Pressure in first guide-contact flow-down type polymerization apparatus [PaA] | 500 | 500 | 500 | 500 | 500 | 500 |

(continued)

| | | Example 1 | Example 2 | Example 3 | Example 4 | Example 5 | Example 6 |
|---|---|---|---|---|---|---|---|
| Reaction temperature of first guide-contact flow-down type polymerization apparatus [°C] | | 275 | 275 | 275 | 275 | 278 | 278 |
| Pressure of melted prepolymer to be supplied to pressure regulating valve 47A [kPaA] | | 135 | 220 | 122 | 133 | 131 | 140 |
| Mn of prepolymer supplied to second guide-contact flow-down type polymerization apparatus | | 5,800 | 5,800 | 5,300 | 5,700 | 5,900 | 6,200 |
| Pressure in second guide-contact flow-down type polymerization apparatus [PaA] | | 45 | 45 | 45 | 45 | 45 | 45 |
| Reaction temperature of second guide-contact flow-down type polymerization apparatus [°C] | | 275 | 275 | 275 | 275 | 278 | 278 |
| Pressure in third guide-contact flow-down type polymerization apparatus [PaA] | | - | - | 45 | - | - | - |
| Reaction temperature of third guide-contact flow-down type polymerization apparatus [°C] | | - | - | 280 | - | - | - |
| Production Amount of polycarbonate (total of 48A and 48B) [ton/h] | | 5.0 | 5.0 | 8.0 | 5.0 | 5.0 | 4.7 |
| MFR [g/10 min] | | 2.5 | 2.4 | 2.7 | 2.6 | 2.4 | 2.3 |
| Ratio of total amount of substance of branched structures [% by mol] | | 1.08 | 1.07 | 1.11 | 1.02 | 1.24 | 1.75 |
| Value of formula (1) | | 0.21 | 0.20 | 0.21 | 0.17 | 0.21 | 0.22 |
| Value of formula (2) | | 0.81 | 0.80 | 0.83 | 0.85 | 0.87 | 1.01 |
| Value of formula (3) | | 0.72 | 0.71 | 0.74 | 0.41 | 0.74 | 0.82 |
| Value of formula (4) | | 5.02 | 5.00 | 5.04 | 4.83 | 5.08 | 5.17 |
| Hue [b*] | | 0.32 | 0.32 | 0.31 | 0.30 | 0.42 | 0.48 |
| The number of fisheyes [number/5 $m^2$] | | 45 | 47 | 38 | 50 | 60 | 110 |
| Moldability of water bottle | Whole water bottle: 25 cm from bottom | A | A | A | A | A | A |
| | Whole water bottle: 12 cm from bottom | A | A | A | A | A | A |
| | Handle part | A | A | A | A | A | B |
| Bottle strength | | A | A | A | A | A | A |

[Table 2]

| | Comparative Example 1 | Comparative Example 2 | Comparative Example 3 | Comparative Example 4 |
|---|---|---|---|---|
| Molar ratio of DPC-1 to BPA-1 | 1.15 | 1.05 | 1.05 | 1.10 |
| Amount of catalyst added (amount of potassium based on DPC) [wtppb] | 120 | 140 | 120 | 120 |
| Amount of reaction mixture supplied to stirring vessel type first polymerization vessel 35 [ton/h] | 9.7 | 10.0 | 11.0 | 5.3 |
| Switchinq time of dissolved mixture reservoirs 33A and 33B [h] | 5.6 | 5.5 | 5.5 | 10.3 |
| Reaction temperature of stirring vessel type first polymerization vessel [°C] | 230 | 230 | 230 | 230 |
| Pressure in stirring vessel type first polymerization vessel [kPaA] | 13.3 | 13.3 | 13.3 | 13.3 |
| Reaction temperature of stirring vessel type second polymerization vessel [°C] | 275 | 275 | 270 | 275 |
| Pressure in stirring vessel type second polymerization vessel [kPaA] | 2.66 | 2.66 | 2.66 | 2.66 |
| Pressure of melted prepolymer to be supplied to pressure regulating valve 41 [kPaA] | 35 | 33 | 30 | 30 |
| Mn of prepolymer supplied to first guide-contact flow-down type polymerization apparatus | 3,000 | 3,200 | 2,600 | 2,800 |
| Pressure in first guide-contact flow-down type polymerization apparatus [PaA] | 500 | 500 | 500 | 700 |
| Reaction temperature of first guide-contact flow-down type polymerization apparatus [°C] | 275 | 275 | 270 | 275 |
| Pressure of melted prepolymer to be supplied to pressure regulating valve 47A [kPaA] | 133 | 128 | 110 | 115 |
| Mn of prepolymer supplied to second guide-contact flow-down type polymerization apparatus | 5,600 | 5,900 | 4,700 | 4,900 |
| Pressure in second guide-contact flow-down type polymerization apparatus [PaA] | 45 | 50 | 50 | 70 |
| Reaction temperature of second guide-contact flow-down type polymerization apparatus [°C] | 275 | 275 | 270 | 275 |
| Pressure in third guide-contact flow-down type polymerization apparatus [PaA] | - | - | - | - |
| Reaction temperature of third guide-contact flow-down type polymerization apparatus [°C] | - | - | - | - |
| Production amount of polycarbonate (total of 48A and 48B) [ton/h] | 5.5 | 5.7 | 6.3 | 3.0 |
| MFR [g/10 min] | 2.6 | 2.7 | 5.3 | 2.2 |
| Ratio of total amount of substance of branched structures [% by mol] | 0.96 | 0.46 | 0.42 | 3.2 |
| Value of formula (1) | 0.16 | 0.08 | 0.01 | 0.25 |
| Value of formula (2) | 0.66 | 0.45 | 0.61 | 1.22 |

(continued)

| | | Comparative Example 1 | Comparative Example 2 | Comparative Example 3 | Comparative Example 4 |
|---|---|---|---|---|---|
| Value of formula (3) | | 0.43 | 0.32 | 0.41 | 0.81 |
| Value of formula (4) | | 4.73 | 4.92 | 4.69 | 5.21 |
| Hue [b*] | | 0.30 | 0.45 | 0.29 | 0.62 |
| The number of fisheyes [number/5 $m^2$] | | 47 | 95 | 42 | 210 |
| Moldability of water bottle | Whole water bottle: 25 cm from bottom | A | C | D | D |
| | Whole water bottle: 12 cm from bottom | B | C | D | D |
| | Handle part | C | C | D | D |
| Bottle strength | | B | B | C | C |

[Table 3]

| | | Example 1 | Example 2 | Example 3 | Example 4 | Example 5 | Example 6 |
|---|---|---|---|---|---|---|---|
| Stirring vessel type second polymerization vessel | Temperature [°C] | 275 | 275 | 275 | 275 | 278 | 278 |
| | Residence time [hr] | 2.4 | 2.4 | 1.5 | 2.4 | 2.4 | 2.7 |
| Piping | Temperature [°C] | 275 | 275 | 275 | 275 | 278 | 278 |
| | Residence time [hr] | 0.16 | 0.16 | 0.10 | 0.16 | 0.16 | 0.16 |
| First inert gas absorption apparatus | Temperature [°C] | 275 | 275 | 275 | 275 | 278 | 278 |
| | Residence time [hr] | 0.3 | 0.3 | 0.2 | 0.3 | 0.3 | 0.3 |
| Piping | Temperature [°C] | 275 | 275 | 275 | 275 | 278 | 278 |
| | Residence time [hr] | 0.16 | 0.16 | 0.10 | 0.16 | 0.16 | 0.16 |
| First guide-contact flow-down type polymerization apparatus | Temperature [°C] | 275 | 275 | 275 | 275 | 278 | 278 |
| | Residence time [hr] | 2.3 | 2.3 | 1.5 | 2.2 | 2.3 | 2.1 |
| Piping | Temperature [°C] | 275 | 275 | 275 | 275 | 278 | 278 |
| | Residence time [hr] | 0.16 | 0.16 | 0.10 | 0.16 | 0.16 | 0.16 |
| Second inert gas absorption apparatus | Temperature [°C] | 275 | 275 | 275 | 275 | 278 | 278 |
| | Residence time [hr] | 0.3 | 0.3 | 0.2 | 0.3 | 0.3 | 0.3 |

(continued)

| | | Example 1 | Example 2 | Example 3 | Example 4 | Example 5 | Example 6 |
|---|---|---|---|---|---|---|---|
| Piping | Temperature [°C] | 275 | 275 | 275 | 275 | 278 | 278 |
| | Residence time [hr] | 0.16 | 0.16 | 0.10 | 0.16 | 0.16 | 0.16 |
| Second guide-contact flow-down type polymerization apparatus | Temperature [°C] | 275 | 275 | 275 | 275 | 278 | 278 |
| | Residence time [hr] | 2.8 | 2.8 | 2.1 | 2.6 | 2.8 | 3.0 |
| Piping | Temperature [°C] | - | - | 275 | - | - | - |
| | Residence time [hr] | - | - | 0.1 | - | - | - |
| Third guide-contact flow-down type polymerization apparatus | Temperature [°C] | - | - | 275 | - | - | - |
| | Residence time [hr] | - | - | 2.4 | - | - | - |
| Total residence time that attained 235°C or higher in manufacturing apparatus [h] | | 8.74 | 8.74 | 8.30 | 8.44 | 8.74 | 9.04 |
| Value of formula (9) | | 21.3 | 21.3 | 20.5 | 20.6 | 22.3 | 23.0 |

[Table 4]

| | | Comparative Example 1 | Comparative Example 2 | Comparative Example 3 | Comparative Example 4 |
|---|---|---|---|---|---|
| Stirring vessel type second polymerization vessel | Temperature [°C] | 275 | 275 | 270 | 270 |
| | Residence time [hr] | 2.2 | 2.0 | 1.8 | 3.1 |
| Piping | Temperature [°C] | 275 | 275 | 270 | 275 |
| | Residence time [hr] | 0.14 | 0.11 | 0.12 | 0.27 |
| First inert gas absorption apparatus | Temperature [°C] | 275 | 275 | 270 | 275 |
| | Residence time [hr] | 0.3 | 0.2 | 0.3 | 0.51 |
| Piping | Temperature [°C] | 275 | 275 | 270 | 275 |
| | Residence time [hr] | 0.14 | 0.11 | 0.12 | 0.27 |
| First guide-contact flow-down type polymerization apparatus | Temperature [°C] | 275 | 275 | 270 | 275 |
| | Residence time [hr] | 2.0 | 1.7 | 1.6 | 3.7 |
| Piping | Temperature [°C] | 275 | 275 | 270 | 275 |
| | Residence time [hr] | 0.14 | 0.11 | 0.12 | 0.27 |

(continued)

| | | Comparative Example 1 | Comparative Example 2 | Comparative Example 3 | Comparative Example 4 |
|---|---|---|---|---|---|
| Second inert gas absorption apparatus | Temperature [°C] | 275 | 275 | 270 | 275 |
| | Residence time [hr] | 0.3 | 0.2 | 0.3 | 0.51 |
| Piping | Temperature [°C] | 275 | 275 | 270 | 275 |
| | Residence time [hr] | 0.14 | 0.11 | 0.12 | 0.27 |
| Second guide-contact flow-down type polymerization apparatus | Temperature [°C] | 275 | 275 | 270 | 275 |
| | Residence time [hr] | 2.3 | 2.0 | 1.7 | 4.1 |
| Piping | Temperature [°C] | - | - | - | - |
| | Residence time [hr] | - | - | - | - |
| Third guide-contact flow-down type polymerization apparatus | Temperature [°C] | - | - | - | - |
| | Residence time [hr] | - | - | - | - |
| Total residence time that attained 235°C or higher in manufacturing apparatus [h] | | 7.66 | 6.54 | 6.08 | 13.00 |
| Value of formula (9) | | 18.7 | 16.0 | 13.8 | 31.7 |

[Table 5]

| | | Comparative Example 5 | Comparative Example 6 |
|---|---|---|---|
| MFR [g/10 min] | | 3.4 | 3.3 |
| Ratio of total amount of substance of branched structures [% by mol] | | 0.69 | 0.00 |
| Value of formula (1) | | 0.12 | 0.14 |
| Value of formula (2) | | 0.55 | 0.62 |
| Value of formula (3) | | 0.40 | 0.49 |
| Value of formula (4) | | 4.84 | 4.89 |
| The number of fisheyes [number/5 $m^2$] | | 61 | 31 |
| Moldability of water bottle | Whole water bottle: 25 cm from bottom | B | D |
| | Whole water bottle: 12 cm from bottom | B | D |
| | Handle part | B | D |
| Bottle strength | | A | C |

The present application is based on Japanese Patent Application No. 2021-164866 filed on October 6, 2021 in the Japan Patent Office, the contents of which are incorporated herein by reference.

Industrial Applicability

The aromatic polycarbonate of the present invention has industrial applicability in the fields of aromatic polycarbonate that is excellent in impact resistance, has few fisheyes, and has excellent hue while moldability is improved, and manufacturing thereof in large-scale blow molding, extrusion molding, profile extrusion molding, or hollow sheet molding.

Reference Signs List

1: Liquid feed port
2: Porous plate
3: Liquid supply zone
4: Guide
5: Evaporation zone which is an internal space
6: Vacuum vent
7: Liquid discharge port
8: Discharge pump
9: Inert gas supply port
10: Side casing
11: Bottom casing
12: Extraction port
15: Inert gas absorption zone which is an internal space
20: Flow path control component
21: Pore part of the porous plate
22: Internal sidewall face of the liquid supply zone
23: Upper internal wall face of the liquid supply zone
31: Mixing tank
32, 34A, and 34B: Transfer pump
33A and 33B: Dissolved mixture reservoir
35: First polymerization vessel
36, 38, 40, 43, 46A, 46B, 49A, 49B, and 49B0: Supply pump
37: Second polymerization vessel
39: First inert gas absorption apparatus
41, 47A, and 47B: Pressure regulating valve
42: First guide-contact flow-down type polymerization apparatus
44: Second inert gas absorption apparatus
45: Three-way polymer valve
47B0: Valve
48A and 48B: Second guide-contact flow-down type polymerization apparatus
48B0: Third guide-contact flow-down type polymerization apparatus
50A: Post-stage device
50B: Post-stage device

## Claims

**1.** An aromatic polycarbonate wherein

indicators of change in elongational viscosity measured at an elongation rate of 0.005 $sec^{-1}$ for a specimen 127 mm long, 12.7 mm wide, and 0.8 mm thick under a temperature condition of 280°C satisfy the following <condition (i)> and <condition (ii)>, and
MFR measured at a temperature of 300°C under a load of 1.2 kg is 1.5 to 4.5 (g/10 min):

<condition (i)>
a value of an indicator of change in elongational viscosity represented by the following formula (1):

($\log_{10}$ (Elongational viscosity [Pa·s] at 0.80 seconds) - $\log_{10}$ (Elongational viscosity [Pa·s] at 0.30 seconds)) / ($\log_{10}0.80 - \log_{10}0.30$)    formula (1)

in interval A (interval from 0.30 seconds to 0.80 seconds after the start of elongation) is 0.10 to 0.30; and
<condition (ii)>
a value of an indicator of change in elongational viscosity represented by the following formula (2):

($\log_{10}$ (Elongational viscosity [Pa·s] at 8.0 seconds) - $\log_{10}$ (Elongational viscosity [Pa·s] at 3.0 seconds)) / ($\log_{10}8.0 - \log_{10}3.0$)    formula (2)

in interval B (interval from 3.0 seconds to 8.0 seconds after the start of elongation) is 0.70 to 1.1.

2. The aromatic polycarbonate according to claim 1, wherein the following <condition (iii)> and <condition (iv)> are further satisfied:

<condition (iii)>
a value of an indicator of increase in elongational viscosity represented by the following formula (3):

($\log_{10}$ (Elongational viscosity [Pa·s] at 8.0 seconds) - $\log_{10}$ (Elongational viscosity [Pa·s] at 0.30 seconds)    formula (3)

in an interval from 0.30 seconds to 8.0 seconds after the start of elongation is 0.45 to 0.90; and
<condition (iv)>
a value of an indicator of an elongational viscosity represented by the following formula (4):

$\log_{10}$(Elongational viscosity [Pa·s] at 8.0 seconds)

formula (4)

at 8.0 seconds after the start of elongation is 4.90 to 5.40.

3. The aromatic polycarbonate according to claim 1, wherein
the value of the indicator of change in elongational viscosity represented by the formula (2) is 0.70 to 0.85.

4. The aromatic polycarbonate according to claim 2, wherein
the value of the indicator of increase in elongational viscosity represented by the formula (3) is 0.45 to 0.75.

5. The aromatic polycarbonate according to claim 2, wherein
the value of the indicator of an elongational viscosity represented by the formula (4) is 4.90 to 5.05.

6. The aromatic polycarbonate according to claim 1, wherein the aromatic polycarbonate has a repeat unit represented by the following general formula (5):

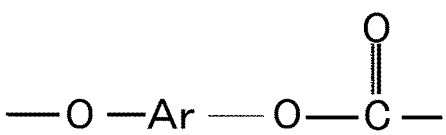

(5)

wherein Ar represents a divalent aromatic residue.

**7.** The aromatic polycarbonate according to claim 1, wherein the aromatic polycarbonate

has a repeat unit represented by the following general formula (5) in a main chain and a branched chain, and has one or more of any branched structure selected from the group consisting of branched structures represented by the following general formulas (6), (7), and (8) in the main chain and the branched chain, wherein a ratio of a total amount of substance of the branched structures to an amount of substance of the repeat unit represented by the following general formula (5) is 0.9% by mol to 5.0% by mol:

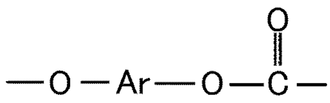 (5)

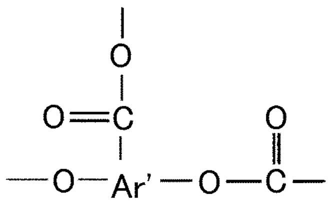 (6)

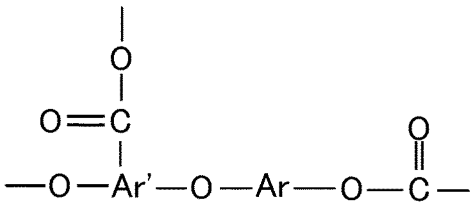 (7)

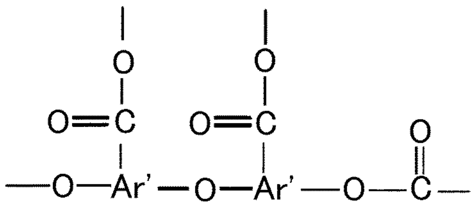 (8)

wherein Ar represents a divalent aromatic residue, and Ar' represents a trivalent aromatic residue.

**8.** The aromatic polycarbonate according to claim 1, wherein the aromatic polycarbonate

has a repeat unit represented by the following general formula (5) in a main chain and a branched chain, and has one or more of any branched structure selected from the group consisting of branched structures represented by the following general formulas (6), (7), and (8) in the main chain and the branched chain, wherein a ratio of a total amount of substance of the branched structures to an amount of substance of the repeat unit represented by the following general formula (5) is 0.9% by mol to 5.0% by mol, and the following <condition (iii)> and <condition (iv)> are further satisfied:

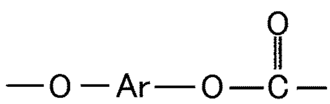 (5)

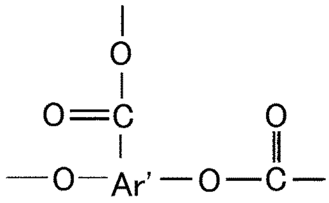

(6)

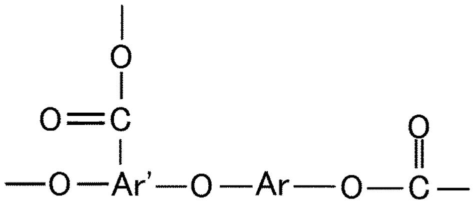

(7)

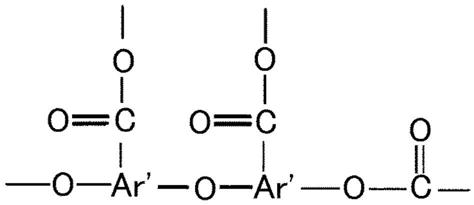

(8)

wherein Ar represents a divalent aromatic residue, and Ar' represents a trivalent aromatic residue,

<condition (iii)>
a value of an indicator of increase in elongational viscosity represented by the following formula (3):

$(\log_{10}$ (Elongational viscosity [Pa·s] at 8.0 seconds) - $\log_{10}$ (Elongational viscosity [Pa·s] at 0.30 seconds) formula (3)

in an interval from 0.30 seconds to 8.0 seconds after the start of elongation is 0.45 to 0.90; and
<condition (iv)>
a value of an indicator of an elongational viscosity represented by the following formula (4):

$\log_{10}$(Elongational viscosity [Pa·s] at 8.0 seconds) formula (4)

at 8.0 seconds after the start of elongation is 4.90 to 5.40.

**9.** The aromatic polycarbonate according to claim 8, wherein the value of the indicator of an elongational viscosity represented by the formula (4) is 4.90 to 5.10.

**10.** A method for manufacturing the aromatic polycarbonate according to any one of claims 1 to 9, comprising the steps of:

supplying a nitrogen-absorbed aromatic polycarbonate prepolymer to a guide-contact flow-down type polymerization apparatus constituting an aromatic polycarbonate manufacturing apparatus; and
allowing the prepolymer to flow down along an external surface of a guide having no heating source in itself to evaporate a low-boiling substance, wherein
in process ranges where a temperature of a polymerization raw material is 235°C or higher in a whole process of the method for manufacturing the aromatic polycarbonate, value K represented by the following formula (9):

$$K = \sum_{i=1}^{n} (Ti/220)^4 \times Hi \quad (9)$$

wherein

i: a process range number given in an arbitrary order to a plurality of process ranges in the manufacturing method
Ti: an average temperature (°C) of the polymerization raw material in the i-th process range
Hi: an average residence time (hr) of the polymerization raw material in the i-th process range is in a range of 16.5 to 25.0.

**11.** The method for manufacturing the aromatic polycarbonate according to claim 10, wherein

the evaporation of the low-boiling substance is performed using the guide-contact flow-down type polymerization apparatus, and
the guide-contact flow-down type polymerization apparatus satisfies the following <condition (1)> to <condition (9)>:

<condition (1)>
having: a liquid feed port; a liquid supply zone for supplying a liquid to a guide of an evaporation zone through a porous plate; the evaporation zone provided with a plurality of guides extending downward from the porous plate in a space surrounded by the porous plate, a side casing, and a bottom casing; a vacuum vent disposed in the evaporation zone; and a liquid discharge port disposed in a lowermost part of the bottom casing;
<condition (2)>
a flow path control component having a function by which a liquid to be supplied from the liquid feed port to the porous plate flows in a direction from a peripheral part of the porous plate toward a central part in the liquid supply zone is placed in the liquid supply zone;
<condition (3)>
internal cross-sectional area A ($m^2$) on a horizontal plane of the side casing of the evaporation zone satisfies the following formula (I):

$$0.7 \leq A \leq 300 \quad \text{formula (I);}$$

<condition (4)>
a ratio between the internal cross-sectional area A ($m^2$) and internal cross-sectional area B ($m^2$) on a horizontal plane of the liquid discharge port satisfies the following formula (II):

$$20 \leq A/B \leq 1000 \quad \text{formula (II);}$$

<condition (5)>
the bottom casing constituting the bottom of the evaporation zone is connected to the upper side casing at an angle of C degrees with respect to the inside thereof, wherein the angle of C (°) satisfies the following formula (III):

$$110 \leq C \leq 165 \quad \text{formula (III);}$$

<condition (6)>
length h (cm) of the guide satisfies the formula (IV) :

$$150 \leq h \leq 5000 \quad \text{formula (IV);}$$

<condition (7)>
total external surface area S ($m^2$) of all the plurality of guides satisfies the formula (V):

$$2 \leq S \leq 50000 \quad \text{formula (V);}$$

<condition (8)>
average number N of pores per $m^2$ of the porous plate (number/$m^2$) satisfies the formula (VI):

$$50 \leq N \leq 3000 \quad \text{formula (VI);}$$

and
<condition (9)>
a ratio between upper area T ($m^2$) of the porous plate including upper areas of the pores of the porous plate and total effective cross-sectional area Q ($m^2$) of the pores satisfies the following formula (VII):

$$50 \leq T/Q \leq 3000 \quad \text{formula (VII).}$$

**12.** The method for manufacturing the aromatic polycarbonate according to claim 10, wherein an amount of a liquid used in the evaporation treatment of the low-boiling substance is 1 ton or more per hour.

**13.** The method for manufacturing the aromatic polycarbonate according to claim 11, wherein angle E degrees (°) formed by an internal sidewall face of the liquid supply zone and the porous plate satisfies the following formula (VIII):

$$100 \leq E < 180 \quad \text{formula (VIII).}$$

**14.** The method for manufacturing the aromatic polycarbonate according to claim 11, wherein distance k (cm) between the guide closest to an internal wall face of the side casing of the evaporation zone and the internal wall face satisfies the following formula (IX):

$$5 \leq k \leq 50 \quad \text{formula (IX).}$$

**15.** The method for manufacturing the aromatic polycarbonate according to claim 11, wherein

the side casing of the evaporation zone is in a cylindrical shape with internal diameter D (cm) and length L (cm), the bottom casing connected to an underpart of the side casing is in a cone shape, and the liquid discharge port at the lowermost part of the bottom casing in a cone shape is in a cylindrical shape with internal diameter d (cm), wherein
D, L, and d satisfy the following formulas (X), (XI), (XII), and (XIII):

$$100 \leq D \leq 1800 \quad \text{formula (X)}$$

$$5 \leq D/d \leq 50 \quad \text{formula (XI)}$$

$$0.5 \leq L/D \leq 30 \quad \text{formula (XII))}$$

$$h - 20 \leq L \leq h + 300 \quad \text{formula (XIII)}$$

wherein in the formula (XIII), h represents the length of the guide.

**16.** The method for manufacturing the aromatic polycarbonate according to claim 11, wherein space volume V ($m^3$) where a liquid can exist in the liquid supply zone from the liquid feed port to an upper face of the porous plate, and upper area T ($m^2$) of the porous plate including upper areas of the pores of the porous plate satisfy the following formula (XIV):

$$0.02\ (m) \leq V/T \leq 0.5\ (m) \quad \text{formula (XIV)}.$$

**17.** The method for manufacturing the aromatic polycarbonate according to claim 10, wherein

at least one of the guides is in a columnar form with external diameter r (cm), or in a pipe form that inhibits a liquid and/or a gaseous substance from entering the inside, wherein
the external diameter r satisfies the following formula (XV):

$$0.1 \leq r \leq 1 \quad \text{formula (XV)}.$$

**18.** The method for manufacturing the aromatic polycarbonate according to claim 10, wherein

the guide-contact flow-down type polymerization apparatus has the plurality of guides, and
the plurality of guides are joined through a supporting material.

**19.** The method for manufacturing the aromatic polycarbonate according to claim 10, wherein

the plurality of guides are selected from the group consisting of
grid-like or net-like guides in which the individual guides are fixed through a transverse supporting material, steric guides in which the plurality of grid-like or net-like guides are anteroposteriorly arranged and fixed through a transverse supporting material, and jungle gym-like steric guides in which individual guides are anteroposteriorly and laterally fixed through a transverse supporting material.

**20.** The method for manufacturing the aromatic polycarbonate according to claim 11, wherein

the guide-contact flow-down type polymerization apparatus is further connected with at least one guide-contact flow-down type polymerization apparatus that satisfies the <condition (1)> to <condition (9)>, wherein
the two or more guide-contact flow-down type polymerization apparatuses are connected in series, in parallel, or both in series and in parallel.

**21.** The method for manufacturing the aromatic polycarbonate according to claim 20, wherein

the guide-contact flow-down type polymerization apparatus is further connected with one guide-contact flow-down type polymerization apparatus that satisfies the <condition (1)> to <condition (9)>, wherein
total external surface area S1 ($m^2$) of the guides of the guide-contact flow-down type polymerization apparatus, and
total external surface area S2 ($m^2$) of the guides of the further connected guide-contact flow-down type polymerization apparatus
satisfy the following formula (XVI):

$$1 \leq S1/S2 \leq 20 \quad \text{(XVI)}.$$

**22.** The method for manufacturing the aromatic polycarbonate according to claim 11, wherein

an inert gas absorption apparatus for allowing an inert gas to be absorbed to a melted aromatic polycarbonate prepolymer before supply to the guide-contact flow-down type polymerization apparatus is placed, wherein
the inert gas-absorbed melted prepolymer is supplied to the guide-contact flow-down type polymerization apparatus such that a pressure thereof within a melted prepolymer supply piping from the inert gas absorption apparatus to the guide-contact flow-down type polymerization apparatus is kept at 15 kPaA to 200 kPaA by a pressure regulating valve placed immediately before the entrance of the guide-contact flow-down type polymerization apparatus.

**23.** The method for manufacturing the aromatic polycarbonate according to claim 21, wherein

in each of the guide-contact flow-down type polymerization apparatus and the further connected guide-contact flow-down type polymerization apparatus,
an inert gas absorption apparatus for allowing an inert gas to be absorbed to a melted aromatic polycarbonate prepolymer before supply to each of the guide-contact flow-down type polymerization apparatuses is placed, wherein
the inert gas-absorbed melted prepolymer is supplied to each of the guide-contact flow-down type polymerization apparatuses such that a pressure thereof within a melted prepolymer supply piping from the inert gas absorption apparatus to each of the guide-contact flow-down type polymerization apparatuses is kept at 15 kPaA to 200 kPaA by a pressure regulating valve placed immediately before the entrance of each of the guide-contact flow-down type polymerization apparatuses.

**24.** A container which is a molded article of the aromatic polycarbonate according to any one of claims 1 to 9, the container having a housing part having a capacity of 3 to 10 gallons.

**25.** The container according to claim 24, wherein the housing part has a handle part formed integrally with the housing part.

**26.** The container according to claim 24, wherein the handle has a hollow space, and the hollow space communicates with an internal space of the housing part.

[Figure 1]

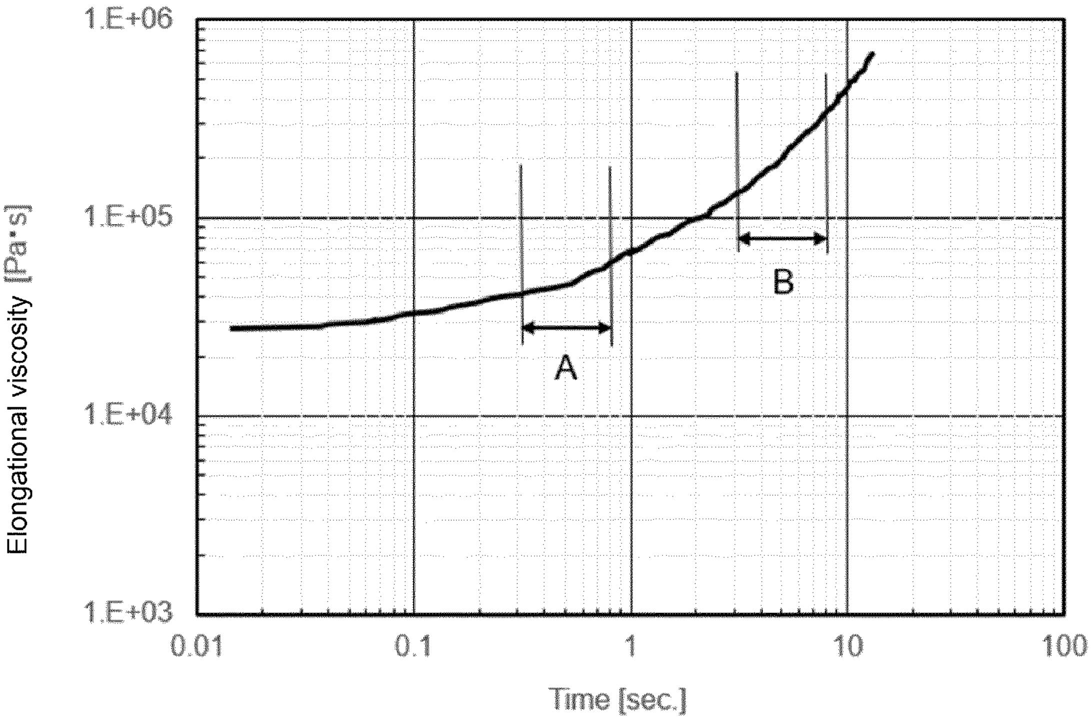
1.E+06
1.E+05
1.E+04
1.E+03
Elongational viscosity [Pa•s]
0.01
0.1
1
10
100
Time [sec.]
A
B

[Figure 2]

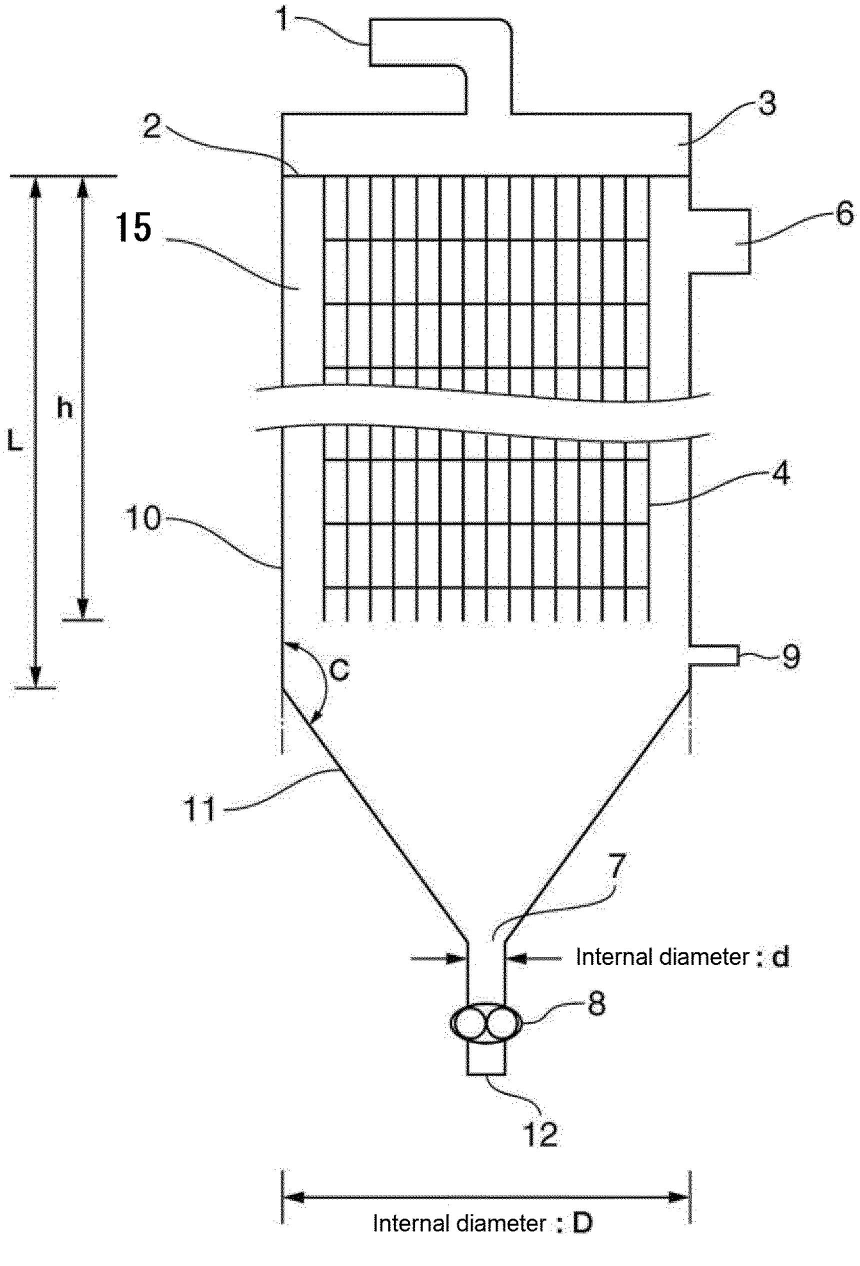
1
2
3
15
6
h
L
4
10
9
C
11
7
Internal diameter : d
8
12
Internal diameter : D

[Figure 3]

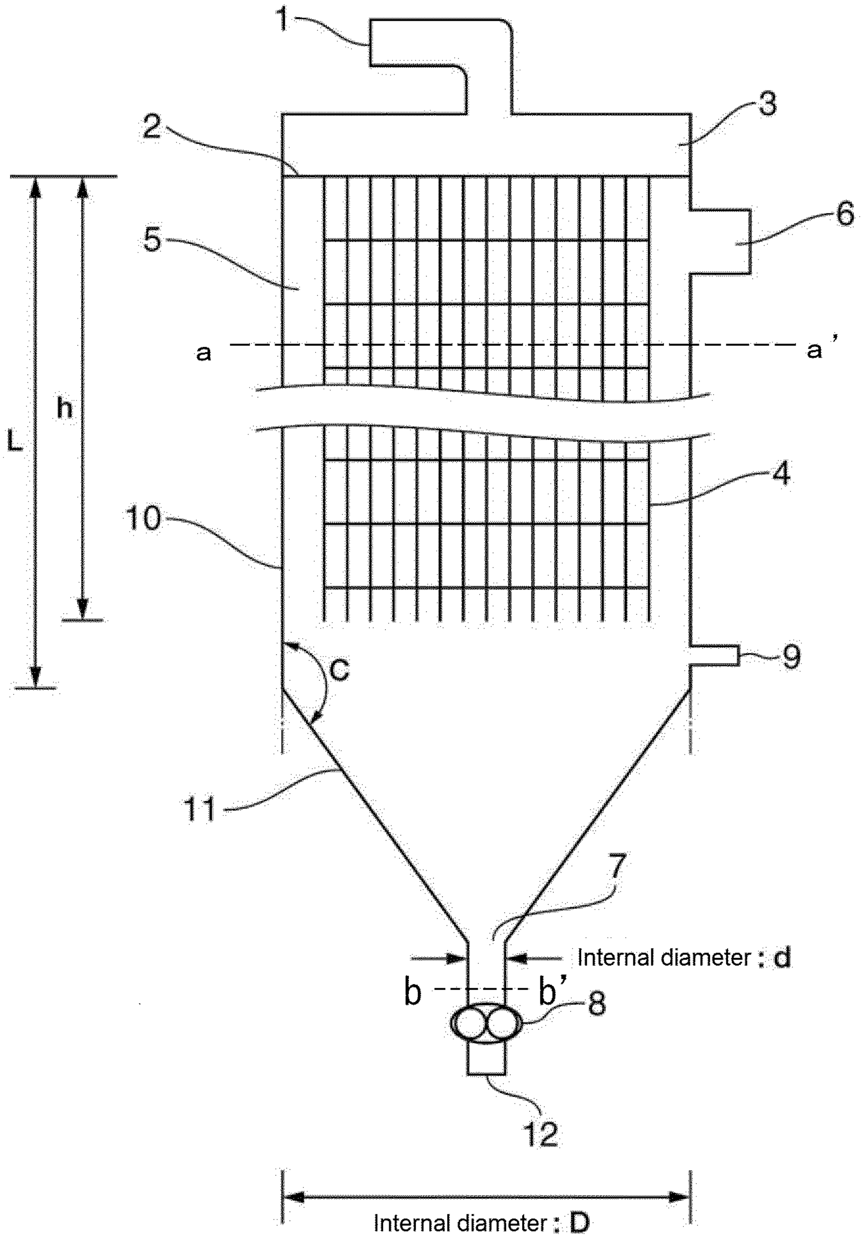
1
2
3
5
6
a
a'
h
L
4
10
9
C
11
7
Internal diameter : d
b
b'
8
12
Internal diameter : D

[Figure 4]

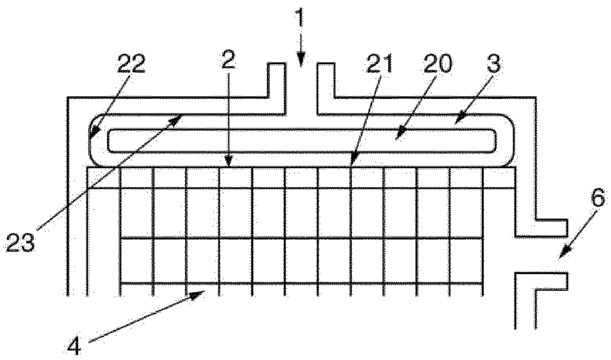


[Figure 5]

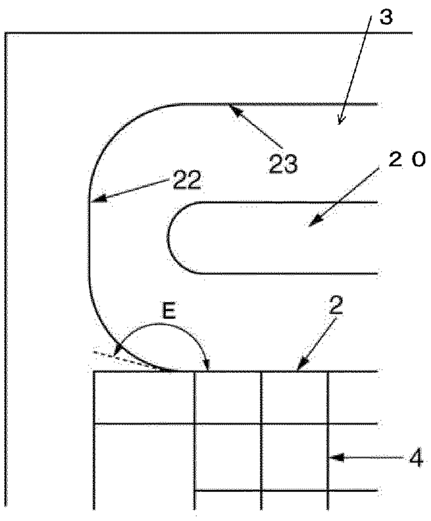

[Figure 6]

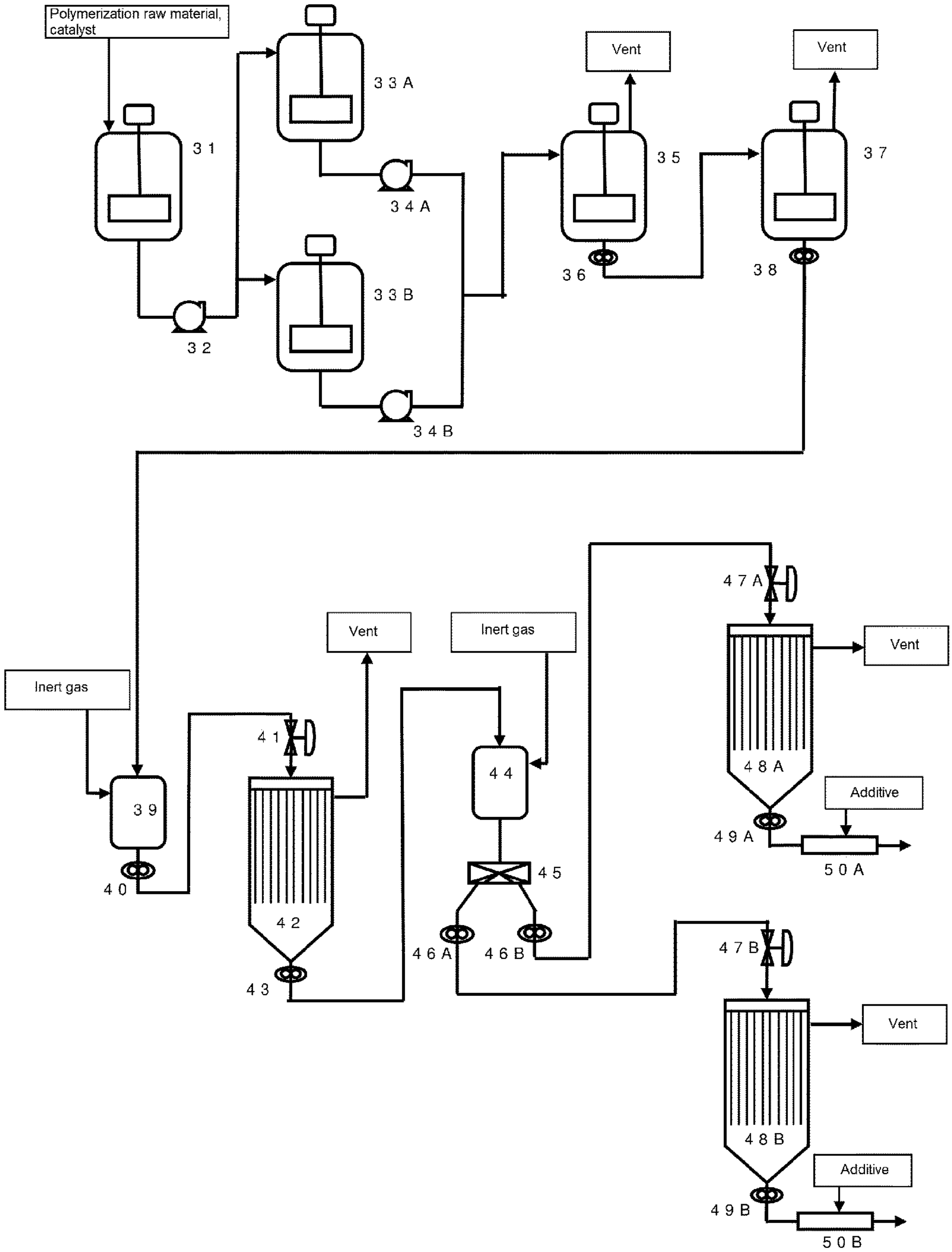
Polymerization raw material, catalyst
3 1
3 2
3 3 A
3 3 B
3 4 A
3 4 B
Vent
3 5
3 6
Vent
3 7
3 8
Inert gas
3 9
4 0
4 1
Vent
4 2
4 3
Inert gas
4 4
4 5
4 6 A
4 6 B
4 7 A
Vent
4 8 A
Additive
4 9 A
5 0 A
4 7 B
Vent
4 8 B
Additive
4 9 B
5 0 B

[Figure 7]

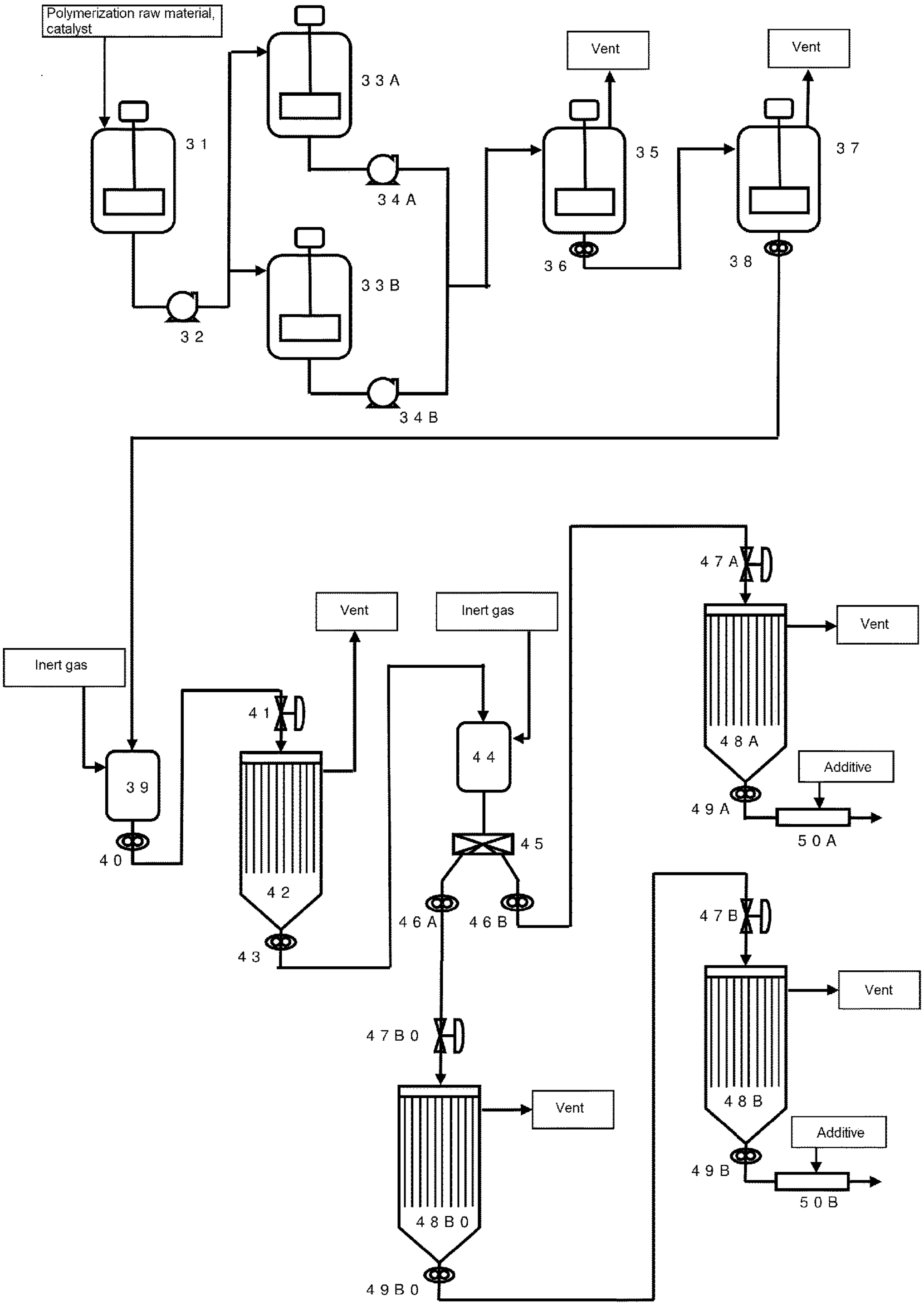

Polymerization raw material, catalyst
31
32
33A
33B
34A
34B
Vent
35
36
Vent
37
38
Inert gas
39
40
41
Vent
42
43
Inert gas
44
45
46A
46B
47A
48A
Vent
Additive
49A
50A
47B
48B
Vent
Additive
49B
50B
47B0
48B0
Vent
49B0

**INTERNATIONAL SEARCH REPORT**

International application No.
**PCT/JP2022/037349**

**A. CLASSIFICATION OF SUBJECT MATTER**

***C08G 64/06***(2006.01)i; ***C08G 64/20***(2006.01)i; ***B65D 1/00***(2006.01)i
FI: C08G64/06; C08G64/20; B65D1/00

According to International Patent Classification (IPC) or to both national classification and IPC

**B. FIELDS SEARCHED**

Minimum documentation searched (classification system followed by classification symbols)

C08G64/06; C08G64/20; B65D1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 97/32916 A1 (ASAHI KASEI KOGYO KK) 12 September 1997 (1997-09-12) claims, examples | 1-26 |
| A | JP 2004-2831 A (MITSUBISHI CHEMICALS CORP.) 08 January 2004 (2004-01-08) claims, examples | 1-26 |
| A | WO 2005/123805 A1 (ASAHI KASEI CHEMICALS CORP.) 29 December 2005 (2005-12-29) claims, examples | 1-26 |
| A | WO 2006/006585 A1 (ASAHI KASEI CHEMICALS CORP.) 19 January 2006 (2006-01-19) claims, examples | 1-26 |
| A | WO 2012/005250 A1 (ASAHI KASEI CHEMICALS CORP.) 12 January 2012 (2012-01-12) claims, examples | 1-26 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 November 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/037349**

| Patent document cited in search report | Publication date (day/month/year) | Patent family member(s) | Publication date (day/month/year) |
|---|---|---|---|
| WO 97/32916 A1 | 12 September 1997 | US 5932683 A<br>claims, examples<br>EP 885912 A1<br>KR 10-1999-0072179 A<br>CN 1206425 A | |
| JP 2004-2831 A | 08 January 2004 | US 2004/0260049 A1<br>claims, examples<br>EP 1500671 A1<br>CN 1564837 A | |
| WO 2005/123805 A1 | 29 December 2005 | US 2007/0148055 A1<br>claims, examples<br>EP 1760108 A1<br>CN 1946760 A<br>KR 10-2007-0046785 A | |
| WO 2006/006585 A1 | 19 January 2006 | US 2007/0255069 A1<br>claims, examples<br>EP 1767517 A1<br>CN 1984868 A | |
| WO 2012/005250 A1 | 12 January 2012 | US 2013/0136883 A1<br>claims, examples<br>EP 2592102 A1<br>CN 102958975 A<br>KR 10-2013-0031324 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4417149 B
- JP 51129493 A
- JP 2003509551 W
- JP 8239466 A
- JP 2004002831 A
- WO 2012005250 A
- WO 2005121213 A
- WO 2006006585 A
- JP 2021164866 A


### Non-patent literature cited in the description


- **KAGAKU SOUCHI SEKKEI.** Chemical Apparatus Design in English) - operation series No. 2, revised, gas absorption. Kagaku Kogyo Co., Ltd, 15 March 1981, 49-54